(19) Europäisches Patentamt
European Patent Office
Office européen des brevets

(11) **EP 2 442 251 B1**

(12) **EUROPÄISCHE PATENTSCHRIFT**

(45) Veröffentlichungstag und Bekanntmachung des Hinweises auf die Patenterteilung:
**06.07.2016  Patentblatt 2016/27**

(51) Int Cl.:
***G06F 21/00*** *(2013.01)*

(21) Anmeldenummer: **11185026.9**

(22) Anmeldetag: **13.10.2011**

(54) **Individuelle Aktualisierung von Computerprogrammen**

Individual updating of computer programs

Actualisation individuelle de programmes informatiques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.10.2010  DE 102010038179**

(43) Veröffentlichungstag der Anmeldung:
**18.04.2012  Patentblatt 2012/16**

(73) Patentinhaber: **Kobil Systems GmbH
67547 Worms (DE)**

(72) Erfinder:
• **Koyun, Ismet
  67550 Worms (DE)**

• **Ruppert, Markus
  64297 Darmstadt (DE)**
• **Dahmen, Erik
  63329 Egelsbach (DE)**

(74) Vertreter: **Cohausz & Florack
Patent- & Rechtsanwälte
Partnerschaftsgesellschaft mbB
Bleichstraße 14
40211 Düsseldorf (DE)**

(56) Entgegenhaltungen:
**EP-A1- 2 151 782    EP-A2- 1 128 242
DE-A1- 10 318 031**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Gebiet der Erfindung**

Die vorliegende Erfindung betrifft ein Verfahren zur Aktualisierung von Computerprogrammen, beispielsweise von auf einer Datenverarbeitungsanlage gespeicherter Firmware.

**Hintergrund der Erfindung**

Im Stand der Technik sind Lösungen zur Aktualisierung von auf einem elektronischen Gerät gespeicherten Computerprogrammen über ein Netzwerk wie z.B. das Internet bekannt. Insbesondere ist bekannt, ein Datenpaket mit den für die jeweilige Aktualisierung benötigten Daten und Programmen zusammenzustellen und beispielsweise auf einem Server zum Abruf, d.h. zum Download, über das Internet zur Verfügung zu stellen oder das Datenpaket über das Internet an alle elektronischen Geräte, auf denen das zu aktualisierende Computerprogramm gespeichert/installiert ist, zu verteilen.

Wird ein solches Datenpaket von einem Angreifer beispielsweise abgefangen und/oder manipuliert, um z.B. Schadprogramme, wie Viren oder Trojaner, in das Datenpaket einzuschleusen, besteht die Gefahr, dass durch das manipulierte Datenpaket eine Vielzahl von elektronischen Geräten gleichzeitig z.B. mit den Schadprogrammen infiziert werden.

Zwar besteht die Möglichkeit, die Datenpakete zu verschlüsseln oder anderweitig gegen eine Manipulation zu sichern; hat ein Angreifer diese Sicherungsmechanismen jedoch überwunden, so kann er eine Vielzahl von elektronischen Geräten gleichzeitig mit Schadprogrammen infizieren.

EP2151782 beschreibt beispielsweise die Installation von Boot-Software via sicheren Tickets.

**Zusammenfassung einiger beispielhafter Ausgestaltungen der vorliegenden Erfindung** Die vorliegende Erfindung hat sich daher unter anderem die Aufgabe gestellt, die oben genannten Nachteile zu überwinden.

Diese Aufgabe wird gelöst durch ein Verfahren gemäß einem der Patentansprüche 1 und 11. Des Weiteren wird die Aufgabe gelöst durch ein elektronisches Gerät gemäß Patentanspruch 12, eine Datenverarbeitungsanlage gemäß Patentanspruch 13, ein Computerprogramm gemäß Patentanspruch 14 und ein Datenpaket gemäß Patentanspruch 15. Vorteilhafte beispielhafte Ausgestaltungen der Erfindung sind den abhängigen Patentansprüchen zu entnehmen.

Ein erstes erfindungsgemäßes Verfahren umfasst das Verarbeiten eines in einem Datenpaket enthaltenen Computerprogramms oder Computerprogrammteils auf einem elektronischen Gerät nur dann, wenn das Datenpaket einen an das elektronische Gerät und/oder an einen dem elektronischen Gerät zugeordneten Schlüssel angepassten Schlüssel enthält, wobei das Datenpaket ein Datenpaket aus einer Vielzahl von Datenpaketen ist, wobei jedes der Datenpakete aus der Vielzahl von Datenpaketen jeweils das Computerprogramm oder den Computerprogrammteil und einen Schlüssel enthält, wobei das in den Datenpaketen enthaltene Computerprogramm oder der Computerprogrammteil für alle Datenpakete gleich und zum Verarbeiten auf einer Vielzahl von elektronischen Geräten bestimmt ist, wobei das elektronische Gerät ein elektronisches Gerät aus der Vielzahl von elektronischen Geräten ist und wobei der jeweils in einem Datenpaket enthaltene Schlüssel lediglich an eines der elektronischen Geräte und/oder an einen einem der elektronischen Geräte zugeordneten Schlüssel, aber an kein anderes der elektronischen Geräte und/oder an keinen einem anderen der elektronischen Geräte zugeordneten Schlüssel angepasst ist.

Das erste erfindungsgemäße Verfahren umfasst also die folgenden beiden Fälle (i) und (ii) jeweils unabhängig voneinander als auch deren Kombination:

(i) Verarbeiten eines in einem Datenpaket enthaltenen Computerprogramms oder Computerprogrammteils auf einem elektronischen Gerät nur dann, wenn das Datenpaket einen an das elektronische Gerät angepassten Schlüssel enthält, wobei das Datenpaket ein Datenpaket aus einer Vielzahl von Datenpaketen ist, wobei jedes der Datenpakete aus der Vielzahl von Datenpaketen jeweils das Computerprogramm oder der Computerprogrammteil und einen Schlüssel enthält, wobei das in den Datenpaketen enthaltene Computerprogramm oder der Computerprogrammteil für alle Datenpakete gleich und zum Verarbeiten auf einer Vielzahl von elektronischen Geräten bestimmt ist, wobei das elektronische Gerät ein elektronisches Gerät aus der Vielzahl von elektronischen Geräten ist und wobei der jeweils in einem Datenpaket enthaltene Schlüssel lediglich an eines der elektronischen Geräte, aber an kein anderes der elektronischen Geräte angepasst ist.

(ii) Verarbeiten eines in einem Datenpaket enthaltenen Computerprogramms oder Computerprogrammteils auf einem elektronischen Gerät nur dann, wenn das Datenpaket einen an einen dem elektronischen Gerät zugeordneten Schlüssel angepassten Schlüssel enthält, wobei das Datenpaket ein Datenpaket aus einer Vielzahl von Datenpaketen ist, wobei jedes der Datenpakete aus der Vielzahl von Datenpaketen jeweils das Computerprogramm oder den Computerprogrammteil und einen Schlüssel enthält, wobei das in den Datenpaketen enthaltene Computerprogramm oder der Computerprogrammteil für alle Datenpakete gleich und zum Verarbeiten auf einer Vielzahl von elektronischen Geräten bestimmt ist, wobei das elektronische Gerät ein elektronisches Gerät aus der Vielzahl von elektronischen Geräten ist und wobei der jeweils in einem Datenpaket enthaltene Schlüssel lediglich an einen einem der elektronischen Geräte zugeordneten Schlüssel, aber an keinen einem anderen der elektronischen Geräte zugeordneten Schlüssel angepasst ist.

Ein zweites erfindungsgemäßes Verfahren umfasst das Erzeugen einer Vielzahl von Datenpaketen, wobei jedes der Datenpakete jeweils ein Computerprogramm oder einen Computerprogrammteil und einen Schlüssel enthält, wobei das in den Datenpaketen enthaltene Computerprogramm oder der Computerprogrammteil für alle Datenpakete gleich und zur Verarbeitung durch eine Vielzahl von elektronischen Geräten bestimmt ist, wobei das in einem Datenpaket enthaltene Computerprogramm oder der Computerprogrammteil auf einem der elektronischen Geräte nur dann verarbeitbar ist, wenn das Datenpaket einen an das elektronische Gerät und/oder an einen dem elektronischen Gerät zugeordneten Schlüssel angepassten Schlüssel enthält und wobei der jeweils in einem Datenpaket enthaltene Schlüssel lediglich an eines der elektronischen Geräte und/oder an einen einem der elektronischen Geräte zugeordneten Schlüssel, aber an kein anderes der elektronischen Geräte und/oder an keinen einem anderen der elektronischen Geräte zugeordneten Schlüssel angepasst ist; und das Ausgeben der Datenpakete.

Das zweite erfindungsgemäße Verfahren umfasst also die folgenden beiden Fälle (i) und (ii) jeweils unabhängig voneinander als auch deren Kombination:

(i) Erzeugen einer Vielzahl von Datenpaketen, wobei jedes der Datenpakete jeweils ein Computerprogramm oder einen Computerprogrammteil und einen Schlüssel enthält, wobei das in den Datenpaketen enthaltene Computerprogramm oder der Computerprogrammteil für alle Datenpakete gleich und zur Verarbeitung durch eine Vielzahl von elektronischen Geräte bestimmt ist, wobei das in einem Datenpaket enthaltene Computerprogramm oder der Computerprogrammteil auf einem der elektronischen Geräte nur dann verarbeitbar ist, wenn das Datenpaket einen an das elektronische Gerät angepassten Schlüssel enthält und wobei der jeweils in einem Datenpaket enthaltene Schlüssel lediglich an eines der elektronischen Geräte, aber an kein anderes der elektronischen Geräte angepasst ist; und Ausgeben der Datenpakete.

(ii) Erzeugen einer Vielzahl von Datenpaketen, wobei jedes der Datenpakete jeweils ein Computerprogramm oder einen Computerprogrammteil und einen Schlüssel enthält, wobei das in den Datenpaketen enthaltene Computerprogramm oder der Computerprogrammteil für alle Datenpakete gleich und zur Verarbeitung durch eine Vielzahl von elektronischen Geräte bestimmt ist, wobei das Computerprogramm oder der Computerprogrammteil auf einem der elektronischen Geräte nur dann verarbeitbar ist, wenn das Datenpaket einen an einen dem elektronischen Gerät zugeordneten Schlüssel angepassten Schlüssel enthält und wobei der jeweils in einem Datenpaket enthaltene Schlüssel lediglich an einen einem der elektronischen Geräte zugeordneten Schlüssel, aber an keinen einem anderen der elektronischen Geräte zugeordneten Schlüssel angepasst ist; und Ausgeben der Datenpakete.

Ein erfindungsgemäßes Computerprogramm umfasst Programmanweisungen zur Ausführung des ersten und/oder zweiten erfindungsgemäßen Verfahrens, wobei die Programmanweisungen einen Prozessor zur Ausführung des ersten und/oder zweiten erfindungsgemäßen Verfahrens veranlassen, wenn das Computerprogramm auf dem Prozessor läuft. Ein erfindungsgemäßes Computerprogramm kann beispielsweise auf einem computerlesbaren Speichermedium enthalten sein, das z.B. als magnetisches, elektrisches, elektro-magnetisches, optisches und/oder andersartiges Speichermedium ausgebildet ist.

Ein erfindungsgemäßes elektronisches Gerät umfasst Mittel zum Ausführen des ersten erfindungsgemäßen Verfahrens; und eine erfindungsgemäße Datenverarbeitungsanlage umfasst Mittel zum Ausführen des zweiten erfindungsgemäßen Verfahrens.

Unter einem elektronischen Gerät wird z.B. eine Vorrichtung, die zur Verarbeitung von Daten mit Hilfe eines Prozessors eingerichtet ist, wie z.B. eine Datenverarbeitungsanlage, verstanden. Ein elektronisches Gerät bzw. eine Datenverarbeitungsanlage ist z.B. ein Computer, ein Thin-Client, ein Server, ein tragbarer Computer, ein persönlicher digitaler Assistent (PDA). Elektronische Geräte können aber beispielsweise auch als Kartenlesegeräte, Haushaltsgeräte, Geräte der Unterhaltungselektronik, Bordcomputer/Steuerungseinheiten von Kraftfahrzeugen, Speichereinheiten wie Festplatten oder USB Memorysticks, etc ausgebildet sein. Unter Prozessor sollen unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden.

Zum Beispiel könnte ein erfindungsgemäßes Computerprogramm von einem Prozessor des erfindungsgemäßen elektronischen Geräts und/oder der erfindungsgemäßen Datenverarbeitungsanlage ausgeführt werden und das elektronische Gerät und/oder die Datenverarbeitungsanlage veranlassen, ein erstes und/oder zweites erfindungsgemäßes Verfahren auszuführen. Zum Beispiel könnte ein Bootloader-Programm eines elektronischen Geräts Programmweisungen zur Ausführung des ersten erfindungsgemäßen Verfahrens enthalten.

Ein Bootloader-Programm ist z.B. ein Computerprogramm, das in einem nicht-flüchtigen Speicher eines elektronischen Geräts (z.B. einem Programmspeicher) gespeichert ist und bei jedem Start des elektronischen Geräts als erstes durch den Prozessor des elektronischen Geräts ausgeführt wird. Es kann z.B. Programmanweisungen zur Aktualisierung der Firmware des elektronischen Geräts und andere Grundroutinen bereitstellen. Ein nicht-flüchtiger Speicher ist beispielsweise ein (unveränderlicher) Nur-Lese-Speicher (ROM-Speicher). Das Bootloader-Programm wird beispielsweise bei der Produktion des elektronischen Geräts in dem nicht-flüchtigen Speicher des elektronischen Geräts - gespeichert und kann nicht verändert werden; alternativ ist es z.B. denkbar, dass das Bootloader-Programm veränderbar und/oder austauschbar ist, d.h. verändert und/oder ausgetauscht werden kann.

Ein drittes erfindungsgemäßes Verfahren umfasst die Herstellung, d.h. die Produktion eines elektronischen Geräts bzw. einer Vielzahl elektronischer Geräte. Dies betrifft z.B. das Schreiben des Bootloader-Programms und/oder der Firmware in den Programmspeicher der erfindungsgemäßen elektronischen Geräte sowie die Erzeugung eines an das jeweilige elektronische Gerät angepassten Schlüssels und/oder weiterer Schlüssel.

Unter Firmware ist insbesondere ein Computerprogramm zu verstehen, das in einem nicht-flüchtigen Speicher eines elektronischen Geräts (z.B. einem Programmspeicher) gespeichert ist und durch den Anwender z.B. nicht oder nur mit speziellen Mitteln bzw. Funktionen austauschbar ist und zumindest für die grundlegende Funktionsfähigkeit des elektronischen Geräts verantwortlich ist. Als Firmware bezeichnet wird z.B. auch das Betriebssystem bzw. das Betriebsprogramm von einem elektronischen Gerät (wie z.B. Kartenlesegeräte, Haushaltsgeräten, Geräten der Unterhaltungselektronik, Bordcomputern/Steuerungs-einheiten von Kraftfahrzeugen, Speichereinheiten wie Festplatten oder USB Memorysticks, etc.) und das BIOS eines Computers.

Ein erfindungsgemäßes System umfasst zumindest ein erfindungsgemäßes elektronisches Gerät und eine erfindungsgemäße Datenverarbeitungsanlage.

Ein erfindungsgemäßes Datenpaket ist ein Datenpaket aus einer Vielzahl von Datenpaketen, wobei jedes der Datenpakete jeweils ein Computerprogramm oder einen Computerprogrammteil (also einen Teil eines Computerprogramms) und einen Schlüssel enthält und wobei das in den Datenpaketen enthaltene Computerprogramm oder der in den Datenpaketen enthaltene Computerprogrammteil für alle Datenpakete gleich und zur Verarbeitung durch eine Vielzahl von elektronischen Geräten bestimmt ist und wobei der jeweils in einem Datenpaket enthaltene Schlüssel lediglich an eines der elektronischen Geräte und/oder an einen einem der elektronischen Geräte zugeordneten Schlüssel, aber an kein anderes der elektronischen Geräte und/oder an keinen einem anderen der elektronischen Geräte zugeordneten Schlüssel angepasst ist. Das erfindungsgemäße Datenpaket umfasst das Computerprogramm (oder den Computerprogrammteil) und einen lediglich an eines der elektronischen Geräte und/oder an einen einem der elektronischen Geräte zugeordneten Schlüssel angepassten Schlüssel. Zum Beispiel kann jedes der Vielzahl von Datenpaketen ein erfindungemäßes Datenpaket sein; dies betrifft beispielsweise das Datenpaket, dessen Computerprogramm (oder dessen Computerprogrammteil) von einem elektronischen Gerät gemäß dem ersten erfindungsgemäßen Verfahren verarbeitbar ist und die gemäß dem zweiten erfindungsgemäßen Verfahren erstellten Datenpakete.

Unter Erzeugen der Vielzahl von Datenpaketen soll z.B. das Einbetten des Computerprogramms (oder des Computerprogrammteils) und eines für ein elektronisches Gerät angepassten Schlüssels in jeweils ein Datenpaket verstanden werden. Dabei ist jedes der Datenpakete der Vielzahl von Datenpakete ein erfindungsgemäßes Datenpaket. Das Erzeugen wird z.B. durch eine Datenverarbeitungsanlage, wie z.B. einen Computer oder einen Server, durchgeführt.

Neben dem Computerprogramm und einem an lediglich ein elektronisches Gerät und/oder an einen dem elektronischen Gerät zugeordneten Schlüssel angepassten Schlüssel kann jedes der Datenpakete jeweils noch weitere Daten enthalten, wie z.B. einen oder mehrere Schlüssel, eine digitale Signatur, ein weiteres Computerprogramm (z.B. ein Entschlüsselungsprogramm) oder einen Teil davon und/oder ähnliches.

Als Datenpaket in diesem Zusammenhang können z.B. ein Datencontainer, eine Datei, eine Archiv-Datei, eine ausführbare Datei etc. aufgefasst werden, die sowohl das Computerprogramm als auch einen an ein elektronisches Gerät und/oder an einen dem elektronischen Gerät zugeordneten Schlüssel angepassten Schlüssel enthalten. Zum Beispiel haben alle Datenpakete der Vielzahl von Datenpaketen dasselbe Format, d.h. die grundsätzliche Struktur der Datenpakete ist dann gleich. Zum Beispiel ist die Position des in den Datenpaketen enthaltenen Computerprogramms (oder Computerprogrammteils) und Schlüssels jeweils gleich.

Das in jedem der Datenpakete jeweils enthaltene Computerprogramm (oder der Computerprogrammteil) ist in allen Datenpaketen gleich und für die Verarbeitung auf einer Vielzahl von elektronischen Geräten bestimmt. Das heißt beispielsweise, dass das Computerprogramm (oder der Computerprogrammteil) derart ausgebildet ist, dass es nur durch bestimmte elektronische Geräte verarbeitbar ist, d.h. verarbeitet werden kann. Diese elektronischen Geräte können z.B. mindestens ein gemeinsames Merkmal aufweisen, wie z.B. denselben Prozessor (oder Prozessortyp) und/oder dasselbe Betriebssystem, und/oder sie können baugleiche elektronische Geräte, elektronische Geräte desselben Typs, und/oder elektronische Geräte desselben Herstellers sein. Zum Beispiel ist es denkbar, dass das in jedem der Datenpakete enthaltene Computerprogramm (oder der Computerprogrammteil) nur durch elektronische Geräte mit einer bestimmten Firmware verarbeitet werden kann.

Der einzige Unterschied zwischen den Datenpaketen der Vielzahl von Datenpaketen ist beispielsweise der Wert des in jedem der Datenpakete jeweils enthaltenen Schlüssels, der jeweils an lediglich eines der elektronischen Geräte und/oder an einen dem elektronischen Gerät zugeordneten Schlüssel angepasst ist. Zum Beispiel könnte jedes Datenpaket jeweils einen an ein (bestimmtes) elektronisches Gerät und/oder an einen dem elektronischen Gerät zugeordneten Schlüssel angepassten Schlüssel enthalten, so dass jedes der Datenpakete einen anderen angepassten Schlüssel enthält und jedes der Datenpakete individuell, d.h. einzigartig ist.

Unter Schlüssel soll insbesondere jede Datenfolge verstanden werden, mit deren Hilfe eine mit einem Verschlüsselungsverfahren verschlüsselte Datenfolge entschlüsselbar ist, d.h. entschlüsselt werden kann. Ein Schlüssel ist z.B. eine Ziffernfolge, eine Bitfolge, eine Buchstabenfolge, eine Kombination von Ziffern und Buchstaben, etc. Insbesondere können dies z.B. der private Schlüssel (private key) und/oder der öffentliche Schlüssel (public key) eines asymmetrischen Verschlüsselungsverfahrens und/oder der geheime Schlüssel eines symmetrischen Verschlüsselungsverfahrens sein.

Außerdem soll unter Schlüssel z.B. jede Datenfolge verstanden werden, mit der eine Legitimation oder eine Authentifizierung z.B. gegenüber einem elektronischen Gerät erfolgen kann. Ein Schlüssel, der z.B. nur dem Hersteller eines elektronischen Geräts und dem elektronischen Gerät selbst bekannt ist, könnte z.B. die sichere bzw. vertrauenswürdige Herkunft eines Computerprogramms (oder eines Computerprogrammteils) gegenüber dem elektronischen Gerät bestätigen, wenn z.B. das Computerprogramm (oder der Computerprogrammteil) diesen Schlüssel enthält bzw. vom Hersteller mit diesem Schlüssel signiert wurde.

Ein an lediglich ein elektronisches Gerät und/oder an einen dem elektronischen Gerät zugeordneten Schlüssel angepasster Schlüssel wird beispielsweise bei der Produktion des elektronischen Geräts erzeugt und ist nur dem Hersteller des elektronischen Geräts und dem elektronischen Gerät selbst bekannt. Zum Beispiel könnten die an jeweils ein elektronisches Gerät und/oder an einen dem elektronischen Gerät zugeordneten Schlüssel angepassten Schlüssel bei der Produktion des elektronischen Geräts sowohl in einer Produktionsdatenbank auf einer Produktions-Datenverarbeitungsanlage des Herstellers (z.B. einem Server) als auch in einem besonders geschützten Bereich des Programmspeichers des jeweiligen elektronischen Geräts, z.B. zusammen mit der Seriennummer, gespeichert werden. Beim Erzeugen der Datenpakete werden die angepassten Schlüssel z.B. aus der Datenbank ausgelesen und zusammen mit dem Computerprogramm (oder dem Computerprogrammteil) jeweils in eines der Datenpakete eingebettet.

Alternativ ist es beispielsweise denkbar, dass ein an lediglich ein elektronisches Gerät angepasster Schlüssel bei der Produktion des elektronischen Geräts von der Seriennummer des elektronischen Geräts und z.B. einem Masterschlüssel abgeleitet wird. Der Masterschlüssel ist z.B. in einer Produktionsdatenbank auf einer Produktions-Datenverarbeitungsanlage des Herstellers gespeichert und für jedes der elektronischen Geräte unterschiedlich und/oder in einem Hardware Sicherheitsmodul gespeichert und z.B. für alle elektronischen Geräte gleich. Das Hardware Sicherheitsmodul ist z.B. derart eingerichtet, dass es aus der Seriennummer des jeweiligen elektronischen Geräts mit Hilfe des Masterschlüssels einen oder mehrere individuelle und an das elektronische Gerät angepasste Schlüssel (z.B. den angepassten Schlüssel) ableitet.

In einem solchen Fall kann das Speichern der angepassten Schlüssel in der Produktionsdatenbank z.B. nicht notwendig sein, da beim Erzeugen der Datenpakete die angepassten Schlüssel erneut aus der Seriennummer des jeweiligen elektronischen Geräts und dem Masterschlüssel ableitbar sind, d.h. abgeleitet werden können.

Durch den angepassten Schlüssel kann z.B. die Sicherheit bzw. die Vertrauenswürdigkeit des in dem Datenpaket enthaltenen Computerprogramms (oder des Computerprogrammteils) durch den Hersteller bestätigt werden. In diesem Beispiel wird folglich das in einem Datenpaket enthaltene Computerprogramm (oder der Computerprogrammteil) nur dann von einem elektronischen Gerät verarbeitet, wenn der in dem Datenpaket enthaltene Schlüssel der nur dem Hersteller und diesem elektronischen Gerät bekannte Schlüssel ist, und dadurch z.B. die Vertrauenswürdigkeit des Computerprogramms (oder des Computerprogrammteils) bestätigt wird. Jedes andere elektronische Gerät würde das Computerprogramm (oder den Computerprogrammteil) demzufolge nicht verarbeiten.

Unter Verarbeiten des Computerprogramms (oder des Computerprogrammteils) soll z.B. verstanden werden, dass in dem Computerprogramm (oder dem Computerprogrammteil) enthaltene Programmanweisungen von einem Prozessor eines elektronischen Geräts ausgeführt werden und/oder dass darin enthaltene Daten von einem auf einem Prozessor eines elektronischen Geräts ausgeführten Computerprogramm verarbeitet werden.

Unter Ausgeben eines Datenpakets soll z.B. verstanden werden, dass das Datenpaket z.B. über eine Datenverbindung von einer Datenverarbeitungsanlage an ein elektronisches Gerät oder an eine mit einem elektronischen Gerät verbunden Datenverarbeitungsanlage gesendet wird. Insbesondere ist es z.B. denkbar, dass ein elektronisches Gerät oder eine mit einem elektronischen Gerät verbundene Datenverarbeitungsanlage ein solches Datenpaket anfordert.

Die Datenverbindung kann dabei sowohl logisch als auch physikalisch zwischen den entsprechenden Datenschnittstellen der Datenverarbeitungsanlage und dem elektronischen Gerät bestehen. Es ist beispielsweise eine drahtgebundene Datenverbindung denkbar, z.B. über eine serielle Datenschnittstelle (z.B. eine Universal Serial Bus USB-, Firewire-, RS-232-Schnittstelle, etc.), eine parallele Datenschnittstelle (z.B. eine Small Computer System Interface SCSI-, Institute of Electrical and Electronics Engineers IEEE-1284-Schnittstelle, etc.) oder eine Netzwerk-Datenschnittstelle (z.B. ein Modem, eine Ethernet-, Fast-Ethernet-, Gigabit-Ethernet-Schnittstelle, etc.). Die drahtgebundene Datenverbindung kann mechanisch, z.B. durch Einstecken eines Datenkabels in die entsprechenden Datenschnittstellen, erfolgen. Andererseits ist auch eine drahtlose Verbindung denkbar, z.B. über eine Funk-Datenschnittstelle (z.B. eine Wireless Local Area Network WLAN-, Bluetooth-Schnittstelle, etc.) oder eine Infrarot-Datenschnittstelle (z.B. eine Infrared Data Association IrDA-Schnittstelle, etc.).

Es ist auch eine Kombination der genannten Datenschnittstellen denkbar, z.B. könnten verschiedene Elemente wie z.B. Protokollumsetzer in die Datenverbindung zwischengeschaltet sein und die Datenverbindung jeweils von einer Datenschnittstelle auf eine andere umsetzen (z.B. von einer Netzwerk-Datenschnittstelle auf eine USB-Datenschnittstelle und/oder von einer Funk-Datenschnittstelle auf eine Netzwerk-Datenschnittstelle).

Unter Ausgeben eines Datenpakets soll z.B. auch verstanden werden, dass eines oder mehrere der Vielzahl von Datenpaketen auf einen Datenträger (z.B. eine Diskette, CD-ROM, DVD, ein tragbarer Computer etc.) ausgegeben wird, z.B. darauf kopiert wird.

Die Erfindung ist insbesondere vorteilhaft gegenüber dem Stand der Technik, da jedes der elektronischen Geräte, für das das in den Datenpaketen enthaltene Computerprogramm (oder der Computerprogrammteil) zur Verarbeitung bestimmt ist, einen anderen angepassten Schlüssel zur Verarbeitung des Computerprogramms (oder des Computerprogrammteil) benötigt, so dass jedes der elektronischen Geräte jeweils ein individuelles Datenpaket mit dem Computerprogramm (oder dem Computerprogrammteil) und den an das jeweilige elektronische Gerät und/oder an einen dem elektronischen Gerät zugeordneten Schlüssel angepassten Schlüssel erhält.

Im Gegensatz zum Stand der Technik kann ein Angreifer deshalb durch das Abfangen und/oder die Manipulation eines Datenpakets nur ein elektronisches Gerät z.B. mit Schadsoftware infizieren, da das in dem Datenpaket enthaltene Computerprogramm (oder der Computerprogrammteil) nur auf einem der elektronischen Geräte verarbeitet werden kann. Um alle elektronischen Geräte erfolgreich z.B. mit Schadsoftware zu infizieren, müsste ein Angreifer folglich alle Schlüssel kennen und für jedes der elektronischen Geräte jeweils ein eigenes Datenpaket manipulieren. Dadurch wird ein solcher Angriff auf eine Vielzahl von elektronischen Geräten nahezu unmöglich.

Um zu verhindern, dass ein Angreifer mehr als eins oder eine bestimmte Zahl der Datenpakete analysieren kann, kann die Zahl der an ein elektronisches Gerät ausgegebenen Datenpakete z.B. begrenzt werden.

Im Folgenden werden beispielhafte Ausgestaltungen der vorliegenden Erfindung beschrieben, welche auf weitere beispielhafte Merkmale der erfindungsgemäßen Verfahren sowie der erfindungsgemäßen Datenverarbeitungsanlage, des erfindungsgemäßen elektronischen Geräts, Datenpakets, Computerprogramms und Systems abstellen. Dabei sollen durch die Beschreibung eines zusätzlichen Verfahrenschritts eines der erfindungsgemäßen Verfahren auch als offenbart gelten Mittel zur Durchführung des Verfahrenschritts der entsprechenden erfindungsgemäßen Datenverarbeitungsanlage bzw. des entsprechenden erfindungsgemäßen elektronischen Geräts und eine entsprechende Programmanweisung des erfindungsgemäßen Computerprogramms, die einen Prozessor zur Ausführung des Verfahrensschritts veranlasst, wenn das Computerprogramm durch den Prozessor ausgeführt wird. Das Gleiche soll auch für die Offenbarung eines Mittels zur Durchführung eines Verfahrensschritts oder einer Programmanweisung gelten, z.B. soll die Offenbarung eines Mittels zur Durchführung eines Verfahrensschritts auch als Offenbarung des entsprechenden Verfahrensschritts und einer entsprechenden Programmanweisung verstanden werden.

Die nachfolgenden Beschreibungen betreffend das (in dem Datenpaket enthaltene) Computerprogramm sollen sowohl für das Computerprogramm als auch für den (alternativ in dem Datenpaket enthaltenen) Computerprogrammteil gelten, auch wenn dies jeweils nicht explizit erwähnt sein sollte. In beispielhaften Ausgestaltungen der Erfindung umfasst das erste erfindungsgemäße Verfahren ferner das Erhalten des Datenpakets an dem elektronischen Gerät.

Unter Erhalten eines Datenpakets soll z.B. verstanden werden, dass das Datenpaket über eine Datenverbindung an einer Datenschnittstelle eines elektronischen Geräts empfangen wird. Des Weiteren kann das Datenpaket beispielsweise auch von einem Datenträger erhalten werden, z.B. in dem das Datenpaket von dem Datenträger in einen Speicher des elektronischen Geräts kopiert wird.

Es ist beispielsweise denkbar, dass alle Datenpakete an alle elektronischen Geräte, für die das Computerprogramm zur Verarbeitung bestimmt ist, ausgegeben und dort erhalten werden. Alternativ ist beispielsweise auch denkbar, dass jedes der Datenpakete nur an ein elektronisches Gerät ausgegeben und nur an diesem erhalten wird. Zum Beispiel könnte jedes der elektronischen Geräte jeweils (nur) dasjenige Datenpaket erhalten, das den an das elektronische Gerät und/oder an einen dem elektronischen Gerät zugeordneten Schlüssel angepassten Schlüssel enthält. Insbesondere ist es z.B. denkbar, dass jedes der elektronischen Geräte jeweils ein Datenpaket anfordert, das den an das elektronische Gerät und/oder an einen dem elektronischen Gerät zugeordneten Schlüssel angepassten Schlüssel enthält. Dazu könnte sich das elektronische Gerät beispielsweise durch ein Authentifizierungsmerkmal (z.B. einen auf dem elektronischen Gerät gespeicherter Schlüssel) authentifizieren und/oder durch seine Seriennummer identifizieren, wobei der Seriennummer z.B. der an das elektronische Gerät und/oder an einen dem elektronischen Gerät zugeordneten Schlüssel angepasste Schlüssel in der Produktionsdatenbank zugeordnet ist.

In beispielhaften Ausgestaltungen der Erfindung umfasst das erste erfindungsgemäße Verfahren ferner das Erhalten des Datenpakets an einer mit dem elektronischen Gerät verbundenen Datenverarbeitungsanlage. Das elektronische Gerät ist dann beispielsweise über eine Datenschnittstelle (z.B. eine serielle oder parallele Datenschnittstelle) mit der Datenverarbeitungsanlage verbunden.

Zum Beispiel stellt das elektronische Gerät der damit verbundenen Datenverarbeitungsanlage eine von der Datenverarbeitungsanlage steuerbare Funktionalität zur Verfügung, z.B. als Ein- und/oder Ausgabeeinheit (wie z.B. eine Tastatur, eine Maus, eine Anzeigeeinheit, ein Laufwerk und/oder ein Kartenlesegerät). Dabei ist beispielsweise denkbar, dass das elektronische Gerät über einen eigenen Prozessor und eine Firmware verfügt, die z.B. zumindest grundlegende Überwachungs- und/oder Steuerungsaufgaben der Funktionalität(en) des elektronischen Geräts übernehmen.

Es ist beispielsweise denkbar, dass das Datenpaket an der Datenverarbeitungsanlage erhalten wird, die mit demjenigen elektronischen Gerät verbunden ist, für das das Computerprogramm zur Verarbeitung bestimmt ist. Zum Beispiel könnte eine Datenverarbeitungsanlage (nur) dasjenige Datenpaket erhalten, das den an das mit der Datenverarbeitungsanlage verbundene elektronische Gerät angepassten Schlüssel und/oder an einen dem elektronischen Gerät zugeordneten Schlüssel enthält. Insbesondere ist es z.B. denkbar, dass eine Datenverarbeitungsanlage ein Datenpaket anfordert, das den an das mit der Datenverarbeitungsanlage verbundene elektronische Gerät und/oder an einen dem elektronischen Gerät zugeordneten Schlüssel angepassten Schlüssel enthält. Dazu könnte sich die Datenverarbeitungsanlage beispielsweise durch ein Authentifizierungsmerkmal (z.B. ein auf dem mit der Datenverarbeitungsanlage verbundenen elektronischen Gerät gespeicherter Schlüssel) authentifizieren und/oder durch die Seriennummer des mit der Datenverarbeitungsanlage verbundenen elektronischen Geräts identifizieren, wobei der Seriennummer z.B. der an das elektronische Gerät angepasste Schlüssel in der Produktionsdatenbank zugeordnet ist.

In beispielhaften Ausgestaltungen eines ersten Aspekts der Erfindung ist jedem der elektronischen Geräte, für die das Computerprogramm zur Verarbeitung bestimmt ist, jeweils ein eigener, d.h. ein nur für das jeweilige elektronische Gerät individuell und/oder zufällig gewählter und für alle elektronischen Geräte unterschiedlicher verschlüsselter Freigabe-Schlüssel zugeordnet, wobei der in dem Datenpaket enthaltene Schlüssel an das elektronische Gerät dann angepasst ist, wenn der dem elektronischen Gerät zugeordnete verschlüsselte Freigabe-Schlüssel mit dem in dem Datenpaket enthaltenen Schlüssel entschlüsselbar ist. Zum Beispiel könnte der einem elektronischen Gerät jeweils zugeordnete verschlüsselte Freigabe-Schlüssel dem elektronischen Gerät derart zugeordnet sein, dass er auf dem elektronischen Gerät und/oder auf einer mit dem elektronischen Gerät verbundenen Datenverarbeitungsanlage verschlüsselt gespeichert ist.

Ein Freigabe-Schlüssel ist z.B. eine für jedes der elektronischen Geräte, für die das Computerprogramm zur Verarbeitung bestimmt ist, jeweils unterschiedliche Datenfolge, die das Verarbeiten des Computerprogramms auf dem jeweiligen elektronischen Gerät legitimiert, sobald der Freigabe-Schlüssel unverschlüsselt vorliegt.

Der unverschlüsselte Freigabe-Schlüssel ist z.B. nur dem elektronischen Gerät und dem Hersteller des elektronischen Geräts bekannt und wird bei der Produktion des elektronischen Geräts zufällig und nur für dieses erzeugt. Zum Beispiel kann der unverschlüsselte Freigabe-Schlüssel in einem (unveränderlichen) nicht-flüchtigen Speicher des elektronischen Geräts gespeichert sein, der z.B. nur von einem bestimmten auf dem elektronischen Gerät ausgeführten Computerprogramm auslesbar ist, d.h. ausgelesen werden kann, wie z.B. einem Bootloader-Programm. Nur wenn die Entschlüsselung des Freigabe-Schlüssels mit Hilfe des in dem erhaltenen Datenpaket enthaltenen Schlüssels gelingt, ist sichergestellt, dass der in dem Datenpaket enthaltene Schlüssel tatsächlich an das elektronische Gerät angepasst ist.

### Erster Aspekt

Ein erster Aspekt der vorliegenden Erfindung betrifft insbesondere den jeweils zu dem ersten und dem zweiten erfindungsgemäßen Verfahren beschriebenen Fall (i).

In beispielhaften Ausgestaltungen des ersten Aspekts der Erfindung umfasst das erste erfindungsgemäße Verfahren ferner das Entschlüsseln des dem elektronischen Gerät zugeordneten verschlüsselten Freigabe-Schlüssels mit Hilfe des in dem Datenpaket enthaltenen Schlüssels. Dadurch kann z.B. die vertrauenswürdige Herkunft des Computerprogramms bestätigt werden.

Es ist beispielsweise denkbar, dass das Bootloader-Programm des elektronischen Geräts Programmanweisungen enthält zum Entschlüsseln des Freigabe-Schlüssels mit Hilfe eines in einem Datenpaket enthaltenen Schlüssels und zum Verarbeiten des in dem Datenpaket enthaltenen Computerprogramms nur dann, wenn der entschlüsselte Freigabe-Schlüssel mit dem in einem (unveränderlichen) nur vom Bootloader-Programm lesbaren Speicher des elektronischen Geräts unverschlüsselt gespeicherten Freigabe-Schlüssel übereinstimmt.

Alternativ ist beispielsweise denkbar, dass auf der das Datenpaket erhaltenden und mit dem elektronischen Gerät verbundenen Datenverarbeitungsanlage ein Computerprogramm enthalten ist mit Programmanweisungen zum Entschlüsseln des Freigabe-Schlüssels mit Hilfe eines in einem Datenpaket enthaltenen Schlüssels und zum Veranlassen der Verarbeitung des in dem Datenpaket enthaltenen Computerprogramms auf dem elektronischen Gerät nur dann, wenn der entschlüsselte Freigabe-Schlüssel mit dem Freigabe-Schlüssel des elektronischen Geräts übereinstimmt.

In beispielhaften Ausgestaltungen des ersten Aspekts der Erfindung ist der jeweils in einem Datenpaket enthaltene Schlüssel in dem jeweiligen Datenpaket verschlüsselt enthalten. Er ist lediglich mit Hilfe eines dem elektronischen Gerät, an das der in dem jeweiligen Datenpaket verschlüsselt enthaltene Schlüssel angepasst ist, zugeordneten weiteren (z.B. eigenen) Schlüssel, beispielsweise einem nur für das jeweilige elektronische Gerät individuell und/oder zufällig gewählten und für alle elektronischen Geräte unterschiedlichen Schlüssel, entschlüsselbar. Zum Beispiel könnte der einem elektronischen Gerät jeweils zugeordnete weitere Schlüssel auf dem elektronischen Gerät und/oder auf einer mit dem elektronischen Gerät verbundenen Datenverarbeitungsanlage gespeichert sein.

Dadurch ist für die Entschlüsselung des Freigabe-Schlüssels sowohl die Kenntnis des an das elektronische Gerät angepassten (und im Datenpaket verschlüsselt enthaltenen) Schlüssels als auch des dem elektronischen Gerät zugeordneten Schlüssels erforderlich, der den im Datenpaket verschlüsselt enthaltenen Schlüssel entschlüsselt.

In beispielhaften Ausgestaltungen des ersten Aspekts der Erfindung umfasst das erste erfindungsgemäße Verfahren ferner das Entschlüsseln des in dem Datenpaket verschlüsselt enthaltenen Schlüssels mit Hilfe des dem elektronischen Gerät zugeordneten weiteren Schlüssels. Dadurch wird der in dem Datenpaket enthaltene Schlüssel entschlüsselt, mit dessen Hilfe der dem elektronischen Gerät zugeordnete verschlüsselte Freigabe-Schlüssel nur dann entschlüsselbar ist, wenn der in dem Datenpaket verschlüsselt enthaltene Schlüssel an das elektronische Gerät angepasst ist.

Es ist beispielsweise denkbar, dass das Bootloader-Programm des elektronischen Geräts und/oder ein auf der das Datenpaket erhaltenden und mit dem elektronischen Gerät verbundenen Datenverarbeitungsanlage enthaltenes Computerprogramm Programmanweisungen zum Entschlüsseln des im Datenpaket verschlüsselt enthaltenen Schlüssels enthält.

In beispielhaften Ausgestaltungen des ersten Aspekts der Erfindung ist der jeweils einem elektronischen Gerät zugeordnete weitere Schlüssel verschlüsselt und lediglich mit Hilfe eines in dem Datenpaket, das den an das jeweilige elektronische Gerät angepassten Schlüssel verschlüsselt enthält, unverschlüsselt enthaltenen und z.B. an das elektronische Gerät angepassten weiteren Schlüssels entschlüsselbar. In jedem der Datenpakete kann dann beispielsweise jeweils ein solcher weiterer Schlüssel unverschlüsselt enthalten sein.

Dadurch ist für die Entschlüsselung des Freigabe-Schlüssels sowohl die Kenntnis des an das elektronische Gerät angepassten (und im Datenpaket verschlüsselt enthaltenen) Schlüssels, des dem elektronischen Gerät zugeordneten verschlüsselten (und den im Datenpaket verschlüsselt enthaltenen Schlüssel entschlüsselnden) Schlüssels als auch des im Datenpaket enthaltenen (und den dem elektronischen Gerät zugeordneten verschlüsselten Schlüssel entschlüsselnden) Schlüssels erforderlich.

In beispielhaften Ausgestaltungen des ersten Aspekts der Erfindung umfasst das erste erfindungsgemäße Verfahren ferner das Entschlüsseln des dem elektronischen Gerät zugeordneten verschlüsselten weiteren Schlüssels mit Hilfe des in dem Datenpaket unverschlüsselt enthaltenen weiteren Schlüssels. Dadurch wird der dem elektronischen Gerät zugeordnete verschlüsselte Schlüssel entschlüsselt, mit dessen Hilfe der in dem Datenpaket verschlüsselt enthaltene Schlüssel entschlüsselbar ist.

Es ist beispielsweise denkbar, dass das Bootloader-Programm des elektronischen Geräts und/oder ein auf der das Datenpaket erhaltenden und mit dem elektronischen Gerät verbundenen Datenverarbeitungsanlage enthaltenes Computerprogramm Programmanweisungen zum Entschlüsseln des dem elektronischen Gerät verschlüsselt zugeordneten Schlüssels enthält.

In beispielhaften Ausgestaltungen des ersten Aspekts der Erfindung kann das Computerprogramm nur dann verarbeitet werden, wenn der entschlüsselte Freigabe-Schlüssel vorliegt.

Es ist beispielsweise denkbar, dass das Bootloader-Programm des elektronischen Geräts Programmanweisungen enthält zum Vergleichen des entschlüsselten Freigabe-Schlüssels mit dem in einem (z.B. unveränderlichen und/oder nur von dem Bootloader-Programm lesbaren Speicher) des elektronischen Geräts unverschlüsselt gespeicherten Freigabe-Schlüssel und das in dem Datenpaket enthaltene Computerprogramm nur dann verarbeitet, wenn die beiden Freigabe-Schlüssel übereinstimmen. Alternativ ist es z.B. denkbar, dass ein auf der das Datenpaket erhaltenden und mit dem elektronischen Gerät verbundenen Datenverarbeitungsanlage enthaltenes Computerprogramm entsprechende Programmanweisungen enthält.

Es sind aber auch Alternativen denkbar, wie z.B., dass das in dem Datenpaket enthaltene Computerprogramm nur dann auf dem elektronischen Gerät verarbeitet werden kann, wenn der unverschlüsselte Freigabe-Schlüssel vorliegt. Zum Beispiel könnte der unverschlüsselte Freigabe-Schlüssel einer Bitfolge entsprechen, die, wenn sie an eine Schreibschutzeinrichtung eines Speichers des elektronischen Geräts angelegt wird, diesen beschreibbar macht.

In beispielhaften Ausgestaltungen des ersten Aspekts der Erfindung ist die Verschlüsselung der verschlüsselten Schlüssel zumindest teilweise symmetrisch und/oder asymmetrisch.

Als Verschlüsselungsverfahren für die verschlüsselten Schlüssel, das sind z.B. der Freigabe-Schlüssel, der den elektronischen Geräten jeweils verschlüsselt zugeordnete Schlüssel und der in den Datenpaketen jeweils verschlüsselt enthaltene Schlüssel, kommen insbesondere symmetrische und/oder asymmetrische Verschlüsselungsverfahren in Betracht.

Beispiele für symmetrische Verschlüsselungsverfahren sind z.B. Blockverschlüsselungsverfahren wie Advanced Encryption Standard (AES), Data Encryption Standard (DES), Data Encryption Algorithm (DEA), Twofish oder International Data Encryption Algorithm (IDEA).

Ein Beispiel für asymmetrische Verschlüsselungsverfahren ist z.B. das Rivest-Shamir-Adleman (RSA) Verfahren.

Zwar bieten asymmetrische Verschlüsselungsverfahren eine höhere Sicherheit als symmetrische Verschlüsselungsverfahren, aber sie sind auch deutlich komplexer, so dass sie z.B. deutlich rechenintensiver sein können. Durch eine Kombination von symmetrischen und asymmetrischen Verschlüsselungsverfahren kann deshalb ein guter Kompromiss zwischen der Sicherheit und Komplexität der verwendeten Verschlüsselungsverfahren gewährleistet werden.

Zum Beispiel kann der an das jeweilige elektronische Gerät angepasste Schlüssel ein privater Schlüssel für ein asymmetrisches Verschlüsselungsverfahren sein, der den dem elektronischen Gerät, an das er angepasst ist, zugeordneten mit einem öffentlichen Schlüssel entsprechend verschlüsselten Freigabe-Schlüssel entschlüsselt. Dahingegen kann z.B. der dem elektronischen Gerät zugeordnete Schlüssel bzw. der weitere in dem Datenpaket enthaltene Schlüssel ein geheimer Schlüssel für ein symmetrisches Verschlüsselungsverfahren sein, mit dessen Hilfe der in dem Datenpaket verschlüsselt enthaltene Schlüssel bzw. der dem elektronischen Gerät zugeordnete verschlüsselte Schlüssel verschlüsselt wurden und entschlüsselbar sind. Es ist aber auch jede beliebige andere Kombination von asymmetrischen und symmetrischen Verschlüsselungsverfahren bzw. privaten, öffentlichen und/oder geheimen Schlüsseln denkbar.

Zweiter Aspekt

Ein zweiter Aspekt der vorliegenden Erfindung betrifft insbesondere den jeweils zu dem ersten und dem zweiten erfindungsgemäßen Verfahren beschriebenen Fall (ii).

In beispielhaften Ausgestaltungen des zweiten Aspekts der Erfindung ist jedem der elektronischen Geräte jeweils ein eigener (unterschiedlicher) Schlüssel zugeordnet, und der in dem Datenpaket enthaltene Schlüssel ist an den dem elektronischen Gerät zugeordneten Schlüssel angepasst, wenn er unter Verwendung des dem elektronischen Gerät zugeordneten Schlüssels oder eines mit diesem assoziierten Schlüssels erzeugt worden ist.

Der mit dem Schlüssel, der dem elektronischen Gerät zugeordnet ist, assoziierte Schlüssel kann beispielsweise mit dem Schlüssel, der dem elektronischen Gerät zugeordnet ist, ein asymmetrisches Schlüsselpaar bilden. Beispiele für asymmetrische Verschlüsselungsverfahren wurden oben bereits genannt.

In beispielhaften Ausgestaltungen des zweiten Aspekts der Erfindung hängt der in dem Datenpaket enthaltene Schlüssel zumindest ab von dem dem elektronischen Gerät zugeordneten Schlüssel oder dem mit diesem assoziierten Schlüssel und von Daten, die zumindest von dem Computerprogramm (oder dem Computerprogrammteil) abhängen.

Beispielsweise stellt der in dem Datenpaket enthaltene Schlüssel das Ergebnis einer Operation dar, die mit dem dem elektronischen Gerät zugeordneten Schlüssel oder dem mit diesem assoziierten Schlüssel und den Daten, die zumindest von dem Computerprogramm (oder dem Computerprogrammteil) abhängen, ausgeführt wird. Nicht abschließende Beispiele für die Daten, die zumindest von dem Computerprogramm (oder dem Computerprogrammteil) abhängen, sind das Computerprogramm (oder der Computerprogrammteil) selbst, oder eine verschlüsselte Repräsentation des Computerprogramms (oder Computerprogrammteils), oder eine verschlüsselte Repräsentation von Daten, die das Computerprogramm (oder den Computerprogrammteil) und eine Signatur des Computerprogramms (oder Computerprogrammteils) umfassen, oder eine signierte Repräsentation des Computerprogramms (oder Computerprogrammteils), oder eine signierte Repräsentation einer verschlüsselten Repräsentation des Computerprogramms (oder Computerprogrammteils). Die Operation kann beispielsweise eine kryptographische Operation sein. Die Operation kann beispielsweise zumindest Teile des Schlüssels mit den Daten verknüpfen. Die Operation kann beispielsweise vordefiniert sein. Der in dem Datenpaket enthaltene Schlüssel kann beispielsweise eine Prüfsumme oder Signatur sein, die aus den Daten und dem dem elektronischen Gerät zugeordneten Schlüssel (oder dem mit diesem assoziierten Schlüssel) gebildet wird. Ein Beispiel für den in dem Datenpaket enthaltenen Schlüssel ist ein Nachrichtenauthentifizierungscode (Message Authentication Code, MAC), der aus den Daten und dem dem elektronischen Gerät zugeordneten Schlüssel (oder dem mit diesem assoziierten Schlüssel) gebildet wird. Derartige Nachrichtenauthentifizierungscodes können beispielsweise auf Hashfunktionen (z.B. Keyed-Hash Message Authentication Code (HMAC), vgl. Dokument RFC 2104 der Network Working Group, Autoren H. Krawczyk M. Bellare und R. Canetti, Februar 1997) oder Blockchiffren (z.B. Cipher Block Chaining Message Authentication Code (CBC-MAC) mit AES128, vgl. auch ISO/IEC 9797-1) beruhen. In beispielhaften Ausgestaltungen des zweiten Aspekts der Erfindung ist der dem elektronischen Gerät zugeordnete Schlüssel in dem elektronischen Gerät - insbesondere bereits bei Auslieferung des elektronischen Geräts - gespeichert. Der Schlüssel kann beispielsweise nach einmal erfolgter Abspeicherung nicht mehr auslesbar und/oder nicht veränderbar sein. Der dem elektronischen Gerät zugeordnete Schlüssel kann beispielsweise bei der Produktion des Geräts oder beim erstmaligen Aufspielen der Steuersoftware (Firmware) des elektronischen Geräts auf dem Gerät abgespeichert worden sein. Er kann beispielsweise nur dem Hersteller des elektronischen Geräts bekannt sein. Er kann also beispielsweise vor der Auslieferung des elektronischen Geräts und/oder bei der Übernahme des elektronischen Geräts durch den Endnutzer (beispielsweise beim Kauf) bereits in dem elektronischen Gerät gespeichert sein. Bei dem dem Gerät zugeordneten Schlüssel kann es sich beispielsweise um einen Schlüssel handeln, der für die gesamte Nutzungsdauer des elektronischen Geräts, beispielsweise also für mehrere Jahre, dem elektronischen Gerät zugeordnet ist. Beispielsweise kann es sich dabei um einen Schlüssel handeln, der nicht mit einer anderen Entität (beispielsweise einem Server) im Rahmen einer Sitzung ausgehandelt wird. Es kann sich dabei insbesondere um einen Schlüssel handeln, der nicht lediglich ein Sitzungsschlüssel für eine konkrete Sitzung (beispielsweise eine Update-Sitzung) ist, in der ein Datenpaket mit dem Computerprogramm/Computerprogrammteil (beispielsweise einer Update-Software) an dem elektronischen Gerät erhalten werden soll, sondern für eine Vielzahl von Sitzungen (beispielsweise Update-Sitzungen) gültig ist, in denen Datenpakete mit unterschiedlichen Computerprogrammen/Computerprogrammteilen (beispielsweise Update-Software) an dem elektronischen Gerät erhalten werden sollen. Allerdings kann es beispielsweise auch vorgesehen sein, dass der dem elektronischen Gerät zugeordnete Schlüssel verändert oder ersetzt werden kann, beispielsweise wenn das in dem Datenpaket enthaltene Computerprogramm (oder der Computerprogrammteil) an dem elektronischen Gerät verarbeitet wird. Die Ersetzung/Änderung des Schlüssels kann dann durch Anweisungen des Computerprogramms (oder Computerprogrammteils) erfolgen.

Folgendes sei an dieser Stelle angemerkt: Wenn der dem elektronischen Gerät zugeordnete Schlüssel wie vorstehend beschrieben in dem elektronischen Gerät gespeichert ist, insbesondere schon vor einer Sitzung, in der das Datenpaket erhalten wird, ist der in dem Datenpaket enthaltene Schlüssel, wenn er an den dem elektronischen Gerät zugeordneten Schlüssel angepasst ist, damit auch an das elektronische Gerät angepasst (und fällt damit unter die oben zum ersten und zweiten erfindungsgemäßen Verfahren jeweils beschriebenen Fälle (i) und (ii)).

In beispielhaften Ausgestaltungen des zweiten Aspekts der Erfindung wird der dem elektronischen Gerät zugeordnete Schlüssel dem elektronischen Gerät im Rahmen einer Sitzung, in der das Datenpaket an dem elektronischen Gerät erhalten wird, zugeordnet, insbesondere nur für die Dauer der Sitzung. Es kann sich dabei beispielsweise um eine Sitzung zwischen dem elektronischen Gerät und einer das Datenpaket zur Verfügung stellenden Einheit (beispielsweise einem Server) handeln, von dem das Datenpaket erhalten wird. Der dem elektronischen Gerät zugeordnete Schlüssel kann beispielsweise vor oder während der Sitzung ermittelt werden (beispielsweise zufällig oder pseudo-zufällig) und dem elektronischen Gerät dann in der Sitzung zugeordnet werden, beispielsweise durch die das Datenpaket zur Verfügung stellende Einheit. Der dem elektronischen Gerät zugeordnete Schlüssel ist dann beispielsweise nur kurzzeitig in dem elektronischen Gerät gespeichert und/oder wird nach Beendigung der Sitzung von dem elektronischen Gerät gelöscht. Der dem elektronischen Gerät zugeordnete Schlüssel ist beispielsweise nur für eine Sitzung gültig. Die dem gleichen elektronischen Gerät in jeweils unterschiedlichen Sitzungen zugeordneten Schlüssel sind beispielsweise unterschiedlich. Die unterschiedlichen elektronischen Geräte aus der Vielzahl der elektronischen Geräte in ihren jeweiligen Sitzungen zugeordneten Schlüssel sind beispielsweise unterschiedlich. Dies kann beispielsweise durch eine zufällige oder pseudo-zufällige Auswahl der Schlüssel erfolgen.

Folgendes sei an dieser Stelle angemerkt: Wenn der dem elektronischen Gerät zugeordnete Schlüssel wie vorstehend beschrieben dem elektronischen Gerät im Rahmen einer Sitzung, in der das Datenpaket erhalten wird, zugeordnet wird, ist der in dem Datenpaket enthaltene Schlüssel, wenn er an den dem elektronischen Gerät zugeordneten Schlüssel angepasst ist, zumindest in Bezug auf diese Sitzung auch an das elektronische Gerät angepasst (und fällt damit unter die oben zum ersten und zweiten erfindungsgemäßen Verfahren jeweils beschriebenen Fälle (i) und (ii)).

Bevor die Zuordnung des Schlüssels zu dem elektronischen Gerät im Rahmen der Sitzung erfolgt, muss in beispielhaften Ausgestaltungen des zweiten Aspekts der Erfindung beispielsweise eine erfolgreiche Authentisierung des elektronischen Geräts gegenüber der das Datenpaket zur Verfügung stellenden Einheit und/oder eine erfolgreiche Authentisierung der das Datenpaket zur Verfügung stellenden Einheit gegenüber dem elektronischen Gerät erfolgt sein.

In beispielhaften Ausgestaltungen des zweiten Aspekts der Erfindung ist das Computerprogramm (oder der Computerprogrammteil) in dem Datenpaket in verschlüsselter Form enthalten. Beispielsweise kann das Datenpaket eine verschlüsselte Repräsentation des Computerprogramms (oder Computerprogrammteils) oder eine verschlüsselte Repräsentation von Daten enthalten, die das Computerprogramm (oder den Computerprogrammteil) und eine Signatur des Computerprogramms (oder Computerprogrammteils) umfassen. Die Verschlüsselung kann auf einem symmetrischen Schlüssel oder auf einem asymmetrischen Schlüsselpaar beruhen. Der symmetrische Schlüssel kann beispielsweise im Rahmen einer Sitzung (beispielsweise einer Update-Sitzung), in der das Datenpaket erhalten wird, ausgehandelt worden sein (beispielsweise mit einem Server) und nur für diese Sitzung gültig sein. Alternativ kann der symmetrische Schlüssel auch für die gesamte Lebensdauer des elektronischen Geräts dem elektronischen Gerät zugeordnet sein (beispielsweise kann allerdings auch ein derartiger langfristiger Schlüssel veränderbar oder ersetzbar sein, beispielsweise durch Programmweisungen des in dem Datenpaket enthaltenen Computerprogramms/Computerprogrammteils). Der symmetrische Schlüssel kann beispielsweise in dem elektronischen Gerät gespeichert sein, beispielsweise in nicht-auslesbarer oder nicht-veränderbarer Form (beispielsweise nach einmaligem Abspeichern im Gerät), beispielsweise während der Produktion des elektronischen Geräts. Der symmetrische Schlüssel kann lediglich dem elektronischen Gerät, aber keinem anderen elektronischen Gerät aus der Vielzahl der elektronischen Geräte zugeordnet sein (also bezüglich des elektronischen Geräts individuell sein). Alternativ kann der symmetrische Schlüssel auch für alle elektronischen Geräte (in Form eines "globalen" Schlüssels) oder zumindest für Gruppen von elektronischen Geräten aus der Vielzahl der elektronischen Geräte gleich sein. Wenn die Verschlüsselung auf einem asymmetrischen Schlüsselpaar beruht, gelten die vorstehenden Ausführungen zu dem symmetrischen Schlüssel für denjenigen Schlüssel des asymmetrischen Schlüsselpaars, der dem elektronischen Gerät zugeordnet ist (beispielsweise einen privaten Schlüssel des asymmetrischen Schlüsselpaares), analog.

In beispielhaften Ausgestaltungen des zweiten Aspekts der Erfindung enthält das Datenpaket ferner eine Signatur über das Computerprogramm (oder den Computerprogrammteil) oder eine Signatur über eine verschlüsselte Repräsentation des Computerprogramms (oder Computerprogrammteils). Dann wird beispielsweise das in dem Datenpaket enthaltene Computerprogramm (oder der Computerprogrammteil) auf dem elektronischen Gerät nur dann ausgeführt, wenn das Datenpaket den an das elektronische Gerät angepassten Schlüssel enthält und zusätzlich anhand der Signatur die Integrität des Computerprogramms (oder des Computerprogrammteils) oder der verschlüsselten Repräsentation des Computerprogramms (oder Computerprogrammteils) bestätigt wurde. Ein Schlüssel zur Verifizierung der Signatur kann dabei beispielsweise in dem elektronischen Gerät gespeichert sein. Für diesen Schlüssel gelten die vorstehenden Ausführungen zu dem symmetrischen Verschlüsselungsschlüssel analog, es kann sich also insbesondere beispielsweise um einen gerätespezifischen oder "globalen" (also für mehrere od. alle elektronischen Geräte gültigen) Schlüssel handeln, der beispielsweise für die gesamte Lebensdauer des Geräts ausgelegt ist und/oder der beispielsweise lediglich einmal (beispielsweise bei der Produktion) in dem Gerät gespeichert wird und dann nicht mehr auslesbar oder veränderbar ist. Die Überprüfung der Signatur kann beispielsweise in dem elektronischen Gerät erfolgen. Zusätzlich oder alternativ kann die Überprüfung der Signatur auch in einer mit dem elektronischen Gerät verbundenen Datenverarbeitungsanlage (beispielsweise einem (Client-)Computer erfolgen). Beispielsweise wird das Datenpaket an dieser Datenverarbeitungsanlage empfangen und dann lediglich an das elektronische Gerät weitergeleitet, wenn anhand der Signatur die Integrität des Computerprogramms (oder Computerprogrammteils) bestätigt wurde.

In beispielhaften Ausgestaltungen des zweiten Aspekts der Erfindung wird das Datenpaket nur dann erhalten (beispielsweise an dem elektronischen Gerät oder an einer mit dem elektronischen Gerät verbundenen Datenverarbeitungsanlage, beispielsweise einem Computer), wenn sich die das Datenpaket erhaltende Einheit (also das elektronische Gerät oder die mit dem elektronischen Gerät verbundene Datenverarbeitungsanlage) gegenüber der das Datenpaket zur Verfügung stellenden Einheit (beispielsweise einem Server) erfolgreich authentisiert hat und/oder wenn sich die das Datenpaket zur Verfügung stellende Einheit gegenüber dem elektronischen Gerät oder der mit dem elektronischen Gerät verbundenen Datenverarbeitungsanlage erfolgreich authentisiert hat. Beispielsweise kann die das Datenpaket zur Verfügung stellende Einheit im Falle einer erfolglosen Authentisierung des elektronischen Geräts die Bereitstellung des Datenpakets verweigern. Beispielsweise kann das elektronische Gerät im Falle einer erfolglosen Authentisierung des das Datenpaket zur Verfügung stellenden Einheit das Erhalten des Datenpakets verweigern. Die Authentisierung des elektronischen Geräts kann beispielsweise auf dem dem elektronischen Gerät zugeordneten Schlüssel beruhen. Dazu kann beispielsweise von der das Datenpaket zur Verfügung stellenden Einheit eine sog. Challenge (eine beispielsweise zufällige Information) geliefert werden, auf die zur Authentisierung der dem elektronischen Gerät zugeordnete Schlüssel angewendet und das Ergebnis an die das Datenpaket zur Verfügung stellende Einheit zur Überprüfung (Authentifizierung) zurückgeliefert wird (beispielsweise direkt oder über die mit dem elektronischen Gerät verbundene Datenverarbeitungsanlage). Anstelle des dem elektronischen Geräts zugeordneten Schlüssels kann auch ein von diesem unterschiedlicher dedizierter Authentisierungsschlüssel verwendet werden. Für diesen dedizierten Authentisierungsschlüssel gelten die vorstehenden Ausführungen zum symmetrischen Verschlüsselungsschlüssel analog, es kann sich also insbesondere beispielsweise um einen bezüglich des elektronischen Geräts individuellen oder einen "globalen" Schlüssel handeln, der beispielsweise für die gesamte Lebensdauer des elektronischen Geräts gültig ist oder beispielsweise nur für eine Sitzung (beispielsweise eine Update-Sitzung), in der das Datenpaket erhalten wird, gültig ist. Der Schlüssel kann beispielsweise auch wiederum ein Teil eines asymmetrischen Schlüsselpaares sein, beispielsweise bei Verwendung digitaler Signaturen zur Authentisierung. Es gibt dann beispielsweise einen Authentisierungs-Signierungs-Schlüssel, mit dem signiert wird, und einen Authentisierungs-Verifikations-Schlüssel, mit dem die Signatur verifiziert wird (und damit eine Authentifizierung der signierenden Entität (beispielsweise des elektronischen Geräts) erfolgt).

In beispielhaften Ausgestaltungen der Erfindung sind die in den jeweiligen Datenpaketen enthaltenen Schlüssel und/oder die dem jeweiligen elektronischen Gerät zugeordneten Schlüssel zufällig gewählt.

Zum Beispiel werden alle Schlüssel für jedes der elektronischen Geräte bei der Produktion jeweils zufällig erzeugt und in einer Produktionsdatenbank gespeichert. Dass heißt insbesondere, dass alle verwendeten Schlüssel für jedes der elektronischen Geräte und jedes der Datenpakete unterschiedlich oder zumindest teilweise unterschiedlich sein können. Durch eine zufällige Wahl der Schlüssel ist es außerdem nicht möglich, z.B. den an ein elektronisches Gerät angepassten Schlüssel aus einem anderen an ein anderes elektronisches Gerät angepassten Schlüssel abzuleiten. Alternativ ist z.B. auch denkbar, dass für jedes der elektronischen Geräte bei der Produktion jeweils ein Masterschlüssel zufällig erzeugt und in einer Produktionsdatenbank gespeichert wird und alle Schlüssel eines elektronischen Geräts vom jeweiligen Masterschlüssel und/oder der Seriennummer des elektronischen Geräts abgeleitet werden können.

In beispielhaften Ausgestaltungen der Erfindung umfasst das Verarbeiten auf dem elektronischen Gerät gemäß dem ersten erfindungsgemäßen Verfahren das Aktualisieren einer Software, insbesondere einer Firmware, des elektronischen Geräts.

Beispielsweise enthält das Computerprogramm eine aktualisierte Version der Software/Firmware bzw. aktualisierte Teile der Software/Firmware, wobei die Software/Firmware bzw. die entsprechenden Teile der Software/Firmware bei der Aktualisierung dementsprechend zumindest teilweise ersetzt werden. Dass heißt z.B., dass unter dem Verarbeiten des Computerprogramms auf dem elektronischen Gerät zumindest das Aktualisieren einer Software/Firmware auf dem elektronischen Gerät verstanden wird.

Es ist beispielsweise denkbar, dass das Bootloader-Programm des elektronischen Geräts Programmanweisungen zum Aktualisieren der Firmware enthält.

In beispielhaften Ausgestaltungen der Erfindung ist das in den Datenpaketen enthaltene Computerprogramm (zumindest teilweise) als Speicherabbild eines nicht-flüchtigen Speichers und/oder eines Bereichs eines nicht-flüchtigen Speichers des elektronischen Geräts ausgebildet, für das das Computerprogramm zur Verarbeitung bestimmt ist.

Nicht-flüchtige-Speicher sind z.B. Speicher mit wahlfreiem-Zugriff (RAM) wie z.B. NOR-Flash-Speicher oder mit sequentiellen-Zugriff wie z.B. NAND-Flash-Speicher und/oder Speicher mit Nur-Lese-Zugriff (ROM) wie z.B. EPROM-, EEPROM-, oder Rom-Speicher.

Zum Beispiel kann das Computerprogramm ein Speicherabbild des Firmwarespeicherbereichs des elektronischen Geräts, in dem die Firmware des elektronischen Geräts gespeichert ist, mit einer aktualisierten Version der Firmware enthalten.

In beispielhaften Ausgestaltungen der Erfindung umfasst das Verarbeiten auf dem elektronischen Gerät gemäß dem ersten erfindungsgemäßen Verfahren das Schreiben (sog. "flashen") des Speicherabbilds in den nicht-flüchtigen Speicher des elektronischen Geräts.

Das Verarbeiten umfasst z.B. das Löschen des Firmwarespeicherbereichs und das Schreiben des Speicherabbilds mit einer aktualisierten Firmware in den gelöschten Firmwarespeicherbereich. Insbesondere ist es z.B. denkbar, dass das Bootloader-Programm entsprechende Programmanweisungen enthält und dass der Firmwarespeicherbereich durch das Bootloader-Programm schreibgeschützt ist und z.B. nur mit dessen Hilfe löschbar und/oder beschreibbar ist, d.h. gelöscht und/oder beschrieben werden kann.

In beispielhaften Ausgestaltungen der Erfindung umfasst das Verarbeiten auf dem elektronischen Gerät gemäß dem ersten erfindungsgemäßen Verfahren ferner das Prüfen der Signatur des Computerprogramms.

Die digitale Signatur des Computerprogramms ist z.B. ebenfalls in jedem der Datenpakete enthalten und ist z.B. für alle Datenpakete gleich.

Die digitale Signatur wird z.B. aus dem Computerprogramm bzw. dessen Hash-Wert und einem privaten Signaturschlüssel durch eine eindeutige Rechenvorschrift, wie z.B. ein asymmetrisches Verschlüsselungsverfahren, berechnet. Im Stand der Technik sind z.B. deterministische und probabilistische digitale Signaturverfahren bekannt. Der Hash-Wert des Computerprogramms kann mittels einer Hash-Funktion (wie einer sicheren Hash Algorithmus SHA-Funktion z.B. SHA-2) berechnet werden und ist ein eindeutig mit dem Computerprogramm assoziierbarer Wert.

Der private Signaturschlüssel ist beispielsweise nur dem Hersteller des elektronischen Geräts und/oder einer besonders vertrauenswürdigen Organisation bekannt. Der öffentliche Signaturschlüssel ist dahingegen frei verfügbar, d.h. z.B. in jedem der elektronischen Geräte des Herstellers gespeichert und/oder über das Internet abrufbar.

Beim Prüfen der Signatur des Computerprogramms wird z.B. die in dem Datenpaket enthaltene Signatur mit Hilfe des öffentlichen Signaturschlüssels entschlüsselt, um beispielsweise den Hash-Wert des Computerprogramms zu erhalten. Des Weiteren wird der Hash-Wert des in dem Datenpaket enthaltenen Computerprogramms berechnet und mit dem entschlüsselten Hash-Wert verglichen. Stimmen beide Hash-Werte überein, so kann davon ausgegangen werden, dass das in dem Datenpaket enthaltene Computerprogramm vertrauenswürdig ist, d.h. z.B. nicht manipuliert wurde.

Durch diese zusätzliche Signaturprüfung kann z.B. sichergestellt werden, dass ein Aktualisierungsprogramm tatsächlich vom Hersteller des elektronischen Geräts stammt und/oder von diesem bzw. von einer besonders vertrauenswürdigen Einrichtung digital signiert wurde.

In beispielhaften Ausgestaltungen der Erfindung umfasst das Verarbeiten auf dem elektronischen Gerät gemäß dem ersten erfindungsgemäßen Verfahren das Verändern mindestens eines dem elektronischen Gerät zugeordneten Schlüssels, insbesondere eines Freigabe-Schlüssels, und/oder der Verschlüsselung eines dem elektronischen Gerät zugeordneten verschlüsselten Schlüssels. Dadurch wird die Sicherheit zusätzlich erhöht, da sich mit jedem Verarbeiten jeweils einer oder mehrere der Schlüssel und/oder eine oder mehrere Verschlüsselungen ändern, so dass ein Angreifer jeweils erneut Kenntnis von den veränderten Schlüsseln und/oder Verschlüsselungen erlangen muss.

In beispielhaften Ausgestaltungen der Erfindung ist das elektronische Gerät mit einem oder mehreren weiteren elektronischen Geräten verbunden, und das Verarbeiten auf dem elektronischen Gerät umfasst das Veranlassen des Aktualisierens einer Software, insbesondere einer Firmware, in einem Speicher und/oder Schreibens einer Software, insbesondere einer Firmware, in einen Speicher der weiteren elektronischen Geräte. Zum Beispiel ist das elektronische Gerät über eine parallele oder serielle Datenschnittstelle mit den weiteren elektronischen Geräten verbunden.

Ein solches elektronisches Gerät ist vorzugsweise als Produktions-Datenverarbeitungsanlage des Herstellers der weiteren elektronischen Geräte ausgebildet, die z.B. während der Produktion der weiteren elektronischen Geräte (z.B. Kartenlesegeräte) zum Schreiben der Firmware in einen Speicher der weiteren elektronischen Geräte verwendet wird. Die Produktions-Datenverarbeitungsanlage erhält z.B. ein Datenpaket mit zumindest einem an die Produktions-Datenverarbeitungsanlage angepassten Schlüssel und ein Computerprogramm mit der Firmware und/oder dem Bootloader-Programm für die weiteren elektronischen Geräte. Beim Verarbeiten des Computerprogramms auf der Produktions-Datenverarbeitungsanlage wird z.B. die Firmware und/oder das Bootloader-Programm (gleichzeitig) in den Programmspeicher (z.B. in den Firmwarespeicherbereich) der weiteren mit der Produktions-Datenverarbeitungsanlage verbundenen elektronischen Geräte geschrieben bzw. das Schreiben veranlasst. Dass heißt z.B., dass entsprechende Befehle und/oder die Firmware und/oder das Bootloader-Programm über eine Datenverbindung an die mit der Produktions-Datenverarbeitungsanlage verbundenen elektronischen Geräte ausgegeben werden.

Zum Beispiel könnte die Produktions-Datenverarbeitungsanlage eingerichtet sein, um das dritte erfindungsgemäße Verfahren auszuführen. Es ist beispielsweise denkbar, dass die Produktions-Datenverarbeitungsanlage auch zur Erzeugung der verschiedenen Schlüssel verwendet wird, die Produktionsdatenbank enthält und/oder erfindungsgemäße Datenpakete gemäß dem zweiten erfindungsgemäßen Verfahren erstellt und an die (produzierten) weiteren elektronischen Geräte ausgibt.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen.

Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Kurze Beschreibung der Figuren

In den Figuren zeigen:

Fig. 1a: ein Blockdiagramm einer beispielhaften Ausführungsform eines erfindungsgemäßen elektronischen Geräts als Kartenlesegerät;

Fig. 1b: ein Blockdiagramm einer beispielhaften Ausführungsform einer erfindungsgemäßen Datenverarbeitungsanlage;

Fig. 2a: ein Blockdiagramm einer beispielhaften Ausführungsform eines erfindungsgemäßen Systems;

Fig. 2b: ein Blockdiagramm einiger beispielhafter Ausführungsformen hinsichtlich des ersten Aspekts der Erfindung erfindungsgemäßer Datenpakete, Firmwarespeicher und einer Produktionsdatenbank gemäß dem erfindungsgemäßen System aus Fig. 2a;

Fig. 2c: ein Blockdiagramm einer weiteren beispielhaften Ausführungsform eines erfindungsgemäßen Systems;

Fig. 3: ein Ablaufdiagramm mit Verfahrensschritten einer beispielhaften Ausführungsform des dritten erfindungsgemäßen Verfahrens hinsichtlich des ersten Aspekts der Erfindung;

Fig. 4: ein Ablaufdiagramm mit Verfahrensschritten einer beispielhaften Ausführungsform des zweiten erfindungsgemäßen Verfahrens hinsichtlich des ersten Aspekts der Erfindung;

Fig. 5: ein Ablaufdiagramm mit Verfahrensschritten einer beispielhaften Ausführungsform des ersten erfindungsgemäßen Verfahrens hinsichtlich des ersten Aspekts der Erfindung;

Fig. 6: ein Ablaufdiagramm mit Verfahrensschritten einer beispielhaften Ausführungsform des ersten erfindungsgemäßen Verfahrens hinsichtlich des zweiten Aspekts der Erfindung;

Fig. 7a: ein Ablaufdiagramm mit Verfahrensschritten einer beispielhaften Ausführungsform einer Initialisierung des zweiten erfindungsgemäßen Verfahrens hinsichtlich des zweiten Aspekts der Erfindung;

Fig. 7b: ein Ablaufdiagramm mit Verfahrensschritten einer beispielhaften Ausführungsform des zweiten erfindungsgemäßen Verfahrens hinsichtlich des zweiten Aspekts der Erfindung;

Fig. 7c: ein Ablaufdiagramm mit Verfahrensschritten einer beispielhaften Ausführungsform des ersten erfindungsgemäßen Verfahrens hinsichtlich des zweiten Aspekts der Erfindung;

Fig. 8a: ein Ablaufdiagramm mit Verfahrensschritten einer weiteren beispielhaften Ausführungsform einer Initialisierung des zweiten erfindungsgemäßen Verfahrens hinsichtlich des zweiten Aspekts der Erfindung;

Fig. 8b: ein Ablaufdiagramm mit Verfahrensschritten einer weiteren beispielhaften Ausführungsform des zweiten erfindungsgemäßen Verfahrens hinsichtlich des zweiten Aspekts der Erfindung; und

Fig. 8c-8d: ein Ablaufdiagramm mit Verfahrensschritten einer weiteren beispielhaften Ausführungsform des ersten erfindungsgemäßen Verfahrens hinsichtlich des zweiten Aspekts der Erfindung

**Detaillierte Beschreibung einiger beispielhafter Ausführungsformen der vorliegenden Erfindung**

Die vorliegende Erfindung wird im Folgenden anhand von beispielhaften Ausführungsformen beschrieben.

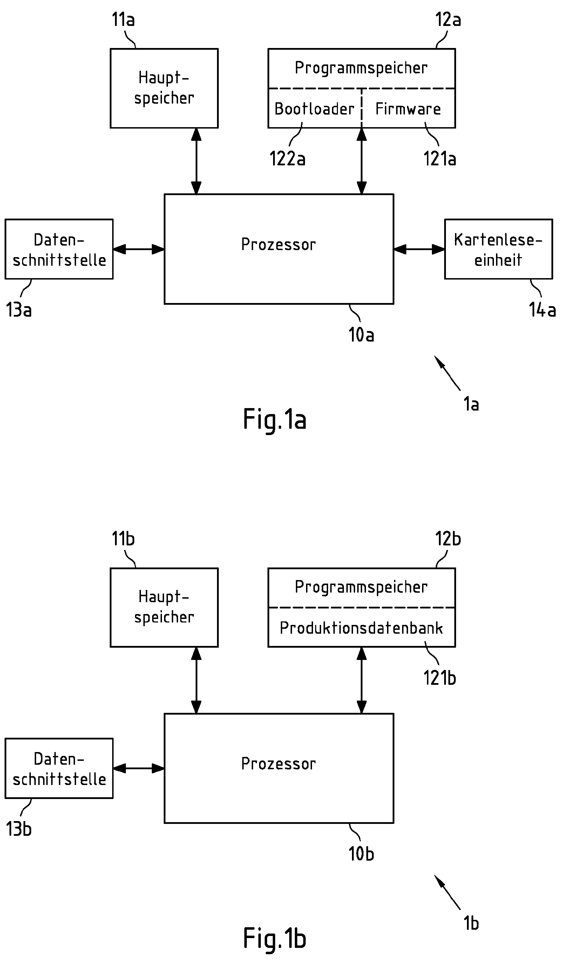

Fig. 1a zeigt ein Blockdiagramm einer beispielhaften Ausführungsform eines erfindungsgemäßen elektronischen Geräts als Kartenlesegerät 1a.

Prozessor 10a von Kartenlesegerät 1a führt z.B. Programmanweisungen aus, die in Programmspeicher 12a gespeichert sind, und speichert beispielsweise Zwischenergebnisse oder ähnliches in Hauptspeicher 11a.

Ein Prozessor ist z.B. ein Mikroprozessor, eine Mikrokontrolleinheit wie ein Mikrocontroller, ein digitaler Signalprozessor (DSP), eine Anwendungsspezifische Integrierte Schaltung (ASIC) oder ein Field Programmable Gate Array (FPGA).

Ein Programmspeicher ist z.B. ein nicht-flüchtiger Speicher und ein Hauptspeicher ist z.B. ein flüchtiger- oder nicht-flüchtiger-Speicher, insbesondere ein Speicher mit wahlfreiem-Zugriff (RAM) und/oder ein Flash-Speicher. Nicht-flüchtige Speicher sind z.B. Speicher mit wahlfreiem-Zugriff (RAM) wie z.B. NOR-Flash-Speicher oder mit sequentiellen-Zugriff wie z.B. NAND-Flash-Speicher und/oder Speicher mit Nur-Lese-Zugriff (ROM) wie z.B. EPROM-, EEPROM-, oder Rom-Speicher.

Programmspeicher 12a ist vorzugsweise ein mit Kartenlesegerät 1a fest verbundener Datenträger. Mit Kartenlesegerät 1a fest verbundene Datenträger sind beispielsweise Festplatten oder Halbleiterspeicher, die in Kartenlesegerät 1a eingebaut und z.B. mit dessen Hauptplatine verlötet sind.

Programmspeicher 12a enthält in einem Speicherbereich 122a ein Bootloader-Programm, das beim Starten von Kartenlesegerät 1a in Hauptspeicher 11a geladen und von Prozessor 10a als erstes Programm ausgeführt wird. Das Bootloader-Programm enthält unter anderem Programmanweisungen zur Aktualisierung der Firmware des Kartenlesegeräts 1a. Speicherbereich 122a ist beispielsweise als Schreib-Lese-Speicher oder als (unveränderlicher) Nur-Lese-Speicher ausgebildet.

Sobald das Bootloader-Programm von Prozessor 10a ausgeführt wird, wird die Firmware aus dem Firmwarespeicherbereich 121a von Programmspeicher 12a in Hauptspeicher 11a geladen und von Prozessor 10a ausgeführt. Als Firmware bezeichnet wird das Betriebsprogramm des Kartenlesegeräts 1a, das z.B. Programmanweisungen zur Steuerung der Datenschnittstelle 13a und Kartenleseeinheit 14a umfasst, so dass Prozessor 10a, wenn er die Firmware ausführt, Datenschnittstelle 13a und Kartenleseeinheit 14a steuert. Firmwarespeicherbereich 121a ist beispielsweise als Schreib-Lese-Speicher ausgebildet. Allerdings kann Firmwarespeicherbereich 121a beispielsweise durch das Bootloader-Programm schreibgeschützt werden, so dass er nur mit Hilfe des Bootloader-Programms beschreibbar ist.

Firmwarespeicherbereich 121a und Speicherbereich 122a können z.B. als separate physikalische Speicher oder z.B. als virtuelle Speicher, d.h. Speicherbereiche eines physikalischen Programmspeichers (z.B. separate Partitionen), ausgebildet sein. Des Weiteren ist es denkbar, dass Programmspeicher 12a weitere Speicherbereiche (z.B. als separate physikalische Speicher oder z.B. als virtuelle Speicher) enthält wie einen Speicherbereich für die Seriennummer des Kartenlesegeräts und/oder einen Schlüssel-Speicherbereich.

Datenschnittstelle 13a ist vorzugsweise als USB-Datenschnittstelle und/oder als Netzwerk-Datenschnittstelle ausgebildet. Insbesondere kann sich Kartenlesegerät 1a mit Hilfe einer solchen Datenschnittstelle unmittelbar oder mittelbar mit einem Server des Herstellers und/oder des Betreibers verbinden und über diese Datenverbindung Daten austauschen. Dies sind beispielsweise Zahlungsdaten, Aktualisierungsprogramme für die Firmware und/oder sonstige Daten.

Kartenleseeinheit 14a ist beispielsweise ein Lesegerät zum kontaktlosen oder kontaktbehafteten Auslesen einer Chipkarte.

Des Weiteren kann Kartenlesegerät 1a über weitere Einheiten verfügen, wie beispielsweise eine Ein- und/oder Ausgabeeinheit z.B. eine Tastatur, eine Maus, eine Anzeigeeinheit (z.B. ein LCD-Display und/oder LED Leuchtanzeigen), ein Mikrofon, eine berührungsempfindliche Anzeigeeinheit, ein Lautsprecher, ein biometrischer Sensor (z.B. ein Fingerabdruck-Sensor) und/oder eine Kamera. Eine solche Ein- und/oder Ausgabeeinheit kann beispielsweise Benutzereingaben aufnehmen und an Prozessor 10a weiterleiten und/oder Informationen für den Benutzer von Prozessor 10a empfangen und ausgeben.

Kartenlesegerät 1a ist vorzugsweise als Kartenlesegerät der Sicherheitsklasse 1, 2, 3 oder 4 gemäß einer Spezifikation des Zentralen Kreditausschusses (ZKA) ausgebildet.

Fig. 1b zeigt ein Blockdiagramm einer beispielhaften Ausführungsform einer erfindungsgemäßen Datenverarbeitungsanlage 1b.

Prozessor 10b führt z.B. Programmanweisungen aus, die in Programmspeicher 12b gespeichert sind, und speichert beispielsweise Zwischenergebnisse oder ähnliches in Hauptspeicher 11b. Insbesondere ist in Programmspeicher 12b eine Produktionsdatenbank in Speicherbereich 121b gespeichert. Des Weiteren kann Datenverarbeitungsanlage 1b optional ein Hardware Sicherheitsmodul (HSM) zum Ableiten eines individuellen Schlüssels aus einer Seriennummer und einem z.B. im Hardware Sicherheitsmodul gespeicherten Masterschlüssel umfassen.

Prozessor 10b steuert Datenschnittstelle 13b, die z.B. mit Datenschnittstelle 13a aus Fig. 1a korrespondiert und vorzugsweise als Netzwerk-Datenschnittstelle und/oder Universal Serial Bus USB-Datenschnittstelle ausgebildet ist. Insbesondere kann sich Datenverarbeitungsanlage 1b mit Hilfe einer solchen Datenschnittstelle mit Kartenlesegerät 1a mittelbar oder unmittelbar verbinden und über die Datenverbindung mit Kartenlesegerät 1a Daten austauschen. Es ist auch denkbar, dass Datenverarbeitungsanlage 1b über Datenschnittstelle 13b mit mehreren (baugleichen) Kartenlesegeräten gleichzeitig verbindbar ist.

Datenverarbeitungsanlage 1b ist beispielsweise als Server und/oder Produktions-Datenverarbeitungsanlage eines Herstellers von Kartenlesegerät 1a ausgebildet.

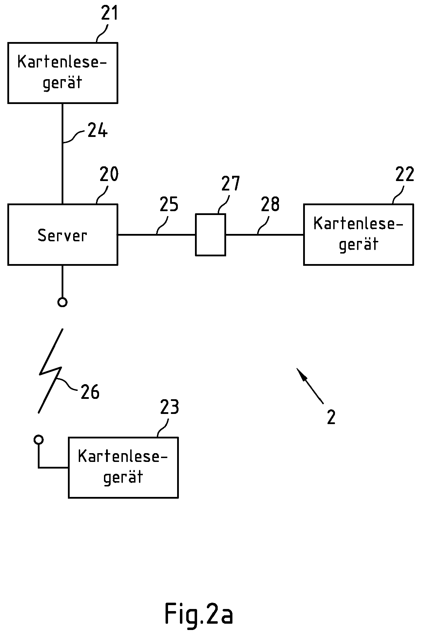

Fig. 2a zeigt ein Blockdiagramm einer beispielhaften Ausführungsform eines erfindungsgemäßen Systems 2. System 2 umfasst einen Server 20, Datenverarbeitungsanlage 27 und Kartenlesegeräte 21, 22 und 23.

Dabei entspricht Server 20 der Datenverarbeitungsanlage 1b aus Fig. 1b; und die Kartenlesegeräte 21-23 sind baugleich mit Kartenlesegerät 1a aus Fig. 1a. Zwischen den Datenschnittstellen 13a der Kartenlesegeräte 21-23 und der Datenschnittstelle 13b von Server 20 besteht jeweils eine Datenverbindung 24, 26 und 25, 28, so dass Daten zwischen Server 20 und Kartenlesegeräten 21-23 ausgetauscht werden können. Datenverbindungen 24 und 25, 28 sind drahtgebunden, wohingegen Datenverbindung 26 drahtlos ist. Grundsätzlich sind sowohl drahtlose als auch drahtgebundene Datenverbindungen in beliebiger Kombination denkbar.

Kartenlesegeräte 21 und 23 sind über Datenverbindung 24 bzw. 26 unmittelbar mit Server 20 verbunden. Dahingegen ist Kartenlesegerät 22 nur mittelbar mit Server 20 verbunden, da in die entsprechende Datenverbindung 25, 28 die Datenverarbeitungsanlage 27 zwischengeschaltet ist. Datenverarbeitungsanlage 27 verfügt vorzugsweise über zwei Datenschnittstellen; über eine Datenschnittstelle (z.B. eine Netzwerk-Datenschnittstelle und/oder eine Funk-Datenschnittstelle) ist es mit Server 20 und über die andere Datenschnittstelle (z.B. eine USB-Datenschnittstelle oder eine Bluetooth-Datenschnittstelle) mit Kartenlesegerät 22 verbunden. Datenverarbeitungsanlage 27 ist beispielsweise (als Protokollumsetzer ausgebildet und) derart eingerichtet, dass sie von Server 20 über Datenverbindung 25 empfangene und für Kartenlesegerät 22 bestimmte Datenpakete über Datenverbindung 28 an Kartenlesegerät 22 unverändert weiterleitet.

Die baugleichen Kartenlesegeräte 21-23 sind z.B. Kartenlesegeräte desselben Herstellers und Server 20 ist z.B. eine Produktions-Datenverarbeitungsanlage und/oder ein Server des Herstellers dieser Kartenlesegeräte.

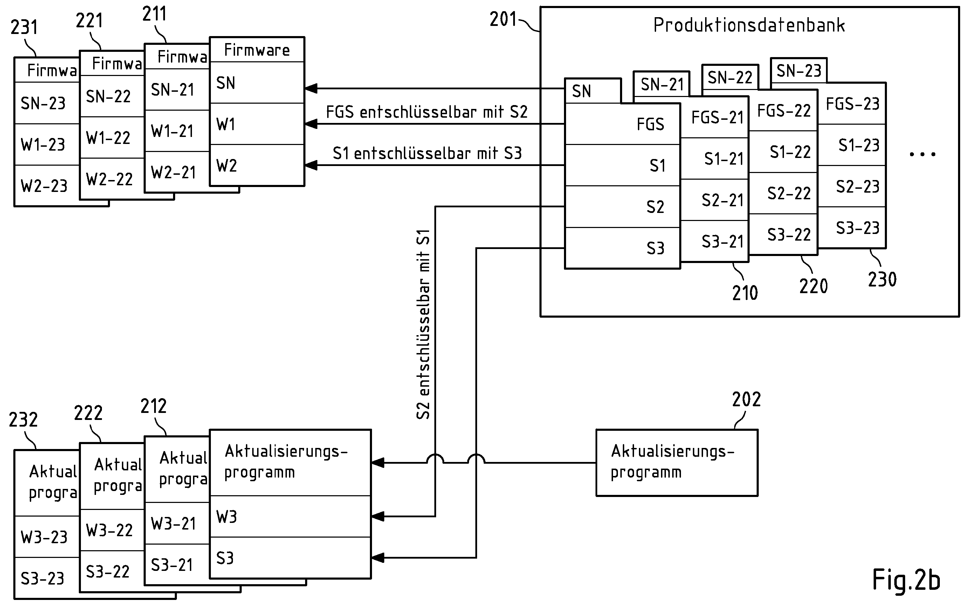

Fig. 2b zeigt im Hinblick auf den ersten Aspekt der Erfindung ein Blockdiagramm einiger beispielhafter Ausführungsformen erfindungsgemäßer Datenpakete 212, 222 und 232, Firmwarespeicherbereiche 211, 221 und 231 und einer Produktionsdatenbank 201 gemäß System 2 aus Fig. 2a.

Bei der Produktion von Kartenlesegeräten, die baugleich zu Kartenlesegerät 1a sind, wird jedem Kartenlesegerät jeweils eine unterschiedliche Seriennummer SN zugeteilt und im Firmwarespeicherbereich 121a der Kartenlesegeräte gespeichert. Des Weiteren werden jeweils die Firmware, ein Wert W1 und ein Wert W2 im Firmwarespeicherbereich der Kartenlesegeräte gespeichert, wobei der Wert W1 und der Wert W2 für jedes der Kartenlesegeräte jeweils unterschiedlich sind. Alternativ können die Seriennummer und die Schlüssel W1 und W2 z.B. in separaten Speicherbereichen, wie einem Speicherbereich für die Seriennummer und einem Schlüssel-Speicherbereich, gespeichert werden.

Der Wert W1 ist ein verschlüsselter Freigabe-Schlüssel (FGS), der für jedes der Kartenlesegeräte unterschiedlich und mit einem Schlüssel S2 entschlüsselbar ist. Der Wert W2 ist ein weiterer verschlüsselter Schlüssel S1, der für jedes der Kartenlesegeräte unterschiedlich und mit einem Schlüssel S3 entschlüsselbar ist.

Die Schlüssel FGS, S1, S2 und S3 werden bei der Produktion der baugleichen Kartenlesegeräte für jedes der Kartenlesegeräte jeweils (beispielsweise zufällig) generiert und z.B. zusammen mit der Seriennummer SN in einem Eintrag in Produktionsdatenbank 201 (z.B. in Speicherbereich 121b) auf Server 20 gespeichert. Alternativ sind die Schlüssel FGS, S1, S2 und S3 z.B. aus der Seriennummer der Kartenlesegeräte mit Hilfe eines Masterschlüssels in einem optionalen Hardware Sicherheitsmodul ableitbar, so dass diese nicht in der Produktionsdatenbank gespeichert werden müssen.

In Fig. 2b ist für jedes der Kartenlesegeräte 21-23 aus Fig. 2a jeweils der Firmwarespeicherbereich 211, 221 bzw. 231 und der Eintrag 210, 220 bzw. 230 in der Produktionsdatenbank 201 nach der vollendeten Produktion der Kartenlesegeräte beispielhaft gezeigt.

Ist nun beispielsweise eine Aktualisierung der Firmware der baugleichen Kartenlesegeräte 21-23 notwendig, dann wird für jedes der produzierten Kartenlesegeräte jeweils ein individuelles, d.h. einzigartiges Datenpaket erstellt, das ein Aktualisierungsprogramm, einen dritten Wert W3 und einen Schlüssel S3 enthält. Dabei sind die Werte W3 und die Schlüssel S3 in jedem der Datenpakete jeweils unterschiedlich, und das Aktualisierungsprogramm ist in jedem der Datenpakete jeweils gleich. Der Wert W3 ist ein verschlüsselter Schlüssel S2, der für jedes der Datenpakete jeweils unterschiedlich und mit einem Schlüssel S1 entschlüsselbar ist.

Das Aktualisierungsprogramm enthält beispielsweise zumindest Teile (z.B. einige Blöcke) eines Speicherabbilds der aktualisierten Firmware. Da die Firmware für alle Kartenlesegeräte gleich ist, ist auch das Aktualisierungsprogramm bzw. das Speicherabbild der Firmware für alle Kartenlesegeräte gleich.

Des Weiteren enthält das Datenpaket z.B. eine digitale Signatur des Aktualisierungsprogramms.

In Fig. 2b ist für jedes der Kartenlesegeräte 21-23 aus Fig. 2a das jeweilige (individuelle) Datenpaket 212, 222 und 232 beispielhaft gezeigt.

Die Werte W1, W2 bzw. W3 enthalten die Schlüssel FGS, S1 bzw. S2 z.B. symmetrisch oder asymmetrisch verschlüsselt. Selbstverständlich können einige der Werte W1, W2 bzw. W3 die Schlüssel FGS, S1 bzw. S2 symmetrisch und andere die Schlüssel FGS, S1 bzw. S2 asymmetrisch verschlüsselt enthalten. Dadurch kann z.B. ein guter Kompromiss zwischen der Sicherheit und Komplexität der verwendeten Verschlüsselungsverfahren gefunden werden.

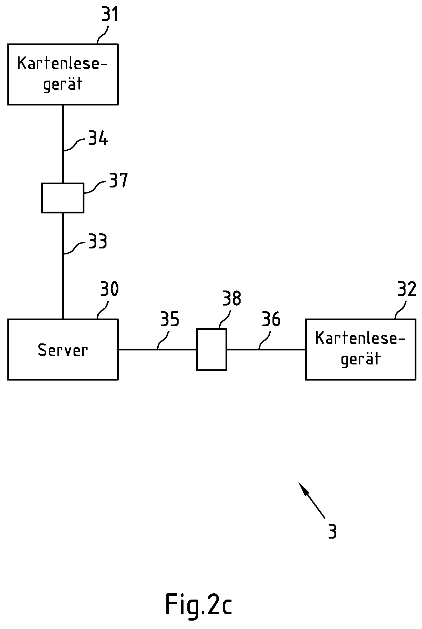

Fig. 2c zeigt ein Blockdiagramm einer beispielhaften Ausführungsform eines erfindungsgemäßen Systems 3. System 3 umfasst einen Server 30, Datenverarbeitungen 37 und 38, und Kartenlesegeräte 31 und 32.

Dabei entspricht Server 30 der Datenverarbeitungsanlage 1b aus Fig. 1b; und die Kartenlesegeräte 31-32 sind baugleich mit Kartenlesegerät 1a aus Fig. 1a. Zwischen den Datenschnittstellen 13a der Kartenlesegeräte 31-32 und der Datenschnittstelle 13b von Server 30 besteht jeweils eine Datenverbindung 33, 34 und 35, 36, so dass Daten zwischen Server 30 und Kartenlesegeräten 31-32 ausgetauscht werden können. Die Datenverbindungen können sowohl drahtgebunden als auch drahtlos sein.

Kartenlesegeräte 31 bzw. 32 sind nur mittelbar mit Server 30 verbunden, da in die entsprechende Datenverbindungen 33, 34 bzw. 35, 36 die Datenverarbeitungsanlagen 37 bzw. 38 zwischengeschaltet sind. Datenverarbeitungsanlagen 37 und 38 verfügen vorzugsweise über zwei Datenschnittstellen, über eine Datenschnittstelle (z.B. eine Netzwerk-Datenschnittstelle und/oder eine Funk-Datenschnittstelle) sind sie z.B. mit Server 30 und über die andere Datenschnittstelle (z.B. eine USB-Datenschnittstelle oder Bluetooth-Datenschnittstelle) mit dem jeweiligen Kartenlesegerät verbunden. Datenverarbeitungsanlagen 37 bzw. 38 sind beispielsweise derart eingerichtet, dass sie von Server 20 über Datenverbindung 33 bzw. 35 empfangene und für Kartenlesegeräte 31 bzw. 32 bestimmte Datenpakete vorverarbeiten und anschließend über Datenverbindungen 34 bzw. 36 an Kartenlesegeräte 31 bzw. 32 (verändert, d.h. z.B. nur teilweise) weiterleiten.

Die baugleichen Kartenlesegeräte 31 und 32 sind z.B. Kartenlesegeräte desselben Herstellers und Server 30 ist z.B. eine Produktions-Datenverarbeitungsanlage und/oder ein Server des Herstellers dieser Kartenlesegeräte.

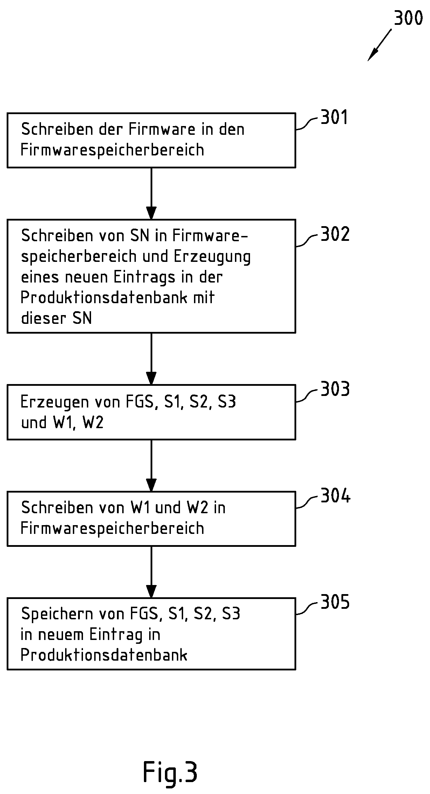

Fig. 3 zeigt im Hinblick auf den ersten Aspekt der Erfindung ein Ablaufdiagramm 300 mit Verfahrensschritten einer beispielhaften Ausführungsform eines dritten erfindungsgemäßen Verfahrens, die ablaufen, wenn jeweils ein Kartenlesegerät einer Vielzahl von Kartenlesegeräten (z.B. Kartenlesegeräte 21-23), die baugleich zu Kartenlesegerät 1a sind, produziert wird. Die Verfahrensschritte können z.B. auf Datenverarbeitungsanlage 1b während der Produktion der Kartenlesegeräte ablaufen.

In einem Schritt 301 wird die Firmware des Kartenlesegeräts in Firmwarespeicherbereich 121a des Kartenlesegeräts geschrieben. Im gleichen Schritt kann beispielsweise auch ein Bootloader-Programm in Speicherbereich 122a geschrieben werden. Alternativ kann das Bootloader-Programm beispielsweise auch schon fest, d.h. z.B. unveränderlich in Speicherbereich 122a von Programmspeicher 12a einprogrammiert sein. Es ist denkbar, dass die Firmware und/oder das Bootloader-Programm gleichzeitig in den Programmspeicher einer Vielzahl von baugleichen Kartenlesegeräten geschrieben wird, die mit Datenverarbeitungsanlage 1b verbunden sind. Zum Beispiel könnte Datenverarbeitungsanlage 1b ein Datenpaket mit der Firmware und/oder dem Bootloader-Programm für die mit Datenverarbeitungsanlage 1b (während der Produktion) verbundenen Kartenlesegeräte erhalten.

In einem weiteren Schritt 302 wird die Seriennummer SN des Kartenlesegeräts in den Firmwarespeicherbereich 121a geschrieben und es wird ein neuer Eintrag für das Kartenlesegerät in der Produktionsdatenbank (z.B. Produktionsdatenbank 201) erzeugt. Die Seriennummer SN des Kartenlesegeräts wird z.B. derart gewählt, dass sie sowohl das Kartenlesegerät als auch den neu erzeugten Eintrag in der Produktionsdatenbank eindeutig identifiziert. Zum Beispiel ist die Seriennummer in Firmware-speicherbereich 211 von Kartenlesegerät 21 SN-21 und der zugehörige Eintrag 210 in der Produktionsdatenbank 201 wird ebenfalls mit SN-21 identifiziert (siehe Fig. 2a und 2b). Die Seriennummer ist z.B. eine auf- oder absteigende Zahlenfolge und/oder Zahlen-Buchstaben-Kombination.

In einem weiteren Schritt 303 werden zunächst der Freigabe-Schlüssel FGS und die Schlüssel S1, S2 und S3 für dieses Kartenlesegerät z.B. mit Hilfe eines Zufallsgenerators erzeugt. Alternativ sind die Schlüssel FGS, S1, S2 und S3 z.B. aus der Seriennummer des Kartenlesegeräts mit Hilfe eines Masterschlüssels durch ein optionales Hardware Sicherheitsmodul von Datenverarbeitungsanlage 1b ableitbar. Die Schlüssel FGS, S1, S2 und S3 werden derart erzeugt (bzw. abgeleitet), dass sie für jedes der baugleichen Kartenlesegeräte (z.B. Kartenlesegeräte 21-23) unterschiedlich, d.h. für lediglich jeweils eines der baugleichen Kartenlesegeräte angepasst sind. Zum Beispiel sind die für Kartenlesegerät 21 erzeugten Schlüssel mit FGS-21, S1-21, S2-21 und S3-21 bezeichnet und nur an dieses Kartenlesegerät 21 angepasst.

Des Weiteren werden in Schritt 303 die Schlüssel FGS bzw. S1 als Werte W1 bzw. W2 verschlüsselt, die mit den Schlüsseln S2 bzw. S3 entschlüsselbar sind. Für Kartenlesegerät 21 sind dies beispielsweise die Werte W1-21 bzw. W2-21, die mit den Schlüsseln S2-21 bzw. S3-21 entschlüsselbar sind.

Die Werte W1 bzw. W2 können z.B. mit Hilfe eines symmetrischen Verschlüsselungsverfahrens aus den Schlüsseln FGS und S2 bzw. S1 und S3 erzeugt werden. In diesem Fall wären die Schlüssel S2 bzw. S3 die geheimen Schlüssel, mit deren Hilfe sowohl die Schlüssel FGS bzw. S1 verschlüsselt werden als auch wieder entschlüsselbar sind.

Alternativ können die Werte W1 bzw. W2 z.B. mit Hilfe eines asymmetrischen Verschlüsselungsverfahrens aus den Schlüsseln FGS bzw. S1 erzeugt werden. In diesem Fall wären die Schlüssel S2 bzw. S3 die privaten Schlüssel, mit deren Hilfe die Schlüssel FGS bzw. S1 wieder entschlüsselbar sind. Für die Verschlüsselung der Schlüssel FGS bzw. S1 zur Erzeugung der Werte W1 bzw. W2 müssten aber noch entsprechende öffentliche Schlüssel erzeugt werden, die gegebenenfalls auch in dem Eintrag der Produktionsdatenbank gespeichert werden.

Selbstverständlich kann z.B. einer der Werte W1 bzw. W2 mit Hilfe eines asymmetrischen und der andere mit Hilfe eines symmetrischen Verschlüsselungsverfahrens erzeugt werden.

Beispiele für symmetrische Verschlüsselungsverfahren sind z.B. Blockverschlüsselungsverfahren wie AES, DES, DEA, Twofish oder IDEA. Ein Beispiel für asymmetrische Verschlüsselungsverfahren ist z.B. das RSA-Verfahren.

In einem weiteren Schritt 304 werden die Werte W1 und W2 in den Firmwarespeicherbereich 121a des Kartenlesegeräts geschrieben. Die Werte W1 und W2 sind für jedes der baugleichen Kartenlesegeräte (z.B. Kartenlesegeräte 21-23) unterschiedlich, da die Schlüssel FGS, S1, S2 und S3 ebenfalls unterschiedlich sind.

Die Werte in Firmwarespeicherbereich 211 von Kartenlesegerät 21 sind z.B. W1-21 und W2-21 (siehe Fig. 2a und 2b).

In einem weiteren Schritt 305 werden die Schlüssel FGS, S1, S2 und S3 in dem neu erzeugten Eintrag in der Produktionsdatenbank (z.B. Produktionsdatenbank 201) gespeichert. Außerdem können in dem neu erzeugten Eintrag in der Produktionsdatenbank gegebenenfalls noch weitere private und/oder öffentliche Schlüssel, geheime Schlüssel oder sonstige Information, die das Kartenlesegerät betreffen, gespeichert werden.

In Eintrag 210 von Produktionsdatenbank 201 sind beispielsweise die Schlüssel FGS-21, S1-21, S2-21 und S3-21 für das Kartenlesegerät 21 eingetragen (siehe Fig. 2b).

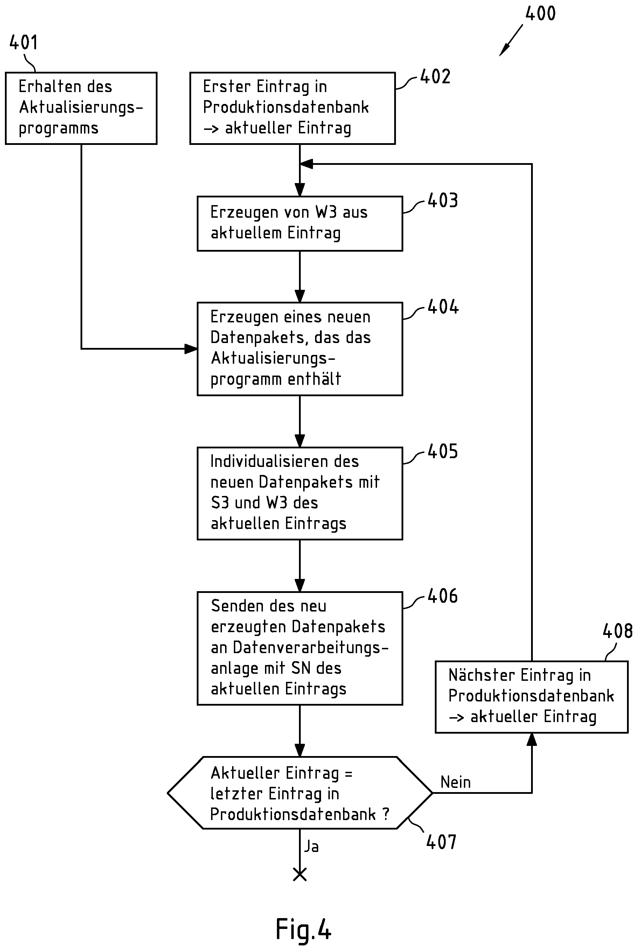

Fig. 4 zeigt im Hinblick auf den ersten Aspekt der Erfindung ein Ablaufdiagramm 400 mit Verfahrensschritten einer beispielhaften Ausführungsform eines zweiten erfindungsgemäßen Verfahrens, die auf Datenverarbeitungsanlage 1b ablaufen, wenn erfindungsgemäße Datenpakete erstellt und ausgegeben werden.

In einem ersten Schritt wird ein Aktualisierungsprogramm erhalten, das, wenn es aufbaugleichen Kartenlesegeräten (z.B. Kartenlesegeräte 21-23) verarbeitet wird, die Firmware oder zumindest Teile (z.B. einige Blöcke) der Firmware der Kartenlesegeräte aktualisiert.

In einem weiteren Schritt 402 wird der erste Eintrag in der Produktionsdatenbank (z.B. Produktionsdatenbank 201) der baugleichen Kartenlesegeräte geöffnet, für die das Aktualisierungsprogramm bestimmt ist.

Im Folgenden wird davon ausgegangen, dass das Aktualisierungsprogramm für Kartenlesegeräte 21-23 aus Fig. 2a bestimmt ist. Folglich wird Eintrag 210 in Produktionsdatenbank 201 geöffnet. Dies ist der zum Kartenlesegerät 21 mit der Seriennummer SN-21 gehörige Eintrag. Dieser Eintrag ist nun der aktuelle Eintrag.

In einem weiteren Schritt 403 wird der Schlüssel S2-21 als Wert W3-21 verschlüsselt, der mit Hilfe des Schlüssels S1-21 entschlüsselbar ist.

Der Wert W3-21 kann z.B. aus dem Schlüssel S2-21 mit Hilfe eines symmetrischen oder asymmetrischen Verschlüsselungsverfahrens derart erzeugt werden, dass der Schlüssel S2-21 mit Hilfe des Schlüssels S1-21 aus dem Wert W3-21 entschlüsselbar ist. Dabei ist der Schlüssel S1-21 entweder der private oder der geheime Schlüssel des Verschlüsselungsverfahrens.

In einem weiteren Schritt 404 wird ein neues Datenpaket 212 erzeugt, das zunächst nur das Aktualisierungsprogramm enthält. Das Aktualisierungsprogramm ist für alle Datenpakete gleich. Des Weiteren kann das neue Datenpaket z.B. eine für alle Datenpakete gleiche digitale Signatur des Aktualisierungsprogramms und/oder z.B. ein Entschlüsselungsprogramm enthalten.

Die digitale Signatur wird entweder als zusätzlicher Verfahrensschritt in Ablaufdiagramm 400 erzeugt oder bereits zusammen mit dem Aktualisierungsprogramm an der Datenverarbeitungsanlage erhalten.

Die digitale Signatur wird aus dem mit einer Hash-Funktion (wie z.B. einer sicheren Hash Algorithmus SHA-Funktion wie z.B. SHA-2) berechneten eindeutigen Hash-Wert des Aktualisierungsprogramms und einem privaten Signaturschlüssel mit Hilfe eines asymmetrischen Verschlüsselungsverfahrens erzeugt.

In einem weiteren Schritt 405 wird dem neuen Datenpaket 212 der erzeugte Wert W3-21 und der Schlüssel S3-21 hinzugefügt. Sowohl der Wert W3-21 bzw. der Schlüssel S2-21 als auch der Schlüssel S3-21 sind lediglich an Kartenlesegerät 21 angepasst. Zum Beispiel wurden Schlüssel S2-21 und S3-21 bei der Produktion mit Hilfe eines Zufallsgenerators nur für Kartenlesegerät 21 erzeugt oder z.B. durch ein Hardware Sicherheitsmodul aus der Seriennummer des Kartenlesegeräts abgeleitet. Deshalb wird in Schritt 405 das Datenpaket durch das Hinzufügen von Wert W3-21 und Schlüssel S3-21 individualisiert.

In einem optionalen Schritt können zumindest teilweise neue Schlüssel FGS-21, S1-21, S2-21 und/oder S3-21 bzw. neue Werte W1-21 und W2-21 entsprechend Schritt 303 in Ablaufdiagramm 300 für Kartenlesegerät 21 erzeugt bzw. abgeleitet werden. Diese neuen Werte W1-21 und W2-21 können Datenpaket 212 z.B. hinzugefügt werden, um die in Firmwarespeicherbereich 212 gespeicherten Werte zu ersetzen. Die neuen Schlüssel müssten dann außerdem entsprechend zu Schritt 305 in Ablaufdiagramm 300 in der Produktionsdatenbank 201 gespeichert werden, d.h. z.B. die dort gespeicherten Schlüssel ersetzen.

In einem weiteren Schritt 406 wird das Datenpaket 212 (z.B. identifiziert anhand der Seriennummer SN-21 oder basierend auf einem Adresseintrag in Eintrag 210 der Produktionsdatenbank 201) über Datenverbindung 24 an Kartenlesegerät 21 gesendet. Alternativ ist beispielsweise denkbar, dass Kartenlesegerät 21 Datenpaket 212 mit Hilfe seiner Seriennummer SN-21 über Datenverbindung 24 anfordert und das Datenpaket 212 daraufhin an Kartenlesegerät 21 gesendet wird. Im Fall von Kartenlesegerät 22 ist beispielsweise denkbar, dass ein entsprechendes Datenpaket für Kartenlesegerät 22 über Datenverbindung 25 an die mit Kartenlesegerät 22 verbundene Datenverarbeitungsanlage 27 gesendet und/oder von Datenverarbeitungsanlage 27 angefordert wird. Dasselbe gilt auch für Kartenlesegeräte 31 und 32 aus Fig. 2c.

Die Anzahl der Abrufe von Datenpaketen kann z.B. begrenzt sein, um zu verhindern, dass ein Angreifer viele Datenpakete (für eins oder mehrere der Kartenlesegeräte) abrufen und einer systematischen Analyse unterziehen kann.

In einem weiteren Schritt 407 wird überprüft, ob der aktuelle Eintrag 210 der letzte Eintrag in der Produktionsdatenbank 201 ist. Ist der aktuelle Eintrag nicht der letzte Eintrag, werden die Schritte 403-406 für den nächsten Eintrag in der Produktionsdatenbank wiederholt.

Im vorliegenden Fall heißt das, dass die Schritte 403-406 jeweils für die Einträge 220 und 230 in Produktionsdatenbank 201 wiederholt werden. Dabei werden die Datenpakete 222 bzw. 232 enthaltend die Werte W3-22 bzw. W3-23, die Schlüssel S3-22 bzw. S3-23 und jeweils das Aktualisierungsprogramm erzeugt und an Kartenlesegeräte 22 bzw. 23 über Datenverbindungen 25 bzw. 26 gesendet.

Alternativ werden die Schritte 403-406 z.B. für jeden der Einträge in der Produktionsdatenbank jeweils ausgeführt, wenn ein entsprechendes Datenpaket z.B. von dem dazugehörigen Kartenlesegerät angefordert wird. Die Pakete könnten auch "ad hoc" erzeugt werden, wenn eine "Update Manager" Software auf einer mit dem jeweiligen Kartenlesegerät verbundenen Datenverarbeitungsanlage gestartet wird. Diese meldet dem Server die Seriennummer des angeschlossenen Kartenlesegeräts (ggf. mit einer zusätzlichen Authentisierung mittels eines der im Kartenlesegerät gespeicherten Schlüssels, um "Brute Force" Attacken zu vermeiden) und fordert dort das Datenpaket für das jeweilige Kartenlesegerät an.

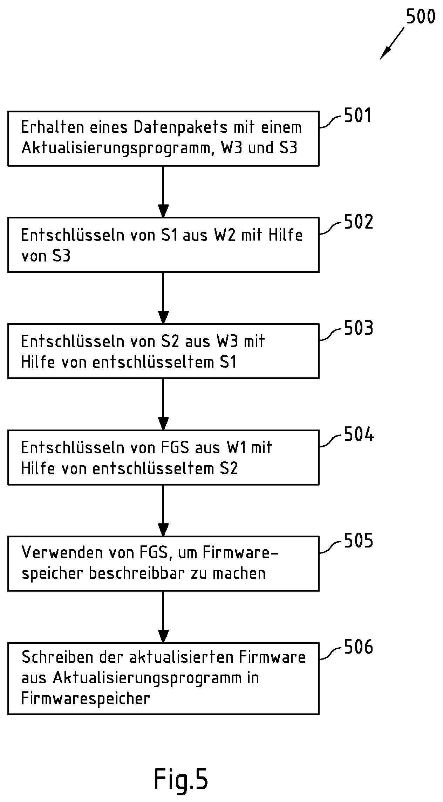

Fig. 5 zeigt im Hinblick auf den ersten Aspekt der Erfindung ein Ablaufdiagramm 500 mit Verfahrensschritten einer beispielhaften Ausführungsform eines ersten erfindungsgemäßen Verfahrens, die ablaufen, wenn ein erfindungsgemäßes Kartenlesegerät 1a und/oder eine mit einem erfindungsgemäßen Kartenlesegerät 1a verbundene Datenverarbeitungsanlage ein erfindungsgemäßes Datenpaket erhält. Das Verfahren wird beispielsweise zumindest teilweise von dem Bootloader-Programm, das auf dem Kartenlesegerät läuft, ausgeführt.

In einem ersten Schritt 501 erhält das Kartenlesegerät oder eine damit verbundene Datenverarbeitungsanlage ein erfindungsgemäßes Datenpaket mit einem Aktualisierungsprogramm, einem Wert W3 und einem Schlüssel S3.

Im Folgenden wird beispielhaft davon ausgegangen, dass Kartenlesegerät 21 aus Fig. 2a Datenpaket 212 aus Fig. 2b von Server 20 über Datenverbindung 24 empfängt. Datenpaket 212 enthält unter anderem den Wert W3-21 und Schlüssel S3-21, und Firmwarespeicherbereich 211 von Kartenlesegerät 21 enthält neben der Firmware unter anderem die Werte W1-21 und W2-21.

Aus den Werten W1-21, W2-21 bzw. W3-21 sind mit Hilfe der Schlüssel S2-21, S3-21 bzw. S1-21 die Schlüssel FGS-21, S1-21 und S2-21 entschlüsselbar.

In einem Schritt 502 wird dazu zunächst Schlüssel S1-21 aus Wert W2-21 mit Hilfe von Schlüssel S3-21 entschlüsselt.

Zum Beispiel enthält das Bootloader-Programm von Kartenlesegerät 21 Programmanweisungen zur Entschlüsselung von Wert W2-21 mit Hilfe eines im erhaltenen Datenpaket unverschlüsselt enthaltenen Schlüssels S3-21 und einem dafür geeigneten Entschlüsselungsverfahren. Dies kann sowohl ein symmetrisches als auch ein asymmetrisches Entschlüsselungsverfahren sein.

In einem weiteren Schritt 503 wird dann Schlüssel S2-21 aus Wert W3-21 mit Hilfe des im Schritt 502 entschlüsselten Schlüssels S1-21 entschlüsselt.

Zum Beispiel enthält das Bootloader-Programm von Kartenlesegerät 21 Programmanweisungen zur Entschlüsselung von Wert W3-21 mit Hilfe des zuvor entschlüsselten Schlüssels S1-21 und einem dafür geeigneten Entschlüsselungsverfahren. Dies kann sowohl ein symmetrisches als auch ein asymmetrisches Entschlüsselungsverfahren sein.

In einem weiteren Schritt 504 wird Freigabe-Schlüssel FGS-21 aus Wert W1-21 mit Hilfe des im Schritt 503 entschlüsselten Schlüssels S2-21 entschlüsselt.

Zum Beispiel enthält das Bootloader-Programm von Kartenlesegerät 21 Programmanweisungen zur Entschlüsselung von Wert W1-21 mit Hilfe des zuvor entschlüsselten Schlüssels S2-21 und einem dafür geeigneten Entschlüsselungsverfahren. Dies kann sowohl ein symmetrisches als auch ein asymmetrisches Entschlüsselungsverfahren sein.

Die in den Schritten 502-504 verwendeten Entschlüsselungsverfahren können z.B. zumindest teilweise bei der Produktion von Kartenlesegerät 21 feststehen, so dass das Bootloader-Programm entsprechende Programmanweisungen enthalten kann. Es ist aber auch denkbar, dass insbesondere das zur Entschlüsselung von W3-21 geeignete Entschlüsselungsverfahren bei der Produktion noch nicht feststeht, so dass z.B. in Datenpaket 212 Informationen zu den geeigneten Entschlüsselungsverfahren enthalten sein müssen, um z.B. dem Bootloader-Programm anzuzeigen, wie die Werte (insbesondere Wert W3-21) zu entschlüsseln sind.

Alternativ ist beispielsweise denkbar, dass die Schritte 502-504 durch ein in Datenpaket 212 enthaltenes und z.B. auf dem Kartenlesegerät ausgeführtes Entschlüsselungsprogramm ausgeführt werden, das z.B. vom Bootloader-Programm aufgerufen wird.

In einem weiteren Schritt 505 wird der im Schritt 504 entschlüsselte Freigabe-Schlüssel verwendet, um den Firmwarespeicherbereich 211 beschreibbar zu machen. Zum Beispiel könnte die gesamte Firmware nur mit dem Freigabe-Schlüssel entschlüsselbar sein.

In einem weiteren Schritt 506 wird die Firmware im Firmwarespeicherbereich mit der im Aktualisierungsprogramm enthaltenen aktualisierten Firmware ersetzt.

Zum Beispiel enthält das Bootloader-Programm von Kartenlesegerät 21 Programmanweisungen zum Ersetzen der Firmware mit der im Aktualisierungsprogramm enthaltenen aktualisierten Firmware. Dabei wird die Firmware des Kartenlesegeräts 21 z.B. blockweise gelöscht und mit dem entsprechenden Block eines Speicherabbilds der aktualisierten Firmware beschrieben.

Es ist insbesondere denkbar, dass mehrere Datenpakete zum Ersetzen der gesamten Firmware notwendig sind, da z.B. der Programm- und/oder Hauptspeicher nicht groß genug ist, um zwei Firmwareversionen gleichzeitig vollständig zu speichern.

In einem optionalen Schritt werden die Werte W1-21 und/oder W2-21 bzw. die Schlüssel FGS-21 und/oder S1-21 verändert. Zum Beispiel enthält das Datenpaket neue Werte W1-21 und/oder W2-21, die die im Firmwarespeicherbereich 121a gespeicherten Werte W1-21 und/oder W2-21 ähnlich wie die Firmware ersetzen. Zum Beispiel enthält das Bootloader-Programm von Kartenlesegerät 21 Programmanweisungen zum Ersetzen der Werte W1-21 und/oder W2-21 durch die neuen Werte.

In einem weiteren optionalen Schritt wird die Signatur der aktualisierten Firmware (bzw. des Aktualisierungsprogramms) überprüft. Dieser Schritt wird beispielsweise vor oder nach Schritt 506 durchgeführt, wenn das Datenpaket eine digitale Signatur der aktualisierten Firmware enthält.

Beim Prüfen der Signatur der aktualisierten Firmware wird die in dem erhaltenen Datenpaket enthaltene digitale Signatur mit Hilfe des dazugehörigen öffentlichen Signaturschlüssels entschlüsselt. Dadurch wird z.B. der mit einer Hash-Funktion (wie z.B. SHA-2) eindeutig (z.B. beim Erzeugen des Datenpakets) berechnete Hash-Wert der aktualisierten Firmware erhalten. Des Weiteren wird der Hash-Wert der im erhaltenen Datenpaket enthaltenen aktualisierten Firmware mit derselben Hash-Funktion berechnet und mit dem entschlüsselten Hash-Wert verglichen. Stimmen beide Hash-Werte überein, so ist die aktualisierte Firmware vertrauenswürdig. Stimmen die Hash-Werte nicht überein wird z.B. eine Fehlermeldung ausgegeben und Kartenlesegerät 21 wird beispielsweise deaktiviert. Der öffentliche Signaturschlüssel ist z.B. in dem Datenpaket enthalten, in Programmspeicher 12a gespeichert und/oder kann über eine Netzwerkverbindung abgerufen werden.

Im Fall der Kartenlesegeräte 31 und 32 aus Fig. 2c ist beispielsweise denkbar, dass einige oder alle der Verfahrensschritte 501-505 aus Fig. 5 auf der mit den Kartenlesegeräten verbundenen Datenverarbeitungsanlage 37 bzw. 38 ausgeführt werden. Zum Beispiel kann das in dem Datenpaket enthaltene Aktualisierungsprogramm und/oder ein im Datenpaket enthaltenes Entschlüsselungsprogramm Programmanweisungen enthalten, die die Datenverarbeitungsanlagen 37 bzw. 38 zur Ausführung von Verfahrensschritten 501-505 veranlassen, wenn sie auf dem Prozessor von Datenverarbeitungsanlagen 37 bzw. 38 ausgeführt werden. Vorzugsweise werden allerdings zumindest die Schritte 504-506 und die optionale Signaturprüfung von den Kartenlesegerät 31 und 32 ausgeführt, um eine Manipulation des Aktualisierungsprogramms auf den Datenverarbeitungsanlagen 37 bzw. 38 auszuschließen.

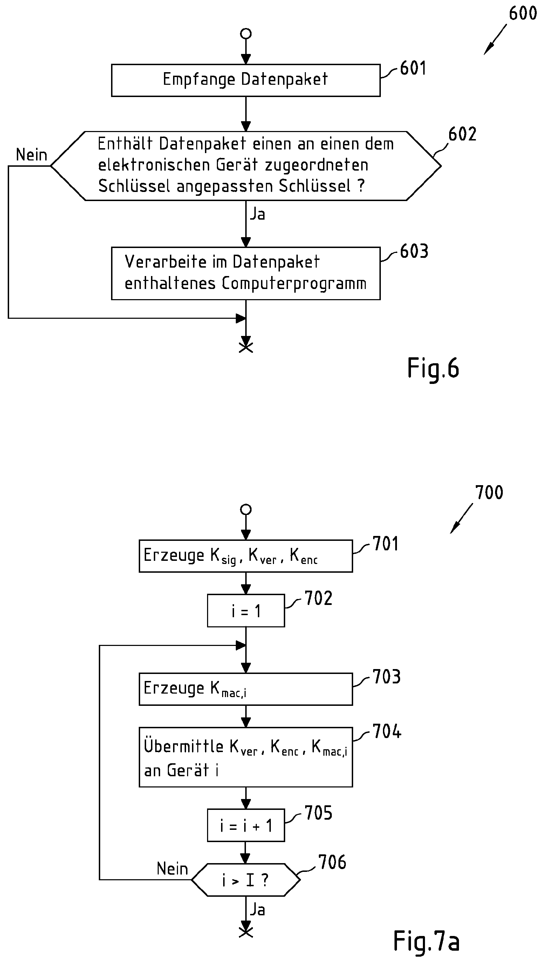

Im Folgenden werden anhand der Fig. 6, 7a-7c und 8a-8d beispielhafte Ausführungsformen des zweiten Aspekts der vorliegenden Erfindung beschrieben.

Fig. 6 zeigt diesbezüglich ein Ablaufdiagramm 600, das die Verarbeitung bei Empfang eines Datenpaketes gemäß dem zweiten Aspekt der vorliegenden Erfindung in allgemeiner Form beschreibt.

Zunächst wird in einem Schritt 601 ein Datenpaket von einem Server (beispielsweise dem Server 1b der Fig. 1b) erhalten, beispielsweise an einem elektronischen Gerät (beispielsweise an dem Kartenlesegerät 1a der Fig. 1a), wie es für die Kartengeräte 21-23 in Fig. 2a dargestellt ist. Alternativ kann das Datenpaket auch an einer Datenverarbeitungsanlage erhalten werden, die mit dem elektronischen Gerät (drahtlos oder drahtgebunden) verbunden ist, beispielsweise einem Client-Computer, an dem dann eine Vorverarbeitung stattfindet, bevor zumindest Teile des Datenpakets an das elektronische Gerät weitergeleitet werden, wie zu Fig. 2c beschrieben wurde, in der die Kartenlesegeräte 31 und 32 Beispiele für das elektronische Gerät und die Datenverarbeitungsanlagen 37 und 38 Beispiele für die Client-Computer darstellen.

In einem Schritt 602 wird geprüft, ob das Datenpaket einen Schlüssel enthält, der an einen dem elektronischen Gerät zugeordneten Schlüssel angepasst ist. Dieser Schritt kann beispielsweise von dem elektronischen Gerät vorgenommen werden, insbesondere von Prozessor 10a (siehe Fig. 1a), beispielsweise beruhend auf Anweisungen des im Speicherbereich 122a gespeicherten Bootloader-Programms. Dies kann beispielsweise die Prüfung enthalten, ob der in dem Datenpaket enthaltene Schlüssel von einem dem elektronischen Gerät zugeordneten Schlüssel oder von einem mit diesem assoziierten Schlüssel abhängt. Beispielsweise kann der in dem Datenpaket enthaltene Schlüssel durch Anwendung des dem elektronischen Gerät zugeordneten Schlüssels (oder eines Schlüssels, der mit dem dem elektronischen Gerät zugeordneten Schlüssel assoziiert ist, beispielsweise weil beide Schlüssel ein asymmetrisches Schlüsselpaar bilden) auf Daten erzeugt worden sein. Durch Anwendung des dem elektronischen Gerät zugeordneten Schlüssels auf dieselben Daten kann dann beispielsweise eine Replika des in dem Datenpaket enthaltenen Schlüssels erzeugt und mit dem in dem Datenpaket enthaltenen Schlüssel auf Übereinstimmung geprüft werden. Bei Übereinstimmung würde der Schritt 602 dann ein positives Ergebnis liefern, anderenfalls ein negatives.

Diesem Schritt 602 vorgelagert können weitere optionale Schritte sein, in denen beispielsweise Signaturen des Datenpakets oder seiner Bestandteile geprüft werden, beispielsweise am elektronischen Gerät und/oder an einem ggfs. vorhandenen Client-Computer, der das Datenpaket empfängt wie oben beschrieben. Ein weiterer optional vorgelagerter Schritt ist die Authentisierung des Servers, der das Datenpaket bereitstellt, gegenüber dem elektronischen Gerät und/oder gegenüber dem ggfs. vorhandenen Client-Computer und/oder die Authentisierung des elektronischen Geräts (und/oder des ggfs. vorhandenen Client-Computers) gegenüber dem Server.

Ist die Prüfung im Schritt 602 positiv, wird das im Datenpaket enthaltene Computerprogramm oder der im Datenpaket enthaltene Computerprogrammteil in Schritt 603 im elektronischen Gerät verarbeitet, beispielsweise von dem zuvor beschriebenen Bootloader-Programm des elektronischen Geräts. Das Verarbeiten kann beispielsweise das Entschlüsseln des Computerprogramms(Computerprogrammteils und/oder das Kopieren in einen Firmware-Speicherbereich 121a (siehe Fig. 1a) des elektronischen Geräts beinhalten.

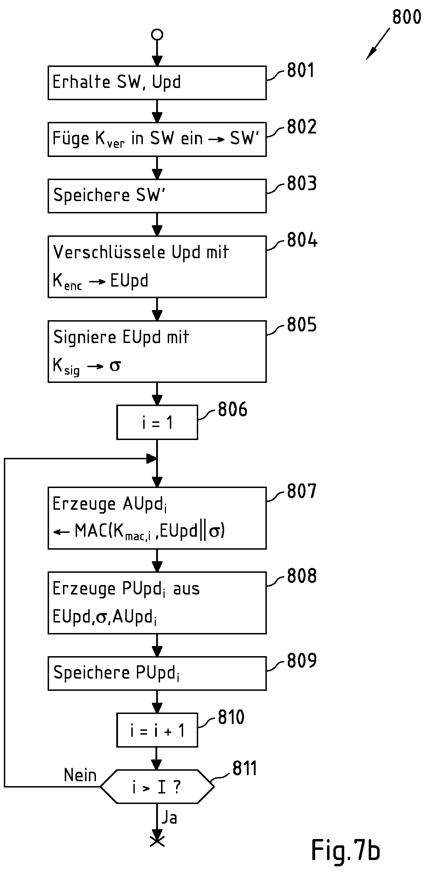

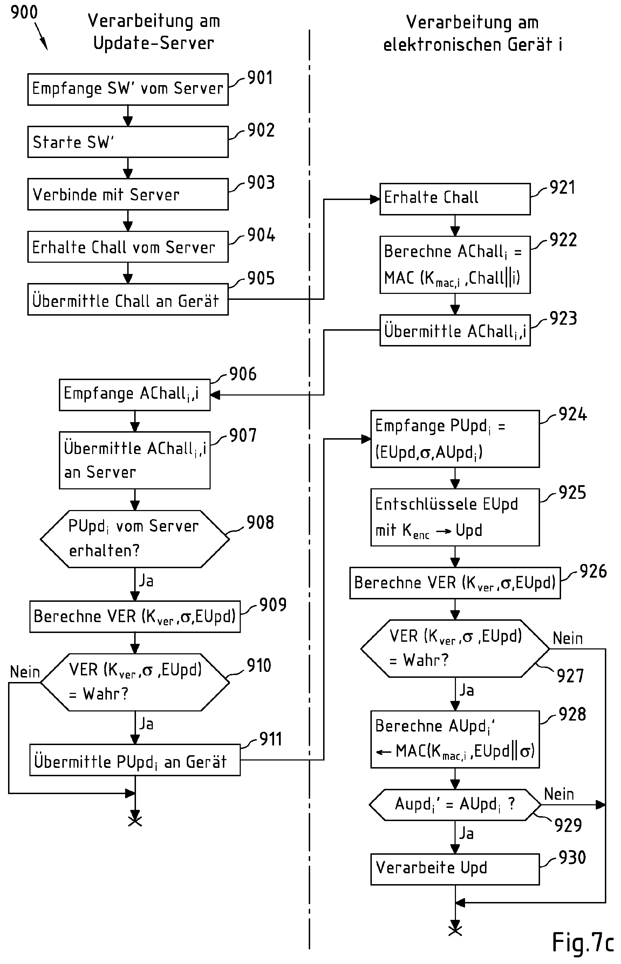

Die Fig. 7a-7c zeigen beispielhafte Ablaufdiagramme von Verfahren, die an einem Server (Fig. 7a und Fig. 7b) bzw. an einem Client-Computer (Fig. 7c, linke Seite) und einem elektronischen Gerät (Fig. 7c, rechte Seite) gemäß dem zweiten Aspekt der Erfindung ausgeführt werden.

Zielsetzung ist hier, ein Protokoll zum Aktualisieren (Update) von Software, beispielsweise von Firmware, auf einem elektronischen Gerät (beispielsweise einem Hardware-Gerät, beispielsweise einem Kartenleser) zu entwickeln. Das Protokoll soll generisch und vorteilhafterweise auf jeglichem elektronischen Gerät anwendbar sein. Das Protokoll soll einen Update-Server, der die Software zur Verfügung stellt, nutzen und eine sichere Verbindung mit diesem aufbauen. Die Verbindung sollte die Authentizität des Update-Servers und/oder des elektronischen Geräts sicherstellen und die Integrität und die Vertraulichkeit der zwischen dem Update-Server und dem elektronischen Gerät übertragenen Daten gewährleisten. Im vorliegenden Ausführungsbeispiel der Fig. 7a-7c kommuniziert das elektronischen Gerät mit dem Update-Server über eine Client-Software, die auf einem Client-Computer läuft, der mit dem elektronischen Gerät verbunden ist (Alternativ ist es aber auch möglich, dass die Client-Software auf dem elektronischen Gerät läuft und kein Client-Computer zwischen dem Update-Server und dem elektronischen Gerät zwischengeschaltet ist.). Die Client-Software wird beispielsweise nur zum Weiterleiten von Datenpaketen genutzt. Zusätzlich zu dem durch die sichere Verbindung gewährleisteten Schutz wird die vom Update-Server übertragene Software digital signiert, beispielsweise von einem Update-Signierer. Es kann sich dabei beispielsweise um einen Offline-Update-Signierer handeln, wobei der Begriff "Offline" charakterisiert, dass der Signaturvorgang mit Signaturkarte (z.B. einer Smartcard) auf einem Computer ausgeführt wird, der nicht mit dem Internet verbunden sein darf. Das Protokoll soll sicherstellen, dass Angriffe von einem Angreifer, der Kontrolle über ein oder mehrere elektronische Geräte hat, nicht auf elektronische Geräte übertragen werden können, die nicht unter der Kontrolle des Angreifers stehen.

Die Möglichkeiten des Angreifers werden wie folgt beschrieben angenommen. Der Angreifer wählt eine Menge von elektronischen Geräten aus, die unter seiner Kontrolle sind. Er kann:

- ein Reverse-Engineering für alle elektronischen Geräte unter seiner Kontrolle durchführen und alle kryptographischen Schlüssel, Zertifikate und Startwerte (Seeds) dieser elektronischen Geräte ermitteln;
- sich als elektronisches Gerät gegenüber dem Update-Server authentisieren und eine sichere Verbindung mit dem Update-Server aufbauen (für alle elektronischen Geräte unter seiner Kontrolle);
- sich gegenüber den elektronischen Geräten unter seiner Kontrolle als Update-Server authentisieren und eine sichere Verbindung mit diesen aufbauen;
- ein Software-Update (beispielsweise ein Firmware-Update) erhalten;
- ein Reverse-Engineering des Software-Updates durchführen, um den Quellcode zu erhalten;
- manipulierte Software-Updates erzeugen; und
- das manipulierte Software-Update auf alle elektronischen Geräte unter seiner Kontrolle anwenden.

Der Angreifer bricht das Protokoll dann erfolgreich, wenn er das manipulierte Software-Update auf ein beliebiges elektronisches Gerät anwendet, das nicht unter seiner Kontrolle steht.

Gemäß dem zweiten Aspekt der vorliegenden Erfindung wird eine derartige Unterminierung eines Protokolls zur Software-Aktualisierung verhindert, wie nachfolgend beschrieben wird. Dabei bezeichnet $n$ einen Sicherheitsparameter ($n$ ist eine natürliche Zahl). Das Protokoll verwendet die folgenden Primitive:

- Ein digitales Signaturschema *SIG = (GEN, SIGN, VER)* (dabei bezeichnet *SIGN* eine Vorschrift zum Signieren und *VER* eine Vorschrift zum Verifizieren einer Signatur). Derartige Signaturschemata sind einem Fachmann auf dem Gebiet der Kryptographie wohlbekannt.
- Eine (beispielsweise block-basierte) Verschlüsselung *CIPHER = (ENC, DEC)* (dabei bezeichnet *ENC* eine Verschlüsselungsvorschrift und *DEC* eine Entschlüsselungsvorschrift) mit einem Schlüsselraum $\{0,1\}^n$ (also binären Schlüsseln der Länge $n$, beispielsweise einem symmetrischen Schlüssel). Derartige Verschlüsselungsverfahren und die zugehörigen Entschlüsselungsverfahren sind einem Fachmann auf dem Gebiet der Kryptographie wohlbekannt.

- Einen Nachrichtenauthentisierungscode (Message Authentication Code, *MAC*) mit Schlüsselraum $\{0,1\}^n$.

Fig. 7a zeigt zunächst ein Ablaufdiagramm 700 eines beispielhaften Initialisierungsverfahrens. Ziel ist hier u.a. die Erzeugung von einer Vielzahl von Schlüsseln $K_{mac,i}$, die jeweils einem elektronischen Gerät $i$ zugeordnet sind. Insgesamt sind $I$ elektronische Geräte vorhanden. Die erzeugten Schlüssel $K_{mac,i}$ können den jeweiligen elektronischen Geräten $i$ beispielsweise jeweils bei der Produktion eingeschrieben werden, beispielsweise in einen nicht auslesbaren Speicherbereich. Das Verfahren des Ablaufdiagramms 700 kann beispielsweise an einem Update-Server (beispielsweise dem Server 20 aus Fig. 2a oder dem Server 30 aus Fig. 2c) ausgeführt werden, beispielsweise durch Prozessor 10b des Servers 1b aus Fig. 1b. Alternativ kann das Verfahren auch von einem anderen Server oder Computer ausgeführt werden und die so erhaltenen Schlüssel dann dem Update-Server zur Durchführung des Verfahrens der Fig. 7b zur Verfügung gestellt werden.

In einem ersten Schritt 701 werden folgende Schlüssel erzeugt:

$K_{sig}$: Ein (beispielsweise privater) Schlüssel zum Signieren von Daten, also zur Erzeugung einer Signatur gemäß der oben beschriebenen Vorschrift *SIGN*.
$K_{ver}$: Ein (beispielsweise öffentlicher) Schlüssel zum Verifizieren einer Signatur gemäß der oben beschriebenen Vorschrift *VER.*
$K_{enc}$: Ein Schlüssel zum Verschlüsseln/Entschlüsseln von Daten gemäß dem oben beschriebenen CIPHER.

Die Erzeugung von $K_{sig}$ und $K_{ver}$ lässt sich folgendermaßen beschreiben: $(K_{sig}, K_{ver}) \leftarrow \text{GEN}(1^n)$. Die Erzeugung von $K_{enc}$ lässt sich beschreiben als: $K_{enc} \xleftarrow{\$} \{0,1\}^n$. Dabei bezeichnet das Dollarzeichen die zufällige und gleichverteilte Auswahl.

In Schritt 702 wird die Laufvariable $i$, die über die unterschiedlichen elektronischen Geräte $i$ läuft, auf 1 gesetzt. Die Laufvariable verdeutlicht hier lediglich das Vorhandensein unterschiedlicher elektronischer Geräte und repräsentiert nicht notwendigerweise die Kennung eines jeweiligen elektronischen Geräts. Beispielsweise können den elektronischen Geräten jeweils eindeutige Kennungen (IDs) oder Seriennummern zugewiesen sein, die beispielsweise auch Buchstaben enthalten können,

In Schritt 703 wird für das elektronische Gerät $i$ ein diesem Gerät zugeordneter Schlüssel $K_{mac,i}$ nach folgender Vorschrift erzeugt: $K_{mac,i} \xleftarrow{\$} \{0,1\}^n$. Der Schlüssel wird also zufällig und gleichverteilt aus dem Schlüsselraum $\{0, 1\}^n$, also mit der Länge $n$, erzeugt.

Im Schritt 704 werden die Schlüssel $K_{ver}$, $K_{enc}$ und $K_{mac,i}$ an das Gerät $i$ übermittelt. Der Schlüssel $K_{mac,i}$ wird vorteilhafterweise auch zumindest kurzfristig (beispielsweise bis zum Abarbeiten des Schritts 806 der Fig. 7b) im Update-Server gespeichert.

Im Schritt 705 wird die Laufvariable $i$ um 1 inkrementiert. In Schritt 706 wird geprüft, ob die Laufvariable $i$ die Anzahl der elektronischen Geräte $I$ bereits überschritten hat. Wenn dies der Fall ist, endet das Verfahren. Anderenfalls wird zurück zu Schritt 703 gesprungen.

Fig. 7b zeigt ein Ablaufdiagramm eines beispielhaften Verfahrens zum Bereitstellen von Datenpaketen $PUpd_i$, die jeweils eine Updatesoftware $Upd$ (in verschlüsselter und signierter Form) und einen Schlüssel $AUpd_i$ enthalten, der jeweils an den einem elektronischen Gerät $i$ zugeordneten Schlüssel $K_{mac,i}$ angepasst ist. Das Verfahren wird an einem Update-Server (beispielsweise dem Server 20 aus Fig. 2a oder dem Server 30 aus Fig. 2c) ausgeführt, beispielsweise durch Prozessor 10b des Servers 1b aus Fig. 1b

Im Schritt 801 wird eine Software $SW$, die auf dem Client-Computer ausgeführt werden soll, und die eigentliche Update-Software (beispielsweise ein Firmware-Update) $Upd$ erhalten. Im Schritt 802 wird dann der Schlüssel $K_{ver}$ in die Software SW eingefügt, um später eine Signaturprüfung am Client-Computer zu ermöglichen (siehe Schritt 910 in Fig. 7c). Dadurch wird die Software $SW'$ erhalten, die im Schritt 803 gespeichert wird.

Im Schritt 804 wird die Update-Software $Upd$ mit dem Schlüssel $K_{enc}$ verschlüsselt und dadurch die verschlüsselte Update-Software $EUpd$ erhalten: $EUpd \leftarrow ENC(K_{enec}, Upd)$. Im Schritt 805 wird $EUpd$ mit $K_{sig}$ signiert und so die Signatur $\sigma$ erhalten: $\sigma \leftarrow SIGN(K_{sig}, EUpd)$.

Die Schritte 801-805 sind im vorliegenden Ausführungsbeispiel unabhängig vom Index $i$ des jeweiligen elektronischen Geräts $i$. Die nachfolgenden Schritte 807 bis 809 innerhalb der durch die Schritte 806, 810 und 811 gebildeten Schleife werden hingegen individuell für jedes elektronische Gerät $i$ aus der Menge der $I$ elektronischen Geräte ausgeführt.

Insbesondere wird in Schritt 807 der Schlüssel $AUpd_i$ erzeugt, in dem der Schlüssel $K_{mac,i}$ gemäß der Vorschrift $MAC$ auf eine Verkettung $EUpd \| \sigma$ aus der verschlüsselten Update-Software $EUpd$ und deren Signatur $\sigma$ angewendet wird: $AUpd_i \leftarrow MAC(K_{mac,i}, EUpd\|\sigma)$. Der Schlüssel $AUpd_i$ wird hier als Nachrichtenauthentifizierungscode (Message Authentication Code, MAC) erzeugt, beispielsweise nach dem HMAC oder CBC-MAC Verfahren. Diese und auch weitere Verfahren zur Bildung des Nachrichtenauthentifizierungscodes oder einer Prüfsumme sind einem Fachmann auf dem Gebiet der Kryptographie wohlbekannt.

Im Schritt 808 wird das Datenpaket $PUpd_i$ für das elektronische Gerät $i$ wie folgt zusammengestellt: $PUpd_i = (EUpd, \sigma, AUpd_i)$. Es enthält die für alle elektronischen Geräten gleiche (verschlüsselte) Update-Software $EUpd$, deren Signatur $\sigma$ und den Schlüssel $AUpd_i$, der jeweils an den einem elektronischen Gerät $i$ zugeordneten Schlüssel $K_{mac,i}$ angepasst ist. Letzterer ist somit auch an das jeweilige elektronische Gerät $i$ angepasst.

Im Schritt 809 wird das so erhaltene Datenpaket $PUpd_i$ im Update-Server gespeichert, beispielsweise damit es bei Abruf durch das elektronische Gerät $i$ (oder den zwischengeschalteten Client-Computer) zur Verfügung steht.

Fig. 7c zeigt ein Ablaufdiagramm 900 eines beispielhaften Verfahrens, das ein einem Client-Computer (Schritte 901-911 auf der linken Seite) und einem mit dem Client-Computer verbundenen elektronischen Gerät (Schritte 921-930, rechte Seite) ausgeführt wird, wenn die Update-Software $Upd$ auf dem elektronischen Gerät $i$ verarbeitet werden soll. Dabei ist der Client-Computer zwischen den Update-Server und das elektronische Gerät $i$ zwischengeschaltet, was allerdings nicht zwingend ist. Der Informationsaustausch kann auch unmittelbar zwischen dem elektronischen Gerät $i$ und dem Update-Server erfolgen. Dann sind die Schritte 905, 921, 923, 906, 909, 910, 911 und 924 überflüssig, und die verbleibenden Schritte würden dann allein vom elektronischen Gerät i ausgeführt.

Im Schritt 901 wird die Software $SW'$ mit der darin enthaltenen Software (für den Client-Computer) $SW$ und deren Signatur $\sigma$ erhalten und im Schritt 902 vom Client-Computer gestartet.

Im Schritt 903 wird eine sichere Verbindung zwischen Client-Computer und Update-Server aufgebaut.

Im Schritt 904 erhält der Client-Computer zum Zwecke der Authentisierung eine Challenge $Chall$ vom Update-Server. Die Challenge $Chall$ ist beispielsweise ein zufällig und gleichverteilt gewählter Bit-String der Länge $n$ und dient beispielsweise der Verhinderung von sog. "replay"-Attacken. Der Server wählt also die Daten, die der Client zur Authentisierung signieren soll. Der Client-Computer übermittelt daraufhin $Chall$ im Schritt 905 an das elektronische Gerät $i$, das $Chall$ im Schritt 921 empfängt.

Im Schritt 922 berechnet das elektronische Gerät $i$ den Wert $AChall_i$ durch Anwendung des gerätespezifischen Schlüssels $K_{mac,i}$ auf die Verkettung von $Chall$ und dem Index $i$ des elektronischen Geräts $i$ (der hier beispielsweise eine eindeutige Kennung des Geräts symbolisiert, beispielsweise eine Geräte-ID): $AChall_i \leftarrow MAC(K_{mac,i}, Chall\|i)$.

Dieser Wert wird in den Schritten 923, 906 und 907 vom elektronischen Gerät $i$ an den Client-Computer und dann von diesem an den Update-Server übermittelt, der seinerseits den Wert $AChall_i$ berechnet und mit dem empfangenen Wert von $AChall_i$ vergleicht. Besteht Übereinstimmung, hat sich das elektronische Gerät $i$ erfolgreich gegenüber dem Update-Server authentisiert, und der Update-Server übermittelt dann das Datenpaket $PUpd_i$ an den Client-Computer.

Der Client-Computer prüft im Schritt 908, ob ein Datenpaket $PUpd_i$ vom Update-Server empfangen wurde. Wenn dies der Fall ist, wird im Schritt 909 die im Datenpaket $PUpd_i$ enthaltene Signatur σ mit dem Schlüssel $K_{ver}$ verifiziert: $VER(K_{ver}, σ, EUpd)$.

Wenn die Verifikation erfolgreich war, also beispielsweise $VER(K_{ver}, σ, EUpd)$ "wahr" als Ergebnis liefert, was in Schritt 910 geprüft wird, wird im Schritt 911 das Datenpaket $PUpd_i$ an das elektronischen Gerät $i$ übermittelt und dort im Schritt 924 empfangen, anderenfalls nicht.

Im elektronischen Gerät $i$ wird im Schritt 925 das im Datenpaket $PUpd_i$ enthaltene verschlüsselte Software-Update EUpd mit dem Schlüssel $K_{enc}$ entschlüsselt: $Und \leftarrow DEC(K_{enc}, EUpd)$ und Upd "on the fly" in einen Speicherbereich (beispielsweise einen Flash-Speicherbereich, vgl. Speicher 121a in Fig. 1a) kopiert. Alternativ wird Upd erst nach beendeter Entschlüsselung in einen Speicherbereich kopiert. Der Schritt 925 kann alternativ auch erst bei erfolgreicher Prüfung gemäß Schritt 929 ausgeführt werden und dann Schritt 930 unmittelbar vorausgehen.

Im Schritt 926 wird eine Signaturprüfung wie in Schritt 909 vorgenommen und in Schritt 927 wie in Schritt 910 geprüft. Bei positivem Ergebnis der Signaturprüfung wird in Schritt 928 der Wert $AUpd_i'$ gemäß folgender Vorschrift berechnet: $AUpd_i' \leftarrow MAC(K_{mac,i}, EUpd||σ)$, also analog zur Berechnung im Update-Server (vgl. Schritt 807 in Fig. 7b).

Wenn $AUpd_i'$ (lokal berechnet) und $AUpd_i$ (im Datenpaket $PUpd_i$ erhalten) übereinstimmen, was im Schritt 929 geprüft wird, wird die Update-Software Upd im Schritt 930 im elektronischen Gerät $i$ verarbeitet, anderenfalls (und auch bei negativer Prüfung der Signatur im Schritt 927) nicht.

Das in den Fig. 7a-7c vorgestellte Verfahren gemäß dem zweiten Aspekt der vorliegenden Erfindung vereitelt Angriffe eines wie oben charakterisierten Angreifers, der zumindest einige elektronische Geräte kontrolliert, auf diejenigen Geräte, die der Angreifer nicht kontrolliert. Dies wird u.a. durch die Einbettung des Schlüssels $AUpd_i$ in das Datenpaket $PUpd_i$ erzielt, da dieser Schlüssel an den dem jeweiligen elektronischen Gerät $i$ zugeordneten Schlüssel $K_{mac,i}$ und damit auch an das jeweilige elektronische Gerät $i$ speziell angepasst ist und durch Reverse-Engineering selbst einer großen Anzahl von elektronischen Geräten $i$ und/oder Datenpaketen $PUpd_i$ nicht für ein nicht kontrolliertes elektronisches Gerät erhalten werden kann. Dadurch wird beispielsweise ein sicheres Firmware-Update insbesondere von extrem sicherheitsrelevanten elektronischen Geräten, wie beispielsweise Smartcard-Kartenlesegeräten, ermöglicht.

Wie bereits erwähnt ist das in den Fig. 7a-7c vorgestellte Verfahren lediglich beispielhafter Natur und kann in vielerlei Hinsicht abgewandelt werden, ohne vom Kerngedanken des zweiten Aspekts der Erfindung abzuweichen. Beispielsweise kann grundsätzlich am Update-Server auf die Signierung und am Client-Computer und elektronischen Gerät $i$ auf die Signaturprüfung verzichtet werden, dadurch würde allerdings die Sicherstellung der Integrität der Daten aufgegeben. Ebenso kann auch oder alternativ auf die Entschlüsselung der Update-Software verzichtet werden, was die Vertraulichkeit der Update-Software opfert. Auch die Authentisierung zwischen Update-Server und elektronischen Gerät $i$ ist grundsätzlich entbehrlich; sie erhöht allerdings natürlich die Sicherheit.

Es sind aber auch weitere Modifikationen denkbar. Beispielsweise kann die Signatur σ nicht über die verschlüsselte Update-Software EUpd, sondern über die Update-Software Upd selbst gebildet werden und dann eine Verkettung der Update-Software Upd mit der Signatur σ verschlüsselt werden. Dann ist ohne Kenntnis des Schlüssels $K_{enc}$ allerdings keine Prüfung der Signatur mehr möglich, also gegebenenfalls nur noch am elektronischen Gerät $i$, und nicht mehr am Client-Computer.

Zusätzlich oder anstelle der Authentisierung des elektronischen Geräts $i$ gegenüber dem Update-Server (Schritte 904-907 und 921-923) kann auch eine Authentisierung des Update-Servers gegenüber dem elektronischen Gerät vorgesehen sein, beispielsweise beruhend auf einem (weiteren) Schlüssel, der im elektronischen Gerät gespeichert und auch dem Update-Server bekannt ist, und der auf eine vom elektronischen Gerät erzeugte Challenge angewendet wird.

Anstelle der Authentisierung basierend auf einem (symmetrischen) Schlüssel, der von beiden Authentisierungspartnern (Update-Server und elektronisches Gerät) eingesetzt wird, ist alternativ auch der Einsatz von digitalen Zertifikaten zur Authentisierung denkbar.

Zur Authentisierung des Servers würde dann beispielsweise ein privater Signierungsschlüssel $K_{auth\_sig,serv}$, der im Server gespeichert ist, und ein öffentlicher Verifikationsschlüssel $K_{auth\_ver,serv}$ verwendet, der den elektronischen Geräten und ggfs. auch den Client-Computern zur Verfügung gestellt würde, beispielsweise bereits bei der Produktion der elektronischen Geräte oder vor der Auslieferung an den Endnutzer. Auch diese Schlüssel könnten wie nachfolgend beschrieben nicht für alle elektronischen Geräte gleich, sondern für jedes elektronische Gerät $i$ unterschiedlich gewählt sein. Die Authentisierung erfolgt beispielsweise durch Anwendung des privaten Signierungsschlüssels auf eine vom jeweiligen elektronischen Gerät gewählte Challenge und deren Prüfung mit dem öffentlichen Verifikationsschlüssel am elektronischen Gerät.

Zur Authentisierung des elektronischen Geräts $i$ würde dann beispielsweise ein privater Signierungsschlüssel $K_{auth-sig,i}$, der im elektronischen Gerät $i$ gespeichert ist (beispielsweise bereits bei der Produktion und/oder vor der Auslieferung an den Endnutzer), und ein öffentlicher Verifikationsschlüssel $K_{auth\_ver,i}$ verwendet, der dem Update-Server zur Verfügung gestellt würde. Auch diese Schlüssel könnten wie nachfolgend beschrieben entweder für alle elektronischen Geräte gleich, oder für alle elektronischen Geräte unterschiedlich sein (wie durch den Index $i$ angedeutet wird). Die Authentisierung erfolgt beispielsweise durch Anwendung des privaten Signierungsschlüssels auf eine vom Server gewählte Challenge und deren Prüfung mit dem öffentlichen Verifikationsschlüssel am Server.

Die Schlüssel $K_{enc}$ und/oder $(K_{sig}, K_{ver})$ können beispielsweise nicht für alle elektronischen Geräte gleich gewählt werden wie im Verfahren der Fig. 7a-7c, sondern individuell (unterschiedlich) für jedes elektronische Gerät $i$ gewählt werden. Wenn alle drei Schlüssel gerätespezifisch gewählt werden, würde der Schritt 701 in Fig. 7a dann ganz wegfallen und der Schritt 703 würde um die Erzeugung der gerätespezifischen Schlüssel $K_{enc,i}$ und $(K_{sig,i}, K_{ver,i})$ ergänzt, wobei der zusätzliche Index $i$ wie beim Schlüssel $K_{mac,i}$ die Geräteabhängigkeit dieser Schlüssel anzeigt. Es kann beispielsweise auch vorgesehen sein, dass $K_{enc,i}=K_{mac,i}$ gewählt wird. Dann muss im elektronischen Gerät $i$ nur ein Schlüssel gespeichert werden, und auch im Update-Server reduziert sich der Speicherplatzbedarf pro elektronischen Gerät $i$ entsprechend.

Es ist auch beispielsweise möglich, dass sich der Update-Server mit einem digitalen Zertifikat gegenüber dem jeweiligen elektronischen Gerät $i$ authentisiert, während sich das jeweilige elektronische Gerät $i$ gegenüber dem Update-Server mit dem Schlüssel $K_{mac,i}$ authentisiert, wie in Fig. 7c beschrieben (vgl. Schritte 904-907 und 921-923).

Die geräteunabhängigen Schlüssel $K_{enc}$ und/oder $(K_{sig}, K_{ver})$ bzw. die geräteabhängigen Schlüssel $K_{enc,i}$ und $(K_{sig,i}, K_{ver,i})$ können zusätzlich oder alternativ nicht lediglich einmalig festgelegt und dann für mehrere Software-Update-Vorgänge (also für die mehrfache Ausführung der Verfahren der Fig. 7b und 7c für das gleiche elektronische Gerät $i$ mit jeweils unterschiedlicher Update-Software Upd) benutzt werden, sondern können auch für jeden Update-Vorgang (also jeden Vorgang mit neuer Update-Software $Up_d$) neu erzeugt und genutzt werden. Dann würde der Initialisierungsvorgang der Fig. 7 beispielsweise nur die Erzeugung der $K_{mac,i}$ (Schritt 703) für das jeweilige elektronische Gerät $i$ und deren Übermittlung an das jeweilige elektronische Gerät $i$ (Schritt 704) umfassen, während die Erzeugung der geräteunabhängigen Schlüssel $K_{enc}$ und/oder $(K_{sig}, K_{ver})$ bzw. der geräteabhängigen Schlüssel $K_{enc,i}$ und $(K_{sig,i}, K_{ver,i})$ und deren teilweise Übermittlung ($K_{enc}$ und/oder $K_{ver}$ bzw. $K_{enci,}$ und/oder $K_{ver,i}$) an das jeweilige elektronische Gerät $i$ nicht mehr Bestandteil des einmaligen Initialisierungsverfahrens der Fig. 7a wäre. Die Erzeugung dieser Schlüssel und deren teilweise Übermittlung an das elektronische Gerät wäre dann Bestandteil des Verfahrens der Fig. 7b. Die Übermittlung könnte beispielsweise im Zuge einer sicheren Verbindung (beispielsweise einer SSL-Verbindung) erfolgen.

In dem in den Fig. 7a-7c beschriebenen Verfahren wurde zunächst davon ausgegangen, dass der geräteabhängige Schlüssel $K_{mac,i}$ einmalig für das jeweilige elektronische Gerät $i$ erzeugt und an dieses übermittelt wird. Dieser Schlüssel $K_{mac,i}$ kann dann für alle jemals stattfindenden Update-Vorgänge mit in jedem Update-Vorgang unterschiedlicher Update-Software Upd (ein Update-Vorgang ist jeweils durch die Fig. 7b und 7c beschrieben) genutzt werden. Zur weiteren Erhöhung der Sicherheit kann allerdings auch vorgesehen sein, dass der Schlüssel $K_{mac,i}$ des jeweiligen elektronischen Geräts $i$ ersetzt oder geändert (beispielsweise verlängert) wird, beispielsweise nach einer vordefinierten Zeitspanne oder nach einer bestimmten Anzahl von Update-Vorgängen. Dies kann beispielsweise dadurch erreicht werden, dass das Verfahren nach Fig. 7a erneut ausgeführt wird (entweder nur für die Schlüssel $K_{mac,i}$, oder auch für einen oder mehrere der übrigen gemäß Fig. 7a erzeugten Schlüssel). Die Übermittlung der neu erzeugten Schlüssel $K_{mac,i}$ an die jeweiligen elektronischen Geräte $i$ kann beispielsweise auf besonders sicherem/manipulationssicheren Wege, erfolgen, beispielsweise über eine SSL-Verbindung, oder über eine direkte drahtgebundene oder drahtlose Anbindung des jeweiligen elektronischen Geräts $i$ an den Update-Server ohne zwischengeschaltete Komponenten. Beispielsweise kann die Ersetzung/Änderung des Schlüssels $K_{mac,i}$ auch durch die Update-Software Upd selbst erfolgen. Dann würde beispielsweise die Verarbeitung der Update-Software im Schritt 930 der Fig. 7c auch die Ersetzung/Änderung von $K_{mac,i}$ beinhalten. Der so geänderte $K_{mac,i}$ würde dann beim nächsten Update-Vorgang sowohl vom Update-Server als auch vom elektronischen Gerät $i$ genutzt. Die Ersetzung/Änderung kann beispielsweise bei jedem Update-Vorgang vorgenommen werden, oder nur bei jedem $m$-ten (mit $m$ = 2, 3, 4 etc.) oder in unregelmäßigen Abständen, beispielsweise auf Anforderung (beispielsweise durch einen Benutzer des elektronischen Geräts $i$ oder den Hersteller des elektronischen Geräts $i$). Die Änderung/Ersetzung von $K_{mac,i}$ durch die Update-Software Upd ist insbesondere deshalb vorteilhaft, weil hier die Infiltration durch Angreifer wie oben beschrieben ausgeschlossen ist.

Schließlich wurde in dem in den Fig. 7a-7c beschriebenen Verfahren davon ausgegangen, dass das Datenpaket $PUpd_i$ (vgl. Schritt 808 in Fig. 7b) die komplette Update-Software Upd enthält. Dies muss nicht zwingend der Fall sein. Alternativ können auch mehrere kleinere Pakete $PUpd_i'$ erzeugt werden, die jeweils nur einen Teil von $EUpd \parallel \sigma$ (also einen Teil der verschlüsselten Update-Software) und ein entsprechendes $AUpd_i'$ enthalten, das aus dem jeweiligen Teil von $EUpd \parallel \sigma$ unter Verwendung von $K_{mac,i}$ gemäß der MAC-Vorschrift (analog zu Schritt 807) erhalten wurde (dieses $AUpd_i'$ ist nicht zu verwechseln mit dem in Schritt 928 berechneten $AUpd_i'$). Dann werden anstelle des einen Pakets $PUpd_i$ mehrere Pakete $PUpd_i'$ für jedes elektronische Gerät $i$ erzeugt und an dieses übertragen. Entsprechend werden dann auch im Schritt 908 der Fig. 7c mehrere Pakete $PUp_{di'}$ erhalten. Für jedes der Pakete $PUpd_i'$ kann dann

beispielsweise die Prüfung des darin enthaltenen $AUpd_i'$ erfolgen wie in den Schritten 928 und 929 beschrieben. Die Prüfung der Signatur am Update-Server (Schritt 909, 910) kann in diesem Fall beispielsweise wegfallen, und die Prüfung der Signatur am elektronischen Gerät (Schritte 926, 927) kann vorgenommen werden, wenn alle Pakete $PUpd_i'$ empfangen wurden. Alternativ ist es auch möglich, dass anstelle der Signierung der gesamten verschlüsselten Software $EUpd$ (Schritt 805) nur die Teile der verschlüsselten Software $EUpd$ signiert werden, die in den jeweiligen Datenpaketen $PUpd_i'$ enthalten sind. Ein Datenpaket $PUpd_i'$ enthält dann also $EUpd_i'$, die zugehörige Signatur und den darüber gebildeten Schlüssel $AUpd_i'$. Am Server (Schritt 909, 910) und am elektronischen Gerät (Schritt 926, 927) kann dann die Signatur für jedes Paket $PUpd_i'$ geprüft werden wie in Fig. 7c für ein Paket $PUpd_i$ dargestellt. In beiden in diesem Absatz beschriebenen Abwandlungen kann die Prüfung des $AUpd_i'$ also bereits für kleinere Pakete $PUpd_i'$ erfolgen und die weitere Verarbeitung (beispielsweise der Empfang weiterer Datenpakete $PUpd_i'$) bei Erkennung von Störungen oder Manipulationen abgebrochen werden.

Die vorstehend genannten Modifikationen des Verfahrens der Fig. 7a-7c sollen auch in allen möglichen Kombinationen offenbart verstanden werden.

In dem in den Fig. 7a-7c beschriebenen Verfahren und den oben beschriebenen möglichen Abwandlungen wurde davon ausgegangen, dass der gerätespezifische Schlüssel $K_{mac,i}$ dem jeweiligen elektronischen Gerät $i$ dauerhaft zugeordnet ist. Beispielsweise wird der Schlüssel $K_{mac,i}$ bereits während der Produktion und/oder vor Auslieferung des elektronischen Geräts an den Endnutzer in dem jeweiligen elektronische Gerät i gespeichert (und auch dem Update-Server entsprechend bekanntgemacht), beispielsweise in nicht auslesbarer Form. Wie beschrieben kann es aber auch vorgesehen sein, dass der gerätespezifische Schlüssel - beispielsweise durch die im Datenpaket enthaltene Update-Software $Upd$ - ersetzt oder geändert wird.

Geht man noch einen Schritt weiter, kann die dauerhafte Zuordnung des gerätespezifischen Schlüssels $K_{mac,i}$ zum jeweiligen elektronischen Gerät $i$ allerdings auch entfallen, beispielsweise wenn der Schlüssel $K_{mac,i}$ lediglich im Rahmen (beispielsweise während) einer Update-Sitzung, die beispielsweise mit der Einrichtung einer Verbindung zwischen dem elektronischen Gerät $i$ und dem Server beginnt und mit der Verarbeitung der vom Server erhaltenen Update-Software endet, zwischen dem Update-Server und dem jeweiligen elektronischen Gerät i ermittelt und dem elektronischen Gerät zugeordnet wird. Der Schlüssel $K_{mac,i}$ ist dann wiederum nur einem elektronischen Gerät $i$ zugeordnet, wobei sich die Schlüssel $K_{mac,i}$ von unterschiedlichen elektronischen Geräten unterscheiden. Der Schlüssel $K_{mac,i}$ eines jeweiligen elektronischen Geräts $i$ ist dann auch nur für die Dauer der Update-Sitzung gültig und wird nach Beendigung der Update-Sitzung beispielsweise verworfen oder gelöscht. In einer nächsten Update-Sitzung des gleichen elektronischen Geräts $i$ wird dann beispielsweise ein anderer Schlüssel $K_{mac,i}$ als in der vorherigen Update-Sitzung verwendet. Wenn die Update-Sitzung selbst vor Angriffen geschützt werden kann, beispielsweise durch die Forderung nach einer Authentisierung durch den Update-Server und das jeweilige elektronische Gerät im Rahmen der Update-Sitzung, kann auch hier ein sicherer Update-Vorgang garantiert werden, da jedes Datenpaket $PUpd_i$ wiederum einen bezüglich des dem jeweiligen elektronischen Gerät $i$ zugeordneten Schlüssels $K_{mac,i}$ angepassten Schlüssel $AUpd_i$ aufweist, so dass ein Angriff auf von einem Angreifer nicht kontrollierte elektronische Geräte wiederum vereitelt wird.

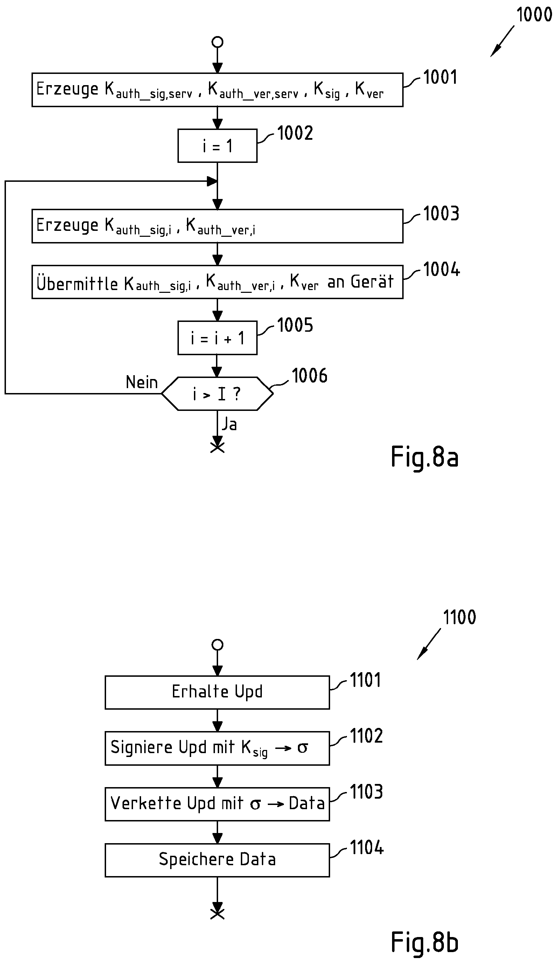

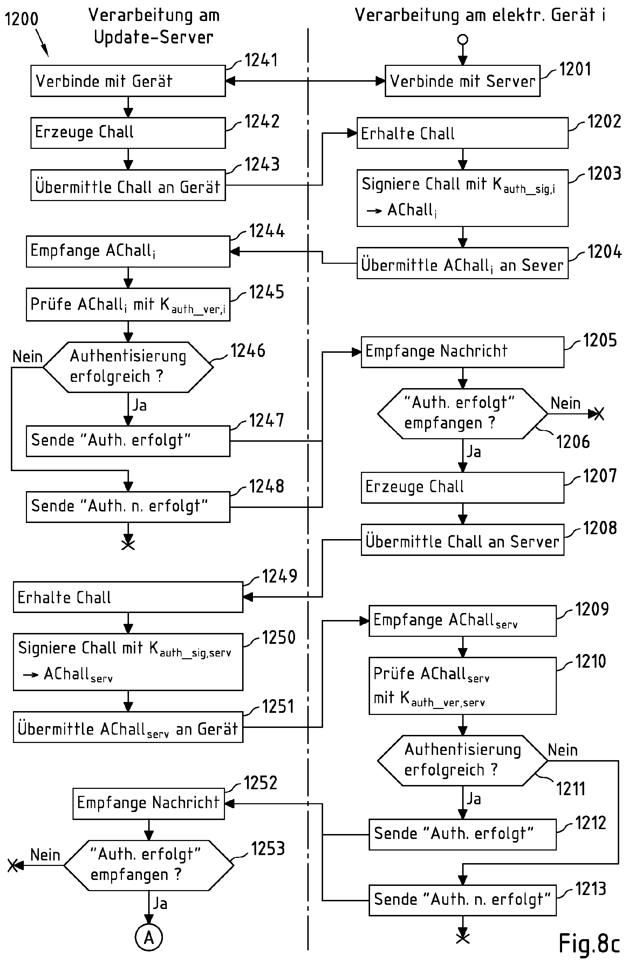

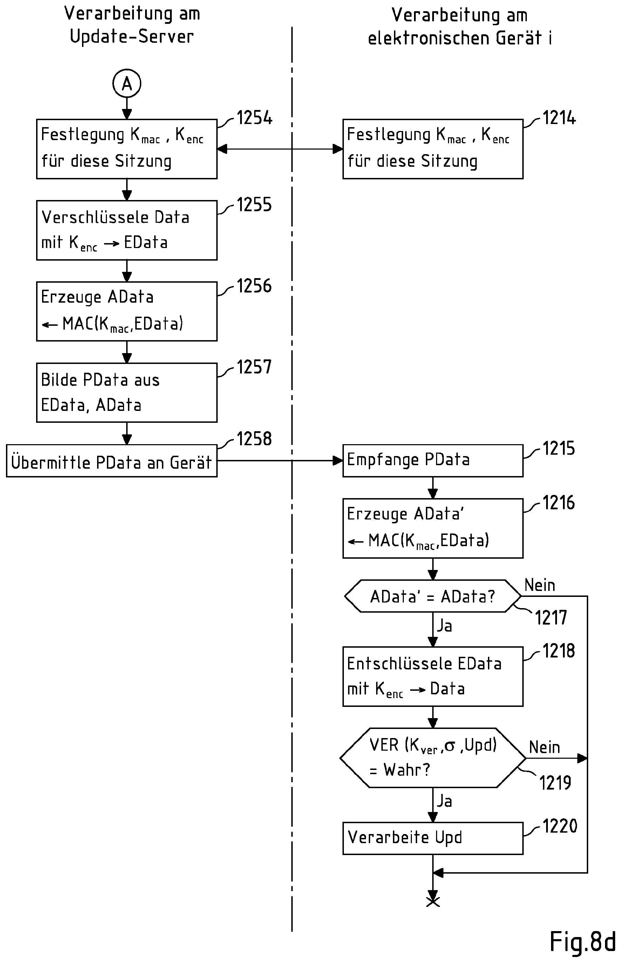

Ein diesbezügliches konkretes Ausführungsbeispiel wird nachfolgend unter Bezugnahme auf die Fig. 8a-8d beschrieben. Die Fig. 8a-8d zeigen beispielhafte Ablaufdiagramme von Verfahren, die an einem Server (Fig. 8a, Fig. 8b und die linke Seite von Fig. 8c/8d) bzw. einem elektronischen Gerät (Fig. 8c/8d, rechte Seite) gemäß dem zweiten Aspekt der Erfindung ausgeführt werden. In der Fig. 8c/8d wird dabei eine direkte Kommunikation zwischen elektronischen Gerät und Update-Server unterstellt; diese kann jedoch auch ähnlich wie in der Fig. 7c dargestellt über einen Client-Computer laufen, der dann eine entsprechende Software SW ausführt.

Fig. 8a zeigt zunächst ein Ablaufdiagramm 1000 eines beispielhaften Initialisierungsverfahrens. Ziel ist hier u.a. die Erzeugung von einer Vielzahl von Schlüsselpaaren $(K_{auth-sig,i}, K_{auth\_ver,i})$ die jeweils einem elektronischen Gerät $i$ zugeordnet sind. Insgesamt sind $I$ elektronische Geräte vorhanden. Die erzeugten Schlüssel $K_{auth\_sig,i}$ (und die weiteren nachfolgend beschriebenen Schlüssel $K_{auth\_ver,serv}$ und $K_{ver}$) können den jeweiligen elektronischen Geräten $i$ beispielsweise jeweils bei der Produktion eingeschrieben werden, beispielsweise in einen nicht auslesbaren Speicherbereich. Das Verfahren des Ablaufdiagramms 1000 kann beispielsweise an einem Update-Server (beispielsweise dem Server 20 aus Fig. 2a oder dem Server 30 aus Fig. 2c) ausgeführt werden, beispielsweise durch Prozessor 10b des Servers 1b aus Fig. 1b. Alternativ kann das Verfahren auch von einem anderen Server oder Computer ausgeführt werden und die so erhaltenen Schlüssel dann dem Update-Server zur Durchführung des Verfahrens der Fig. 8b zur Verfügung gestellt werden.

In einem ersten Schritt 1101 werden folgende Schlüssel erzeugt: $K_{sig}$ und $K_{ver}$ wie bereits zu Fig. 7a beschrieben und zusätzlich ein asymmetrisches Authentisierungsschlüsselpaar mit einem privaten Signierungsschlüssel $K_{auth\_sig,serv}$ und einem öffentlichen Verifikationsschlüssel $K_{auth\_ver,serv}$.

Die Erzeugung von $K_{auth\_sig,serv}$ und $K_{auth\_ver,serv}$ lässt sich beispielsweise wie folgt beschreiben: $(K_{auth\_sig,serv}, K_{auth\_ver,serv} \leftarrow GEN(1^n))$.

In Schritt 1002 wird die Laufvariable $i$, die über die unterschiedlichen elektronischen Geräte $i$ läuft, auf 1 gesetzt.

In Schritt 1003 wird für das elektronische Gerät $i$ ein diesem Gerät zugeordnetes Authentisierungsschlüsselpaar $(K_{auth\_}K_{auth\_ver,i})$ erzeugt, beispielsweise nach folgender Vorschrift: $(K_{auth\_sig,i}, K_{auth\_ver,i}) \leftarrow GEN(1^n)$.

Im Schritt 1004 werden die Schlüssel $K_{ver}, K_{autlh\_sig,i}$ und $K_{auth\_ver,seiv}$ an das Gerät $i$ übermittelt. Die Schlüssel $K_{auth\_ver,i}$ und $K_{auth\_sig,serv}$ werden vorteilhafterweise auch zumindest kurzfristig im Update-Server gespeichert.

Im Schritt 1005 wird die Laufvariable $i$ um 1 inkrementiert. In Schritt 1006 wird geprüft, ob die Laufvariable $i$ die Anzahl der elektronischen Geräte $I$ bereits überschritten hat. Wenn dies der Fall ist, endet das Verfahren. Anderenfalls wird zurück zu Schritt 1003 gesprungen.

Fig. 8b zeigt ein Ablaufdiagramm 1100 eines beispielhaften Verfahrens zum Bereitstellen von Daten *Data,* die eine Update-Software und deren Signatur enthalten. Das Verfahren wird an einem Update-Server (beispielsweise dem Server 20 aus Fig. 2a oder dem Server 30 aus Fig. 2c) ausgeführt, beispielsweise durch Prozessor 10b des Servers 1b aus Fig. 1b

Im Schritt 1101 wird die eigentliche Update-Software (beispielsweise ein Firmware-Update) *Upd* erhalten. Im Schritt 1102 wird die Update-Software *Upd* mit $K_{sig}$ signiert und so die Signatur erhalten: $\sigma \leftarrow SIGN(K_{sig}, Upd)$. Im Schritt 1103 wird dann die Update-Software *Upd* mit der Signatur $\sigma$ verkettet, um die Daten *Data* zu erhalten, die dann in Schritt 1104 gespeichert werden.

Die Fig. 8c (erster Teil) und 8d (zweiter Teil) zeigen gemeinsam ein Ablaufdiagramm 1200 eines beispielhaften Verfahrens, das von einem Update-Server (Schritte 1241-1258 auf der linken Seite) und einem elektronischen Gerät $i$ (Schritte 1201-1220, rechte Seite) ausgeführt wird, wenn die Update-Software *Upd* auf dem elektronischen Gerät $i$ verarbeitet werden soll.

In den Schritten 1201 und 1241 wird eine Verbindung zwischen dem Update-Server (im folgenden kurz: Server) und dem elektronischen Gerät $i$ (im folgenden kurz: Gerät) eingerichtet, beispielsweise auf Initiative des Geräts. Der Server erzeugt dann im Schritt 1242 eine Challenge *Chall* (beispielsweise eine binäre Zufallsfolge) und übermittelt diese im Schritt 1243 an das Gerät, das die Challenge *Chall* im Schritt 1202 empfängt und mit dem im Gerät gespeicherten Schlüssel $K_{auth-sig,i}$ signiert, um die Signatur *AChall$_i$* zu erhalten (Schritt 1203). Diese Signatur *AChall,* wird im Schritt 1204 an den Server übermittelt, der diese im Schritt 1244 empfängt und im Schritt 1245 anhand des im Server vorhandenen Schlüssels $K_{auth\;ver,i}$ verifiziert. Ist die Verifikation erfolgreich, hat sich das Gerät erfolgreich am Server authentisiert (Schritt 1246). Bei erfolgreicher Authentisierung erzeugt der Server die Nachricht "Auth. erfolgt" und übermittelt diese im Schritt 1247 an das Gerät. Anderenfalls wird die Nachricht "Auth. n. erfolgt" erzeugt, im Schritt 1248 an das Gerät übermittelt und dann die serverseitige Verarbeitung eingestellt.

Die vom Server in den Schritten 1247 oder 1248 gesendete Nachricht wird im Schritt 1205 am Gerät empfangen. Wenn die Nachricht "Auth. erfolgt" empfangen wird (Schritt 1206), wird die Verarbeitung im Schritt 1207 fortgesetzt, anderenfalls wird die geräteseitige Verarbeitung eingestellt.

Im Schritt 1207 erzeugt nun das Gerät eine Challenge *Chall* (die i.a. von der im Schritt 1242 erzeugten Challenge *Chall* verschieden ist) und übermittelt diese im Schritt 1208 an den Server. Dieser erhält *Chall* im Schritt 1249, signiert *Chall* mit dem Schlüssel $K_{auth\_sig,serv}$, um die Signatur *AChall$_{serv}$* zu erhalten und übermittelt *AChall$_{serv}$* an das Gerät (Schritt 1251).

Das Gerät empfängt *AChall$_{serv}$* im Schritt 1209 und prüft *AChall$_{serv}$* mit $K_{auth\_ver,serv}$, um festzustellen, ob eine erfolgreiche Authentisierung des Servers vorliegt (Schritt 1211). Ist dies nicht der Fall, wird eine Nachricht "Auth. n. erfolgt" erzeugt, im Schritt 1213 an den Server abgesetzt und dann die geräteseitige Verarbeitung eingestellt. Anderenfalls wird eine Nachricht "Auth. erfolgt" erzeugt und im Schritt 1212 an den Server übermittelt.

Der Server empfängt im Schritt 1252 die in den Schritten 1212 oder 1213 vom Gerät abgesetzten Nachrichten und prüft im Schritt 1253, ob die Nachricht "Auth. erfolgt" empfangen wurde. Wenn dies nicht der Fall ist, wird die serverseitige Bearbeitung eingestellt. Anderenfalls stößt der Server die Schritte 1254 und 1214 an, in denen zwischen dem Server und dem Gerät die Schlüssel $K_{mac}$ und $K_{enc}$ für die vorliegende Sitzung festgelegt (oder ausgehandelt) werden. Dies kann beispielsweise dadurch erfolgen, dass der Server Schlüssel erzeugt und explizit an das Gerät übermittelt, oder dass das Gerät Schlüssel erzeugt und explizit an den Server übermittelt, oder dass der Server (und/oder das Gerät) Kenngrößen bestimmen, auf deren Grundlage sowohl der Server als auch das Gerät die Schlüssel $K_{mac}$ und $K_{enc}$ selbst erzeugen können (beispielsweise gemäß einer vordefinierten, aber geheimen Vorschrift, so dass die Schlüssel $K_{mac}$ und $K_{enc}$ nicht explizit übertragen werden müssen). Beispielsweise können die Schlüssel $K_{mac}$ und $K_{enc}$ auch in (geheimen) Tabellen abgelegt sein, die am Server und am Gerät vorliegen, und der Server kann dann beispielsweise lediglich $K_{mac}$ und $K_{enc}$ aus diesen Tabellen auswählen und nur die entsprechenden tabellenbezogenen Indizes an das Gerät übermitteln, um das Gerät in die Lage zu versetzen, seinerseits $K_{mac}$ und $K_{enc}$ aus den Tabellen zu extrahieren.

Die Authentizität und Integrität der in den Schritten 1254 und 1214 ausgehandelten/festgelegten Schlüssel wird, je nach Verfahren, durch die Schlüssel $K_{auth\_sig,i}$ und/oder $K_{auth\_sig,serv}$ geschützt. Wenn zusätzlich auch die Vertraulichkeit geschützt werden soll, z.B. wenn eine Partei den Schlüssel wählt und ihn an die andere Partei übergibt, sollte ein asymmetrisches Verschlüsselungsverfahren mit Schlüssels $(K_{enc,i}, K_{dec,i})$ bzw. $(K_{enc,serv}, K_{dec,serv})$ eingesetzt werden. Bei Übertragung in nur eine Richtung (beispielsweise vom Server zum Gerät) kann allerdings auch ein asymmetrisches Schlüsselpaar ausreichen, beispielsweise $(K_{enc,i}, K_{dec,i})$. Die Schlüssel zur Verschlüsselung (hiermit "enc" bezeichnet) sind beispielsweise jeweils öffentlich, und die Schlüssel zur Entschlüsselung (mit "dec" bezeichnet) sind dann beispielsweise geheim. Hier kann beispielsweise auch dasselbe Schlüsselpaar für Signierung (s.o.) und Verschlüsselung verwendet werden, also beispielsweise:

$$K_{enc,i} = K_{auth\_ver,i},$$
$$K_{dec,i} = K_{auth\_sig,i}$$
$$K_{enc,serv} = K_{auth\ ver,serv},$$
$$K_{dec,serv} = K_{auth\_sig,serv},$$

Im Schritt 1255 verschlüsselt der Server die Daten *Data* (vgl. Schritt 1103 aus Fig. 8b) mit dem Schlüssel $K_{enc}$ gemäß der Vorschrift *EData ← ENC($K_{enc}$,Data).* Dies dient der Vertraulichkeit der zu übertragenden Daten. Im Schritt 1256 wird der Schlüssel *AData* gemäß folgender Vorschrift erzeugt: *AData ← MAC($K_{mac}$,EData).* Im Schritt 1257 wird dann ein Datenpaket *PData* gebildet, dass *EData* und *AData* enthält, und im Schritt 1258 an das Gerät übertragen. *PData* enthält somit die Update-Software (*Upd,* in signierter und verschlüsselter Form) und einen Schlüssel *AData,* der an einen dem elektronischen Gerät *i* zugeordneten Schlüssel $(K_{mac})$ angepasst ist. Das Datenpaket AData ist somit wiederum individualisiert (da $K_{mac}$ individuell für jedes elektronische Gerät *i* im Rahmen der jeweiligen Update-Sitzung erzeugt wird).

Das Datenpaket *PData* wird dann im Schritt 1215 am Gerät empfangen und basierend auf der darin enthaltenen Information *EData* und dem (nach dem Schritt 1214) im Gerät vorhandenen Schlüssel $K_{mac}$ der Schlüssel *AData'* erzeugt, wiederum nach der Vorschrift *AData'← MAC($K_{maec}$, EData).* Im Schritt 1217 wird verglichen, ob das berechnete *AData'* mit dem im Datenpaket *PData* enthaltenen *AData* übereinstimmt. Wenn dies der Fall ist, werden die im Datenpaket *PData* enthaltenen Daten *EData* mit dem (nach dem Schritt 1214) im Gerät vorhandenen Schlüssel *Kenc* entschlüsselt (Schritt 1218) und somit die Daten *Data* erhalten, anderenfalls wird die geräteseitige Verarbeitung eingestellt.

Die in den Daten *Data* enthaltene Signatur über die Update-Software *Upd* wird sodann im Schritt 1219 mit dem im Gerät vorhandenen Schlüssel $K_{ver}$ geprüft. Ist die Prüfung erfolgreich, wird die Update-Software *Upd* im Schritt 1220 verarbeitet (beispielsweise ausgeführt oder in einen Firmware-Speicher kopiert), anderenfalls endet das Verfahren.

Bei dem in den Fig. 8a-8d vorgestellten beispielhaften Verfahren gemäß dem zweiten Aspekt der vorliegenden Erfindung bildet die beidseitige Authentisierung zwischen Server und elektronischem Gerät i einen wichtigen Sicherheitsanker. Ein Angreifer muss im Besitz der Authentisierungsschlüssel $K_{auth\_sig,i}$ und $K_{aulh\_ver,serv}$ sein, um eine Verbindung mit dem Update-Server aufbauen (und die weiteren Schritte des Verfahrens der Fig. 8c/8d infiltrieren) zu können. Diese Schlüssel kann er nur extrahieren, wenn er das jeweilige elektronische Gerät *i* kontrolliert. Dabei muss der Schlüssel $K_{auth\_ver,serv}$ beispielsweise nicht zwingend geheim sein. Auch das bezüglich der Fig. 8a-8d vorgestellte beispielhafte Verfahren gemäß dem zweiten Aspekt der vorliegenden Erfindung kann in vielfacher Weise modifiziert werden, ohne den Vorteil eines sicheren Software-Updates (beispielsweise eines sicheren Firmware-Updates) zu opfern.

Beispielsweise kann der Schlüssel $K_{enc}$ nicht im Schritt 1254 und 1214 zwischen Server und Gerät festgelegt werden, sondern einmalig (beispielsweise in einer Initialisierungsphase, wie zu Fig. 8a beschrieben) festgelegt und dann im Server und im elektronischen Gerät *i* hinterlegt werden. Er kann beispielsweise auch für alle elektronischen Geräte gleich gewählt werden und damit nicht mehr geräteabhängig sein. Die Verschlüsselung kann dann bereits im Ablaufdiagramm der Fig. 8b, also geräteunabhängig, durchgeführt werden. Dazu kann beispielsweise erst die Update-Software *Upd* verschlüsselt werden (ergibt $EUp_d$) und dann signiert werden (ergibt σ). Die verschlüsselte Update-Software $(EUp_d)$ mit der angehängten Signatur (σ) kann dann die Daten *Data* bilden, die in den Schritten 1256 und 1257 die Daten *EData* ersetzen würden.

Die in den Schritten 1254 und 1214 festgelegten Schlüssel $K_{mac}$ und $K_{enc}$ können auch durch einen (einzigen) Schlüssel ersetzt werden, der dann in den Schritten 1254 und 1214 festgelegt und sowohl zur Verschlüsselung der Daten als auch zur Berechnung von *AData* verwendet wird.

Die Signierung der Update-Software im Schritt 1102 und entsprechend die Prüfung der Signatur im Schritt 1219 dient der Sicherstellung der Integrität/Authentizität der Update-Software *Upd* und kann ggfs. entbehrlich sein. Diese Ziele werden in ähnlicher Form auch durch die Bildung des Schlüssels *AData* (Schritt 1256) und dessen Einbettung in das Datenpaket *PData* (Schritt 1257) erreicht. Die Signierung der Update-Software kann insbesondere bereits durch einen Herausgeber der Update-Software geschehen und die so signierte Update-Software kann dann bereits in signierter Form am Update Server empfangen werden. Die Schritte 1102 und 1103 der Fig. 8b würden dann also nicht am Update-Server, sondern beim Herausgeber der Update-Software ausgeführt und am Update-Server lediglich die signierte Update-Software (*Data*) erhalten und gespeichert. Das elektronische Gerät kann dann anhand der Signatur σ auch prüfen, dass die Update-Software nicht am Update-Server geändert wurde.

Anstelle der Verschlüsselung der signierten Daten *Data* kann auch eine Signierung der verschlüsselten Update-Software *Upd* vorgenommen, die Reihenfolge von Verschlüsselung und Signierung also vertauscht werden.

Hinsichtlich der Authentisierung kann anstelle der geräteseitigen, auf dem Schlüsselpaar $(K_{auth\_sig,i},$

$K_{auth\_ver,i}$) beruhenden Authentisierung gegenüber dem Server auch ein symmetrischer Schlüssel $K_{auth,i}$ eingesetzt werden, der sowohl im jeweiligen elektronischen Gerät $i$ als auch im Server gespeichert ist, auf eine vom Server vorgegebene Challenge am Gerät gemäß der MAC-Vorschrift angewandt und dann vom Server entsprechend geprüft wird (vgl. den Schritt 922 der Fig. 7c).

Der Schlüssel *ADdata* (vgl. Schritt 1256) dient u.a. der Sicherstellung der Authentizität und Integrität der Daten bei der Übertragung zwischen Update-Server und Gerät. Grundsätzlich kann auf die Bildung von *ADdata* und dessen Einbettung in *PData* (Schritt 1257) also verzichtet werden, beispielsweise wenn die Authentizität/Integrität der Daten während der Übertragung nicht gewährleistet sein muss oder werden soll oder anderweitig zumindest mit ähnlichem Erfolg sichergestellt werden kann (beispielsweise anhand einer Signatur der Update-Software, die am Update-Server vorgenommen wird, vgl. Schritt 1102 der Fig. 8b).

Das Verfahren der Fig. 8a-8d soll dementsprechend alternativ auch ohne die Bildung von *ADdata* und dessen Einbettung in *PData* (Schritte 1256-1257) bzw. dessen Prüfung am Gerät (Schritte 1216-1217) offenbart verstanden werden. Dann ist auch keine Festlegung von $K_{mac}$ in den Schritten 1254 und 1214 erforderlich. In dem Schritten 1254 und 1214 würde dann lediglich der Schlüssel $K_{enc}$ festgelegt und zur Verschlüsselung von *Data* in Schritt 1255 eingesetzt.

In dem in den Fig. 8a-8d beschriebenen Verfahren wurde innerhalb einer Sitzung nur ein Datenpaket *PData* übertragen, das eine signierte Update-Software *(Data,* vgl. Schritt 1103 der Fig. 8b) enthält. Alternativ können anstelle eines Pakets auch mehrere kleinere Pakete *PData '* gebildet werden, indem jeweils nur ein Teil von *Data (Data')* verschlüsselt (Schritt 1255 der Fig. 8d) und der so erhaltene Teil *EData'* mit einem Schlüssel *ADdata'* (Schritt 1256, unter Verwendung von $K_{mac}$) versehen wird, der dann in den Schritten 1216, 1217 vom Gerät geprüft werden kann (dieses *ADdata'* ist nicht zu verwechseln mit dem in Schritt 1216 berechneten *ADdata'*). So kann beispielsweise bereits nach der Übertragung einer kleinen Datenmenge (im Vergleich zum Umfang der gesamten Update-Software) festgestellt werden, ob Manipulationen oder Übertragungsstörungen vorliegen und das Verfahren entsprechend abgebrochen werden. Die Prüfung der Signatur gemäß Schritt 1219 ist dann ggfs. erst nach Empfang des letzten der Pakete *PData'* möglich, wenn also *EData* komplett am Gerät vorhanden ist und nach Entschlüsselung sowohl *Data* und die Signatur $\sigma$ vorliegen.

Die vorstehend genannten Modifikationen des Verfahrens der Fig. 8a-8d sollen auch in allen möglichen Kombinationen offenbart verstanden werden.

Die Abfolge der einzelnen Verfahrenschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

Die in dieser Anmeldung beschriebenen beispielhaften Ausführungsformen und Ausgestaltungen der vorliegenden Erfindung sollen auch in allen Kombinationen miteinander offenbart sein, insbesondere ist z.B. eine Kombination der in Fig. 2a und 2c gezeigten Systeme denkbar.

## Patentansprüche

1. Verfahren, umfassend:

   - Verarbeiten eines in einem Datenpaket enthaltenen Computerprogramms oder Computerprogrammteils auf einem elektronischen Gerät nur dann, wenn das Datenpaket einen an das elektronische Gerät angepassten Schlüssel enthält, wobei das Datenpaket ein Datenpaket aus einer Vielzahl von Datenpaketen ist, wobei jedes der Datenpakete aus der Vielzahl von Datenpaketen jeweils das Computerprogramm oder den Computerprogrammteil und einen Schlüssel enthält, wobei das in den Datenpaketen enthaltene Computerprogramm oder der Computerprogrammteil für alle Datenpakete gleich und zum Verarbeiten auf einer Vielzahl von elektronischen Geräten bestimmt ist, wobei das elektronische Gerät ein elektronisches Gerät aus der Vielzahl von elektronischen Geräten ist und wobei der jeweils in einem Datenpaket enthaltene Schlüssel lediglich an eines der elektronischen Geräte, aber an kein anderes der elektronischen Geräte angepasst ist, wobei jedem der elektronischen Geräte jeweils ein eigener verschlüsselter Freigabe-Schlüssel zugeordnet ist, und wobei der in dem Datenpaket enthaltene Schlüssel an das elektronische Gerät angepasst ist, wenn der dem elektronischen Gerät zugeordnete verschlüsselte Freigabe-Schlüssel mit dem in dem Datenpaket enthaltenen Schlüssel entschlüsselbar ist.

2. Verfahren gemäß Anspruch 1, wobei der jeweils in einem Datenpaket enthaltene Schlüssel in dem jeweiligen Datenpaket verschlüsselt enthalten ist und lediglich mit Hilfe eines dem elektronischen Gerät, an das der in dem jeweiligen Datenpaket verschlüsselt enthaltene Schlüssel angepasst ist, zugeordneten weiteren Schlüssels entschlüsselbar ist, wobei jedem der elektronischen Geräte jeweils ein solcher weiterer Schlüssel zugeordnet ist.

3. Verfahren gemäß Anspruch 2, wobei der jeweils einem elektronischen Gerät zugeordnete weitere Schlüssel verschlüsselt ist und lediglich mit Hilfe eines in dem Datenpaket, das den an das jeweilige elektronische Gerät angepassten Schlüssel verschlüsselt enthält, unverschlüsselt enthaltenen weiteren Schlüssels entschlüsselbar ist, wobei in jedem der Datenpakete jeweils ein solcher weiterer Schlüssel unverschlüsselt enthalten ist.

4. Verfahren gemäß einem der Ansprüche 1-3, wobei das Computerprogramm oder der Computerprogrammteil auf dem elektronischen Gerät nur dann verarbeitbar ist, wenn der entschlüsselte Freigabe-Schlüssel vorliegt.

5. Verfahren nach Anspruch 4, wobei ein Bootloader-Programm des elektronischen Geräts Programmanweisungen enthält zum Entschlüsseln des Freigabe-Schlüssels mit Hilfe des in dem Datenpaket enthaltenen Schlüssels und zum Verarbeiten des in dem Datenpaket enthaltenen Computerprogramms nur dann, wenn der entschlüsselte Freigabe-Schlüssel mit einem in einem nur vom Bootloader-Programm lesbaren Speicher des elektronischen Geräts unverschlüsselt gespeicherten Freigabe-Schlüssel übereinstimmt.

6. Verfahren nach einem der Ansprüche 1-5, wobei das Datenpaket eine digitale Signatur des Computerprogramms enthält, die prüfbar ist, um Manipulationen an dem Computerprogramm auszuschließen.

7. Verfahren nach einem der Ansprüche 1-6, wobei das Computerprogramm zumindest teilweise als Speicherabbild eines nicht-flüchtigen Speichers und/oder eines Bereichs eines nichtflüchtigen Speichers des elektronischen Geräts ausgebildet, für das das Computerprogramm zur Verarbeitung bestimmt ist.

8. Verfahren nach einem der Ansprüche 1-7, wobei das elektronische Gerät mit einem oder mehreren weiteren elektronischen Geräten verbunden ist, und wobei das Verarbeiten auf dem elektronischen Gerät das Veranlassen des Aktualisierens einer Software, insbesondere einer Firmware, in einem Speicher und/oder das Schreiben einer Software, insbesondere einer Firmware, in einen Speicher der weiteren elektronischen Geräte umfasst.

9. Verfahren gemäß einem der Ansprüche 1-8, das Verarbeiten auf dem elektronischen Gerät umfassend:

- Aktualisieren einer Software, insbesondere einer Firmware, des elektronischen Geräts.

10. Verfahren gemäß einem der Ansprüche 1-9, das Verarbeiten auf dem elektronischen Gerät umfassend:

- Verändern mindestens eines dem elektronischen Gerät zugeordneten Schlüssels, insbesondere eines Freigabe-Schlüssels, und/oder der Verschlüsselung eines dem elektronischen Gerät zugeordneten verschlüsselten Schlüssels.

11. Verfahren, umfassend:

- Erzeugen einer Vielzahl von Datenpaketen, wobei jedes der Datenpakete jeweils ein Computerprogramm oder einen Computerprogrammteil und einen Schlüssel enthält, wobei das in den Datenpaketen enthaltene Computerprogramm oder der Computerprogrammteil für alle Datenpakete gleich und zur Verarbeitung auf einer Vielzahl von elektronischen Geräten bestimmt ist, wobei das in einem Datenpaket enthaltene Computerprogramm oder der Computerprogrammteil auf einem der elektronischen Geräte nur dann verarbeitbar ist, wenn das Datenpaket einen an das elektronische Gerät angepassten Schlüssel enthält, wobei der jeweils in einem Datenpaket enthaltene Schlüssel lediglich an eines der elektronischen Geräte, aber an kein anderes der elektronischen Geräte angepasst ist, und wobei jedem der elektronischen Geräte jeweils ein eigener verschlüsselter Freigabe-Schlüssel zugeordnet ist, und wobei der in dem Datenpaket enthaltene Schlüssel an das elektronische Gerät angepasst ist, wenn der dem elektronischen Gerät zugeordnete verschlüsselte Freigabe-Schlüssel mit dem in dem Datenpaket enthaltenen Schlüssel entschlüsselbar ist; und
- Ausgeben der Datenpakete.

12. Elektronisches Gerät, umfassend:

- Mittel zum Ausführen des Verfahrens nach einem der Ansprüche 1-10.

13. Datenverarbeitungsanlage, umfassend:

- Mittel zum Ausführen des Verfahrens nach Anspruch 11.

14. Computerprogramm, umfassend Programmanweisungen, die einen Prozessor zur Ausführung zumindest eines der Verfahren gemäß einem der Ansprüche 1-10 und/oder 11 veranlassen, wenn das Computerprogramm auf dem Prozessor läuft.

15. Datenpaket aus einer Vielzahl von Datenpaketen, wobei jedes der Datenpakete jeweils ein Computerprogramm oder einen Computerprogrammteil und einen Schlüssel enthält und wobei das in den Datenpaketen enthaltene Computerprogramm oder der Computerprogrammteil für alle Datenpakete gleich und zur Verarbeitung auf einer Vielzahl von elektronischen Geräten bestimmt ist und wobei der jeweils in einem Datenpaket enthaltene Schlüssel lediglich an eines der elektronischen Geräte, aber an kein anderes der elektronischen Geräte angepasst ist, wobei jedem der elektronischen Geräte jeweils ein eigener verschlüsselter Freigabe-Schlüssel zugeordnet ist, wobei der in dem Datenpaket enthaltene Schlüssel an das elektronische Gerät angepasst ist, wenn der dem elektronischen Gerät zugeordnete verschlüsselte Freigabe-Schlüssel mit dem in dem Datenpaket enthaltenen Schlüssel entschlüsselbar ist; das Datenpaket umfassend:

- das Computerprogramm oder den Computerprogrammteil; und
- einen lediglich an eines der elektronischen Geräte angepassten Schlüssel.

**Claims**

1. A method comprising:

- Processing of a computer program or computer program portion contained in a data packet on an electronic device only if the data packet contains a key adapted to the electronic device, wherein the data packet is a data packet from a plurality of data packets, wherein each of the data packets from the plurality of data packets respectively contains the computer program or computer program portion and a key, wherein the computer program or computer program portion contained in the data packets is identical for all data packets and intended for processing on a plurality of electronic devices, wherein the electronic device is an electronic device from the plurality of electronic devices, and wherein the key respectively contained in a data packet is adapted only to one of the electronic devices, but not to any other of the electronic devices, wherein to each of the electronic devices, a respective dedicated encrypted release key is assigned, and wherein the key contained in the data packet is adapted to the electronic device if the encrypted release key assigned to the electronic device can be decrypted with the key contained in the data packet.

2. The method of claim 1, wherein the key respectively contained in the data packet is contained in the data packet in encrypted form and can only be decrypted by means of an additional key assigned to the electronic device to which the key that is contained in the respective data packet in encrypted form is adapted, with such an additional key being assigned to each of the electronic devices.

3. The method of claim 2, wherein the additional key respectively assigned to an electronic device is encrypted and can only be decrypted by means of an additional key contained in the data packet, which contains the key assigned to the respective electronic device in encrypted form, in non-encrypted form, with each of the data packets containing such an additional key in non-encrypted form.

4. A method according to any one of claims 1-3, wherein the computer program or computer program portion can only be processed on the electronic device if the decrypted release key is present.

5. The method of claim 4, wherein a boot loader program of the electronic device contains program instructions for decrypting the release key by means of the key contained in the data packet and for processing the computer program contained in the data packet only if the decrypted release key matches a release key stored in non-encrypted form in a memory section of the electronic device that can only read by the boot loader program.

6. A method according to any one of claims 1-5, wherein the data packet contains a digital signature of the computer program that can be verified to exclude manipulations of the computer program.

7. A method according to any one of claims 1-6, wherein the computer program is at least in part a memory image of a non-volatile memory and/or of a portion of a non-volatile memory of the electronic device on which the computer program is intended to be processed.

8. A method according to any one of claims 1-7, wherein the electronic device is connected to one or more further electronic devices, and wherein the processing on the electronic device comprises the triggering of a software update, in particular of a firmware, in a memory, and/or the writing of a software, in particular a firmware, into a memory of the further electronic devices.

9. A method according to any one of claims 1-8, wherein the processing on the electronic device comprises:

- Updating of a software, in particular of a firmware, of the electronic device.

10. A method according to any one of claims 1-9, wherein the processing on the electronic device comprises:

- Altering at least one of the keys assigned to the electronic device, in particular a release key, and/or encrypting of an encrypted key assigned to the electronic device.

11. A method comprising:

   - Generating a plurality of data packets, wherein each of the data packets contains a computer program or a computer program portion and a key, wherein the computer program or computer program portion contained in the data packets is identical for all data packets and intended for processing on a plurality of electronic devices, wherein the computer program or computer program portion contained in a data packet can only be processed on an electronic device of the electronic devices, if the data packet contains a key adapted to the electronic device, wherein the key respectively contained in a data packet is adapted to only one of the electronic devices, but to none of the other electronic devices, and wherein to each of the electronic devices, a respective dedicated encrypted release key is assigned, and wherein the key contained in the data packet is adapted to the electronic device if the encrypted release key assigned to the electronic device can be decrypted with the key contained in the data packet; and
   - Outputting the data packets.

12. An electronic apparatus comprising:

   - Means for performing the method according to any one of claims 1-10.

13. Data processing system comprising:

   - Means for carrying out the method of claim 11.

14. A computer program comprising program instructions that cause a processor to execute at least one of the methods according to any one of claims 1-10 and/or 11, when the computer program runs on the processor.

15. Data packet from a plurality of data packets, wherein each data packet contains a computer program or a computer program portion and a key, and wherein the computer program or computer program portion contained in the data packets is identical for all data packets and intended for processing on a plurality of electronic devices, and wherein the key respectively contained in a data packet is adapted to only one of the electronic devices, but not to any other of the electronic devices, wherein to each of the electronic devices, a respective dedicated encrypted release key is assigned, and wherein the key contained in the data packet is adapted to the electronic device if the encrypted release key assigned to the electronic device can be decrypted with the key contained in the data packet; the data packet comprising:

   - the computer program or the computer program portion; and
   - a key that is adapted to only one of the electronic devices.

**Revendications**

1. Procédé, comprenant les étapes suivantes consistant à :

   - traiter un programme informatique ou une partie de programme informatique contenu/contenue dans un paquet de données sur un appareil électronique seulement quand le paquet de données contient une clé adaptée à l'appareil électronique, dans lequel le paquet de données est un paquet de données issu d'une pluralité de paquets de données, dans lequel chacun des paquets de données issus de la pluralité de paquets de données contient respectivement le programme informatique ou la partie de programme informatique et une clé, dans lequel le programme informatique ou la partie de programme informatique contenu ou contenue dans les paquets de données est identique pour tous les paquets de données et se destine au traitement sur une pluralité d'appareils électroniques, dans lequel l'appareil électronique est un appareil électronique issu de la pluralité d'appareils électroniques et dans lequel la clé contenue respectivement dans un paquet de données est adaptée seulement à l'un des appareils électroniques, cependant à aucun autre des appareils électroniques, dans lequel respectivement une clé de libération spécifique cryptée est attribuée à chacun des appareils électroniques, et dans lequel la clé contenue dans le paquet de données est adaptée à l'appareil électronique quand la clé de libération cryptée attribuée à l'appareil électronique peut être décryptée à l'aide de la clé contenue dans le paquet de données.

2. Procédé selon la revendication 1, dans lequel la clé contenue respectivement dans un paquet de données est contenue dans l'état crypté dans le paquet de données respectif et peut être décryptée seulement à l'aide d'une autre clé attribuée à l'appareil électronique, auquel la clé contenue dans l'état crypté dans le paquet de données respectif est adaptée, dans lequel respectivement une autre clé de ce type est attribuée à chacun des appareils électroniques.

**3.** Procédé selon la revendication 2, dans lequel l'autre clé attribuée respectivement à un appareil électronique est cryptée et peut être décryptée seulement à l'aide d'une autre clé contenue à l'état non crypté dans le paquet de données, qui contient à l'état crypté la clé adaptée à l'appareil électronique respectif, dans lequel respectivement une autre clé de ce type est contenue dans l'état non crypté dans chacun des paquets de données.

**4.** Procédé selon l'une quelconque des revendications 1 à 3, dans lequel le programme informatique ou la partie de programme informatique peut être traité sur l'appareil électronique seulement en présence de la clé de libération décryptée.

**5.** Procédé selon la revendication 4, dans lequel un programme chargeur d'amorçage de l'appareil électronique contient des instructions de programme servant à décrypter la clé de libération à l'aide de la clé contenue dans le paquet de données et servant à traiter le programme informatique contenu dans le paquet de données seulement lorsque la clé de libération décryptée coïncide avec une clé de libération mémorisée dans l'état non crypté dans une mémoire pouvant être lue seulement par le programme chargeur d'amorçage, de l'appareil électronique.

**6.** Procédé selon l'une quelconque des revendications 1 à 5, dans lequel le paquet de données contient une signature numérique du programme informatique, qui peut être vérifiée afin d'exclure toute manipulation sur le programme informatique.

**7.** Procédé selon l'une quelconque des revendications 1 à 6, dans lequel le programme informatique est réalisé au moins en partie sous la forme d'une représentation de mémoire d'une mémoire non volatile et/ou d'une zone d'une mémoire non volatile de l'appareil électronique, auquel le programme informatique se destine aux fins du traitement.

**8.** Procédé selon l'une quelconque des revendications 1 à 7, dans lequel l'appareil électronique est raccordé à un ou à plusieurs autres appareils électroniques, et dans lequel le traitement sur l'appareil électronique comprend l'incitation à la mise à jour d'un logiciel, en particulier d'un matériel, dans une mémoire et/ou l'inscription d'un logiciel, en particulier d'un micrologiciel, dans une mémoire de l'autre appareil électronique.

**9.** Procédé selon l'une quelconque des revendications 1 à 8, le traitement sur l'appareil électronique comprenant :

- la mise à jour d'un logiciel, en particulier d'un micrologiciel, de l'appareil électronique.

**10.** Procédé selon l'une quelconque des revendications 1 à 9, le traitement sur l'appareil électronique comprenant :

- la modification au moins d'une clé attribuée à l'appareil électronique, en particulier d'une clé de libération, et/ou le cryptage d'une clé cryptée attribuée à l'appareil électronique.

**11.** Procédé, comprenant :

- la génération d'une pluralité de paquets de données, dans lequel chacun des paquets de données contient respectivement un programme informatique ou une partie de programme informatique et un clé, dans lequel le programme informatique ou la partie de programme informatique contenu/contenue dans les paquets de données est identique pour tous les paquets de données et se destine au traitement sur une pluralité d'appareils électroniques, dans lequel le programme informatique ou la partie de programme informatique contenu/contenue dans un paquet de données peut être traité/traitée sur l'un des appareils électroniques seulement quand le paquet de données contient une clé adaptée à l'appareil électronique, dans lequel la clé contenue respectivement dans un paquet de données est adaptée seulement à l'un des appareils électroniques, toutefois à aucun autre des appareils électroniques, et dans lequel une clé de libération spécifique cryptée est respectivement attribuée à chacun des appareils électroniques, et dans lequel la clé contenue dans le paquet de données est adaptée à l'appareil électronique quand la clé de libération cryptée attribuée à l'appareil électronique peut être décryptée avec la clé contenue dans le paquet de données ; et
- la distribution des paquets de données.

**12.** Appareil électronique, comprenant :

- des moyens servant à exécuter le procédé selon l'une quelconque des revendications 1 à 10.

**13.** Installation de traitement de données, comprenant :

- des moyens servant à exécuter le procédé selon la revendication 11.

**14.** Programme informatique, comprenant des instructions de programme, qui amènent un processeur à exécuter au moins un des procédés selon l'une quelconque des revendications 1 à 10 et/ou 11 quand le programme informatique fonctionne sur le processeur.

**15.** Paquet de données issu d'une pluralité de paquets de données, dans lequel chacun des paquets de données contient respectivement un programme informatique ou une partie de programme informatique et une clé et dans lequel le programme informatique ou la partie de programme informatique contenu/contenue dans les paquets de données est identique pour tous les paquets de données et se destine au traitement sur une pluralité d'appareils électroniques et dans lequel la clé contenue respectivement dans un paquet de données est adaptée seulement à l'un des appareils électroniques, toutefois à aucun autre des appareils électroniques, dans lequel respectivement une clé de libération spécifique cryptée est attribuée à chacun des appareils électroniques, dans lequel la clé contenue dans le paquet de données est adaptée à l'appareil électronique quand la clé de libération cryptée attribuée à l'appareil électronique peut être décryptée avec la clé contenue dans le paquet de données, le paquet de données comprenant :

- le programme informatique ou la partie de programme informatique ; et
- une clé adaptée seulement à l'un des appareils électroniques.

Fig.1a

Fig.1b

Fig.2a

Fig.2b

EP 2 442 251 B1

31

Kartenlesegerät

34

37

33

30

35

38

36

32

Server

Kartenlesegerät

3

Fig.2c

300

```
┌─────────────────────────────┐
│ Schreiben der Firmware in den│─── 301
│ Firmwarespeicherbereich      │
└─────────────────────────────┘
              │
              ▼
┌─────────────────────────────┐
│ Schreiben von SN in Firmware-│─── 302
│ speicherbereich und Erzeugung│
│ eines neuen Eintrags in der  │
│ Produktionsdatenbank mit     │
│ dieser SN                    │
└─────────────────────────────┘
              │
              ▼
┌─────────────────────────────┐
│ Erzeugen von FGS, S1, S2, S3 │─── 303
│ und W1, W2                   │
└─────────────────────────────┘
              │
              ▼
┌─────────────────────────────┐
│ Schreiben von W1 und W2 in   │─── 304
│ Firmwarespeicherbereich      │
└─────────────────────────────┘
              │
              ▼
┌─────────────────────────────┐
│ Speichern von FGS, S1, S2, S3│─── 305
│ in neuem Eintrag in          │
│ Produktionsdatenbank         │
└─────────────────────────────┘
```

Fig.3

400

401

Erhalten des
Aktualisierungsprogramms

Erster Eintrag in
Produktionsdatenbank
-> aktueller Eintrag

402

Erzeugen von W3 aus
aktuellem Eintrag

403

Erzeugen eines neuen
Datenpakets, das das
Aktualisierungsprogramm enthält

404

Individualisieren des
neuen Datenpakets mit
S3 und W3 des
aktuellen Eintrags

405

Senden des neu
erzeugten Datenpakets
an Datenverarbeitungsanlage mit SN des
aktuellen Eintrags

406

Aktueller Eintrag =
letzter Eintrag in
Produktionsdatenbank ?

407

Nein

Nächster Eintrag in
Produktionsdatenbank
-> aktueller Eintrag

408

Ja

Fig.4

500

| Erhalten eines Datenpakets mit einem Aktualisierungsprogramm, W3 und S3 | 501 |

↓

| Entschlüsseln von S1 aus W2 mit Hilfe von S3 | 502 |

↓

| Entschlüsseln von S2 aus W3 mit Hilfe von entschlüsseltem S1 | 503 |

↓

| Entschlüsseln von FGS aus W1 mit Hilfe von entschlüsseltem S2 | 504 |

↓

| Verwenden von FGS, um Firmware-speicher beschreibbar zu machen | 505 |

↓

| Schreiben der aktualisierten Firmware aus Aktualisierungsprogramm in Firmwarespeicher | 506 |

Fig.5

600

601  Empfange Datenpaket

602  Enthält Datenpaket einen an einen dem elektronischen Gerät zugeordneten Schlüssel angepassten Schlüssel ?

Nein

Ja

603  Verarbeite im Datenpaket enthaltenes Computerprogramm

Fig.6

700

701  Erzeuge $K_{sig}$, $K_{ver}$, $K_{enc}$

702  i = 1

703  Erzeuge $K_{mac,i}$

704  Übermittle $K_{ver}$, $K_{enc}$, $K_{mac,i}$ an Gerät i

705  i = i + 1

706  i > I ?

Nein

Ja

Fig.7a

800

```
        ○
        ↓
┌─────────────────────────┐  ╭ 801
│ Erhalte SW, Upd         │
└─────────────────────────┘
        ↓
┌─────────────────────────┐  ╭ 802
│ Füge K_ver in SW ein → SW′ │
└─────────────────────────┘
        ↓
┌─────────────────────────┐  ╭ 803
│ Speichere SW′           │
└─────────────────────────┘
        ↓
┌─────────────────────────┐  ╭ 804
│ Verschlüssele Upd mit   │
│ K_enc → EUpd            │
└─────────────────────────┘
        ↓
┌─────────────────────────┐  ╭ 805
│ Signiere EUpd mit       │
│ K_sig → σ               │
└─────────────────────────┘
        ↓
     ┌────────┐  ╭ 806
     │ i = 1  │
     └────────┘
        ↓
┌─────────────────────────┐  ╭ 807
│ Erzeuge AUpd_i          │
│ ← MAC(K_mac,i ,EUpd‖σ)  │
└─────────────────────────┘
        ↓
┌─────────────────────────┐  ╭ 808
│ Erzeuge PUpd_i aus      │
│ EUpd,σ,AUpd_i           │
└─────────────────────────┘
        ↓
┌─────────────────────────┐  ╭ 809
│ Speichere PUpd_i        │
└─────────────────────────┘
        ↓
     ┌──────────┐  ╭ 810
     │ i = i + 1│
     └──────────┘
        ↓
Nein  ⬡ i > I ?  ╮ 811
        ↓ Ja
        ✕
```

$$i = 1 \qquad 806$$

$$\text{Erzeuge } AUpd_i \leftarrow MAC(K_{mac,i}, EUpd\|\sigma) \qquad 807$$

$$\text{Erzeuge } PUpd_i \text{ aus } EUpd, \sigma, AUpd_i \qquad 808$$

$$\text{Speichere } PUpd_i \qquad 809$$

$$i = i + 1 \qquad 810$$

$$i > I ? \qquad 811$$

Fig.7b

900

**Verarbeitung am Update-Server**

**Verarbeitung am elektronischen Gerät i**

Empfange SW' vom Server — 901

Starte SW' — 902

Verbinde mit Server — 903

Erhalte Chall vom Server — 904

Übermittle Chall an Gerät — 905

Erhalte Chall — 921

Berechne $AChall_i =$ MAC $(K_{mac,i}, Chall\|i)$ — 922

Übermittle $AChall_i, i$ — 923

Empfange $AChall_i, i$ — 906

Übermittle $AChall_i, i$ an Server — 907

$PUpd_i$ vom Server erhalten? — 908

Ja

Berechne VER $(K_{ver}, \sigma, EUpd)$ — 909

Nein — VER $(K_{ver}, \sigma, EUpd)$ = Wahr? — 910

Ja

Übermittle $PUpd_i$ an Gerät — 911

Empfange $PUpd_i =$ $(EUpd, \sigma, AUpd_i)$ — 924

Entschlüssele EUpd mit $K_{enc} \rightarrow Upd$ — 925

Berechne VER $(K_{ver}, \sigma, EUpd)$ — 926

VER $(K_{ver}, \sigma, EUpd)$ = Wahr? — Nein — 927

Ja

Berechne $AUpd_i'$ $\leftarrow$ MAC$(K_{mac,i}, EUpd\|\sigma)$ — 928

$Aupd_i' = AUpd_i$ ? — Nein — 929

Ja

Verarbeite Upd — 930

**Fig.7c**

1000

Erzeuge $K_{auth\_sig,serv}$ , $K_{auth\_ver,serv}$ , $K_{sig}$ , $K_{ver}$ — 1001

$i = 1$ — 1002

Erzeuge $K_{auth\_sig,i}$ , $K_{auth\_ver,i}$ — 1003

Übermittle $K_{auth\_sig,i}$ , $K_{auth\_ver,i}$ , $K_{ver}$ an Gerät — 1004

$i = i + 1$ — 1005

Nein — $i > I$ ? — 1006

Ja

**Fig.8a**

1100

Erhalte Upd — 1101

Signiere Upd mit $K_{sig} \to \sigma$ — 1102

Verkette Upd mit $\sigma \to$ Data — 1103

Speichere Data — 1104

**Fig.8b**

**Fig.8c**

Verarbeitung am
Update-Server

Verarbeitung am
elektronischen Gerät i

(A)

Festlegung $K_{mac}$, $K_{enc}$
für diese Sitzung — 1254

Festlegung $K_{mac}$, $K_{enc}$
für diese Sitzung — 1214

Verschlüssele Data
mit $K_{enc}$ → EData — 1255

Erzeuge AData
← MAC($K_{mac}$,EData) — 1256

Bilde PData aus
EData, AData — 1257

Übermittle PData an Gerät — 1258

Empfange PData — 1215

Erzeuge AData'
← MAC($K_{mac}$,EData) — 1216

AData' = AData? — 1217    Nein

Ja

Entschlüssele EData
mit $K_{enc}$ → Data — 1218

VER ($K_{ver}$,$\sigma$,Upd)
= Wahr? — 1219    Nein

Ja

Verarbeite Upd — 1220

Fig.8d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2151782 A